# EUROPEAN PATENT SPECIFICATION

(11) **EP 3 140 694 B1**
(45) Date of publication and mention of the grant of the patent: **29.07.2020**
(21) Application number: 15789108.6
(22) Date of filing: 07.05.2015
(51) Int. Cl.: G02F 1/15

(54) **CONTROL METHOD FOR TINTABLE WINDOWS**
STEUERUNGSVERFAHREN FÜR TÖNBARE FENSTER
PROCÉDÉ DE COMMANDE DESTINÉ À DES FENÊTRES POUVANT ÊTRE TEINTÉES

(30) Priority: 09.05.2014 US 201461991375 P
(43) Date of publication of application: 15.03.2017
(73) Proprietor: View, Inc., Milpitas, CA 95035 (US)
(72) Inventor: BROWN, Stephen C., San Mateo, California 94402 (US)
(74) Representative: Haseltine Lake Kempner LLP
(86) International application number: PCT/US2015/029675
(87) International publication number: WO 2015/171886

(56) References cited:
- WO-A1-2011/020478
- JP-A- H04 363 495
- US-A1- 2012 239 209
- US-A1- 2013 021 659
- US-A1- 2013 057 937
- US-A1- 2013 263 510
- US-A1- 2013 271 812
- US-A1- 2013 271 812

## Description

### CROSS-REFERENCE TO RELATED APPLICATIONS

This application claims benefit of U.S. Provisional Patent Application No. 61/991,375 titled "CONTROL METHOD FOR TINTABLE WINDOWS," filed May 9, 2014, and is a continuation-in-part of U.S. Patent Application No. 13/772,969 titled "CONTROL METHOD FOR TINTABLE WINDOWS," filed on February 21, 2013.

### FIELD

The embodiments disclosed herein relate generally to window controllers and related predictive control logic for implementing methods of controlling tint and other functions of tintable windows (e.g., electrochromic windows).

### BACKGROUND

Electrochromism is a phenomenon in which a material exhibits a reversible electrochemically-mediated change in an optical property when placed in a different electronic state, typically by being subjected to a voltage change. The optical property is typically one or more of color, transmittance, absorbance, and reflectance. One well known electrochromic material is tungsten oxide (WO₃). Tungsten oxide is a cathodic electrochromic material in which a coloration transition, transparent to blue, occurs by electrochemical reduction.

Electrochromic materials may be incorporated into, for example, windows for home, commercial and other uses. The color, transmittance, absorbance, and/or reflectance of such windows may be changed by inducing a change in the electrochromic material, that is, electrochromic windows are windows that can be darkened or lightened electronically. A small voltage applied to an electrochromic device of the window will cause them to darken; reversing the voltage causes them to lighten. This capability allows control of the amount of light that passes through the windows, and presents an opportunity for electrochromic windows to be used as energy-saving devices.

While electrochromism was discovered in the 1960s, electrochromic devices, and particularly electrochromic windows, still unfortunately suffer various problems and have not begun to realize their full commercial potential despite many recent advances in electrochromic technology, apparatus and related methods of making and/or using electrochromic devices.

US2013/0263510 A1 discloses a method for individualized control of means for closing off at least one window, by determining coordinates of a dazzle cone associated with a window and with a dazzle-sensitive zone, the dazzle cone defined by a vertex positioned at the dazzle-sensitive zone and a directrix curve superimposed on the perimeter of the window, determining the orientation of direct rays of sunlight, and defined by a solar azimuth and a solar elevation, periodically checking whether the orientation falls within a predetermined dazzle cone, the directions of the rays of sunlight being parallel to one of the directions within the dazzle cone and passing through the vertex of the cone, and acting on closing-off means associated with the window for which orientation of rays of sunlight falls within a dazzle cone.

US2013/0271812 A1 discloses a method for limiting energy consumption in facility e.g. room, involving providing instructions for changing tint of a tintable window to determined level of tint. The method involves receiving output signals from several sensors selected from a group consisting an exterior photo-sensor, an interior photo-sensor, an occupancy sensor, an exterior temperature sensor, and a transmissivity sensor which detects light passing through the tintable window from the exterior. A level of tint is determined for tintable window using relationship between received output signals and level of tint. Instructions are provided so as to change tint of the tintable window to level of tint determined previously.

JP H04 363495 A discloses a control method for a window blind including fast and slow sampling of a sunlight detector.

### SUMMARY

Systems, methods, and apparatus for controlling transitions of electrochromic windows and other tintable windows to different tint levels are provided. Generally, embodiments include predictive control logic for implementing methods of controlling tint levels of electrochromic windows or other tintable windows. Typically, the control logic can be used in a building or other architecture having one or more electrochromic windows located between the interior and exterior of the building. The windows may have different configurations. For example, some may be vertical windows in offices or lobbies and others may be skylights in hallways. More particularly, disclosed embodiments include predictive control logic that provides a method of predicting and changing the tint level of one or more tintable windows to directly account for occupant comfort. The method can determined the tint level for a future time, for example, to allow for the predicted transition time of the tintable windows.

The comfort has to do with reducing direct glare and/or total radiant energy directed onto an occupant or the occupant's area of activity. In some cases, the comfort also has to do with allowing sufficient natural lighting into the area. The control logic may also make use of considerations for energy conservation. In a particular implementation, control logic may include one or more modules with at least one of the modules being associated with occupant comfort considerations. One or more of the modules may be concerned with energy consumption as well.

In one aspect, one or more modules of the control logic may determine a tint level that is determined based on occupant comfort from direct sunlight or glare on the occupant or their activity area such as their desk. These modules may determine how far into the room the sunlight penetrates at a particular instant in time. The modules may then determine an appropriate tint level that will transmit the level of light that will be comfortable to the occupant.

In another aspect, one or more modules of the control logic may modify the tint level determined based on occupant comfort to also take into account energy considerations from predicted irradiance under clear sky conditions. In this aspect, the tint level may be darkened to make sure that it performs at least as well as a reference window required in the building as specified by the local municipality codes or standards. The modified tint level will provide at least as much energy savings in cooling as the reference window. In some cases, the tint level may be lightened instead to provide energy savings in heating.

In yet another aspect, one or more modules of the control logic may modify the tint level determined based on occupant comfort and predicted clear sky irradiance to account for actual irradiance. The actual irradiance may be different than the predicted irradiance due to obstructions and reflection of light. A photosensor or other sensor that can measure radiation levels can be used to determine the actual irradiance. These one or more modules determine the lightest tint level that transmits as much or less light into the room than the tint level determined based on occupant comfort and predicted clear sky irradiance.

One embodiment is a method of controlling tint of one or more tintable windows to account for occupant comfort in a room of a building as defined in appended independent claim 1. The tintable window is located between the interior and exterior of the building. The method predicts an appropriate tint level for the tintable window at a future time based on a penetration depth of direct sunlight through the tintable window into the room at the future time and space type in the room. The method provides instructions over a network to transition tint of the tintable window to the tint level.

Another embodiment is a controller for controlling tint of one or more tintable windows to account for occupant comfort in a room of a building. as defined in appended independent claim 3. The tintable window is located between the interior and exterior of the building. The controller comprises a processor configured to determine a tint level for the tintable window based on a penetration depth of direct sunlight through the tintable window into a room and space type in the room. The controller also comprises a pulse width modulator ("PWM") in communication with the processor and with the tintable window over a network. The pulse width modulator is configured to receive the tint level from the processor and send a signal with tint instructions over the network to transition the tint of the tintable window to the determined tint level.

Another part of the disclosure relates to a master controller for controlling tint of a tintable window to account for occupant comfort in a building. The tintable window is located between the interior and exterior of the building. The master controller comprises a computer readable medium and a processor in communication with the computer readable medium and in communication with a local window controller for the tintable window. The computer readable medium has a configuration file with a space type associated with the tintable window. The processor is configured to receive the space type from the computer readable medium, determine a tint level for the tintable window based on a penetration depth of direct sunlight through the tintable window into a room and the space type, and send tint instructions over a network to the local window controller to transition tint of the tintable window to the determined tint level.

Another part of the disclosure relates to a method of controlling tint of one or more tintable windows in a zone of a building to account for occupant comfort. The method calculates a future time based on a current time and based on a predicted transition time of a representative window of the zone. The method also predicts a solar position at the future time and determines a program designated by a user in schedule. The program includes logic for determining a tint level based on one or more independent variables. The method also employs the determined program to determining the tint level based on the predicted solar position at the future time and occupant comfort. The method also communicates instructions to the one or more tintable windows to transition tint to the determined tint level.

Another part of the disclosure relates to a window controller for controlling tint of one or more tintable windows in a zone of a building to account for occupant comfort. The window controller comprises a computer readable medium having predictive control logic, and site data and zone/group data associated with the zone. The window controller further comprises a processor in communication with the computer readable medium and in communication with the tintable window. The processor is configured to calculate a future time based on a current time and a predicted transition time of a representative window of the zone. The processor is also configured to predict a solar position at the future time and determine a program designated by a user in a schedule. The program includes logic for determining a tint level based on one or more independent variables. The processor is also configured to employ the determined program to determine a tint level using the predicted solar position at the future time and based on occupant comfort. The processor is also configured to communicate instructions to the one or more tintable windows in the zone to transition tint to the determined tint level.

Certain aspects include methods of controlling tint of one or more tintable windows to account for occupancy comfort in a room of a building. One method comprises determining an intersection between an occupancy region and a three-dimensional projection of light through the one or more tintable windows; using the intersection to determine a tint level of the one or more tintable windows; and providing instructions to transition tint of the one or more tintable windows to the determined tint level. In some cases, the three-dimensional projection is a projection of the one or more tintable windows into the room from the sun's rays. The direction of the projection may be determined based on the sun's azimuth and altitude in some cases. In some cases, the intersection of the three-dimensional projection of light with a plane of interest is a P-image and the tint level is determined based on an amount of overlap of the P-image with the occupancy region and determining the tint level based on the amount of overlap. In some cases, the tint level is determined based on a percentage of overlap of the P-image with the occupancy region.

Certain aspects include controllers for controlling tint of one or more tintable windows to account for occupancy comfort in a room. In some cases, a controller comprises a processor configured to determine an intersection of a three-dimensional projection of light through the one or more tintable windows with a plane of interest, determine an overlap of the intersection with an occupancy region, use the determined overlap to determine a tint level of the one or more tintable windows, and provide instructions to transition tint of the one or more tintable windows to the determined tint level. In some aspects, the controller further comprises a pulse width modulator in communication with the processor and with the tintable window over a network. The pulse width modulator is configured to receive the determined tint level from the processor and send a signal with tint instructions over the network to transition the tint of the one or more tintable windows to the determined tint level. In some aspects, the intersection of the three-dimensional projection of light with a plane of interest is a P-image, wherein determining the P-image comprises determining an effective aperture of the one or more tintable windows and a geometric center of the effective aperture, determining a P-image offset from the geometric center based on sun azimuth and altitude, and determining the P-image by generating the effective aperture area around the P-image offset at the plane of interest.

Certain aspects include methods of controlling tint of one or more tintable windows to account for occupancy comfort in a room of a building. In some cases, the methods comprises determining whether one or more timers is set at the current time; and if one or more timers is not set, determining a filtered tint level and providing instructions to transition tint of the one or more tintable windows to the filtered tint level. In some cases, determining the filtered tint level comprises determining a short box car value of a short box car based on one or more sensor readings, determining a first long box car value of a first long box car based on one or more sensor readings, setting an illumination value to the short box car value and setting a first timer if the difference between the short box car value and the long box car value is positive and greater than a positive threshold value, and setting the illumination value to the first long box car value if the difference between the short box car value and the long box car value is positive and less than the positive threshold value or negative and more negative than a negative threshold value.

These and other features and embodiments will be described in more detail below with reference to the drawings.

As previously noted, the invention is set forth in the independent claims. All following occurrences of the word "embodiment(s)", if referring to feature combinations different from those defined by the independent claims, refer to examples which were originally filed but which do not represent embodiments of the presently claimed invention; these examples are still shown for illustrative purposes only.

### BRIEF DESCRIPTION OF THE DRAWINGS

**FIGS. 1A-1C** show schematic diagrams of electrochromic devices formed on glass substrates, i.e., electrochromic lites.
**FIGS. 2A** and **2B** show cross-sectional schematic diagrams of the electrochromic lites as described in relation to **FIGS. 1A-1C** integrated into an IGU.
**FIG. 3A** depicts a schematic cross-section of an electrochromic device.
**FIG. 3B** depicts a schematic cross-section of an electrochromic device in a bleached state (or transitioning to a bleached state).
**FIG. 3C** depicts a schematic cross-section of the electrochromic device shown in **FIG. 3B****,** but in a colored state (or transitioning to a colored state).
**FIG. 4** depicts a simplified block diagram of components of a window controller.
**FIG. 5** depicts a schematic diagram of a room including a tintable window and at least one sensor, according to disclosed embodiments.
**FIGS. 6A-6C** include diagrams depicting information collected by each of three Modules A, B, and C of an exemplary control logic, according to disclosed embodiments.
**FIG. 7** is a flowchart showing some steps of predictive control logic for a method of controlling one or more electrochromic windows in a building, according to disclosed embodiments.
**FIG. 8** is a flowchart showing a particular implementation of a portion of the control logic shown in **FIG. 7****.**
**FIG. 9** is a flowchart showing details of Module A according to disclosed embodiments.
**FIG. 10** is an example of an occupancy lookup table according to disclosed embodiments.
**FIG. 11A** depicts a schematic diagram of a room including an electrochromic window with a space type based on a Desk 1 located near the window, according to disclosed embodiments.
**FIG. 11B** depicts a schematic diagram of a room including an electrochromic window with a space type based on a Desk 2 located further away from the window than in **FIG. 11A****,** according to disclosed embodiments.
**FIG. 12** is a flowchart showing details of Module B according to disclosed embodiments.
**FIG. 13** is a flowchart showing details of Module C according to disclosed embodiments.
**FIG. 14** is a diagram showing another implementation of a portion of the control logic shown in **FIG. 7****.**
**FIG. 15** depicts a schematic diagram of an embodiment of a building management system.
**FIG. 16** depicts a block diagram of an embodiment of a building network.
**FIG. 17** is a block diagram of components of a system for controlling functions of one or more tintable windows of a building.
**FIG. 18** is a block diagram depicting predictive control logic for a method of controlling the transitioning of tint levels of one or more tintable windows (e.g., electrochromic windows) in a building.
**FIG. 19** is screenshot of a user interface used to enter schedule information to generate a schedule employed by a window controller, according to embodiments.
**FIG. 20** is an example of an occupancy lookup table and a schematic diagram of a room with a desk and window showing the relationship between acceptance angle, sun angle, and penetration depth, according to embodiments.
**FIGS. 21A****,** **21B****,** and **21C** are schematic drawings of the plan view of a portion of building having three different space types, according to an embodiment.
**FIG. 22** is a block diagram of subsystems that may be present in window controllers used to control the tint level or more tintable windows, according to embodiments.
**FIG. 23** is a graph of sensor illumination readings taken on a day that begins with fog that rapidly burns off to sunshine later in the day.
**FIG. 24A** is a flowchart showing a particular implementation of a portion of the control logic shown in **FIG. 7****.**
**FIG. 24B** is a graph of illumination readings during a day that is cloudy early in the day and then sunny later in the day and the corresponding upper and lower limits.
**FIG. 25A** is a flowchart of a control method that uses box car values to make tinting decisions, according to embodiments.
**FIG. 25B** depicts a room having a desk and the critical angle of the room within which the sun is shining onto an occupant sitting at the desk
**FIG. 26A** depicts two graphs associated with sensor readings during a regular day and the associated determined tint states determined of a control method using box car filters, according to embodiments.
**FIG. 26B** depicts two graphs associated with sensor readings during a cloud day with intermittent spikes and the associated determined tint states determined of a control method using box car filters, according to embodiments.
**FIG. 27A** is a plot of illumination values including sensor readings, short box car values, and long box car values determined during time, t, during a day.
**FIG. 27B** is a plot of the sensor readings of **FIG. 27A** and associated tint level determined by Module B, and tint level determined by Module C during a day.
**FIG. 28A** is a flowchart of a control method that uses box car values to make tinting decisions, according to embodiments.
**FIG. 28B** is a plot of illumination values including sensor readings, short box car values, and long box car values determined during time, t, during a day.
**FIG. 29A** is a flowchart of a control method that uses box car values to make tinting decisions, according to embodiments.
**FIG. 29B** is a plot of illumination values including sensor readings, short box car values, and long box car values determined during time, t, during a day.
**FIG. 30** is a schematic drawing of a side view of a room with a horizontal circular aperture in the form of a skylight to illustrate a three-dimensional projection of light through the room to the floor, according to embodiments.
**FIG. 31** is a schematic drawing of a side view and a top view of the room of **FIG. 30** with projection to a desk in the room, according to an embodiment.
**FIG. 32** is a schematic drawing of a side view and a top view of a room with the single horizontal circular aperture in the form of a skylight, according to an embodiment.
**FIG. 33** is a schematic drawing of a side view of a room with a multi-faceted skylight comprising a first aperture and a second aperture, according to an embodiment.
**FIG. 34** illustrates a schematic drawing of a side view of a room with a multi-faceted skylight comprising a first aperture and a second aperture, and with a desk, according to an embodiment.
**FIG. 35** is a schematic drawing of a side view of a room with a multi-faceted skylight comprising a facet that blocks light, according to an embodiment.
**FIG. 36** is a schematic drawing depicting a method that provides an end tint state that corresponds to the relative portion of the occupancy region covered by the glare area, according to an embodiment.
**FIG.** 37 is a flowchart with details of **step 700** of **FIG. 8** corresponding to an embodiments of Module A that use a three dimensional light projection.
**FIG. 38** is a schematic drawing of a side view of a room with several multi-faceted skylights and a projection, according to embodiments.

### DETAILED DESCRIPTION

In the following description, numerous specific details are set forth in order to provide a thorough understanding of the presented embodiments. The disclosed embodiments may be practiced without some or all of these specific details. In other instances, well-known process operations have not been described in detail to not unnecessarily obscure the disclosed embodiments. While the disclosed embodiments will be described in conjunction with the specific embodiments, it will be understood that it is not intended to limit the disclosed embodiments.

### I. Overview of Electrochromic Devices

It should be understood that while disclosed embodiments focus on electrochromic windows (also referred to as smart windows), the concepts disclosed herein may apply to other types of tintable windows. For example, a tintable window incorporating a liquid crystal device or a suspended particle device, instead of an electrochromic device could be incorporated in any of the disclosed embodiments.

In order to orient the reader to the embodiments of systems, window controllers, and methods disclosed herein, a brief discussion of electrochromic devices is provided. This initial discussion of electrochromic devices is provided for context only, and the subsequently described embodiments of systems, window controllers, and methods are not limited to the specific features and fabrication processes of this initial discussion.

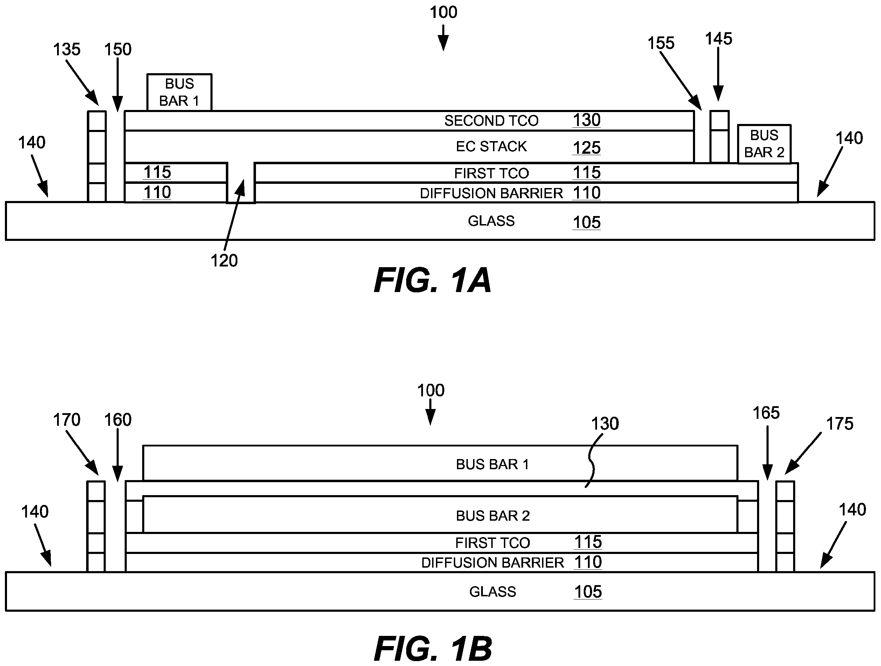

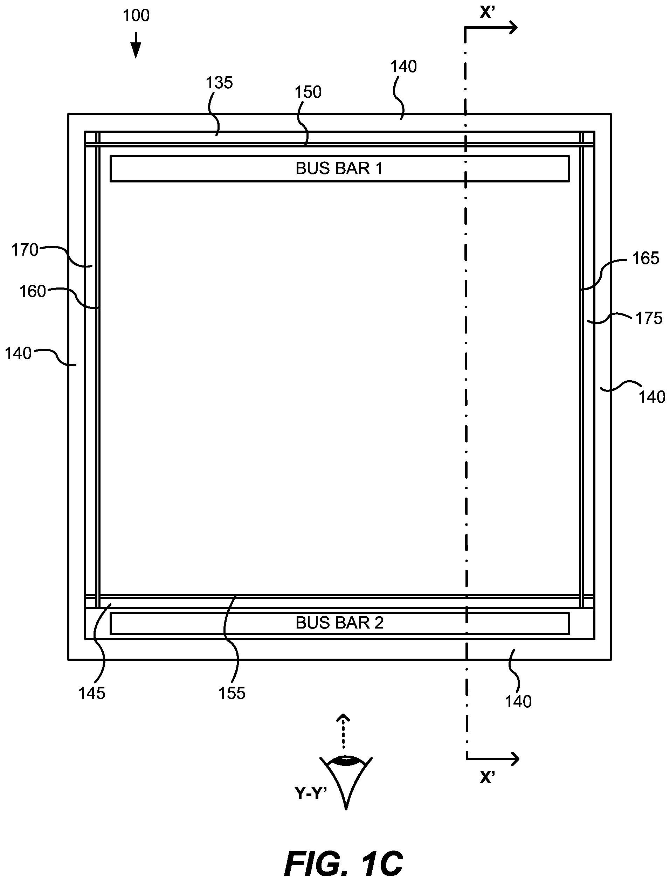

A particular example of an electrochromic lite is described with reference to **FIGS. 1A-1C****,** in order to illustrate embodiments described herein. **FIG. 1A** is a cross-sectional representation (see section cut X'-X' of **FIG. 1C****)** of an electrochromic lite **100,** which is fabricated starting with a glass sheet **105.** **FIG. 1B** shows an end view (see viewing perspective Y-Y' of **FIG. 1C****)** of electrochromic lite **100,** and **FIG. 1C** shows a top-down view of electrochromic lite **100.** **FIG. 1A** shows the electrochromic lite after fabrication on glass sheet **105,** edge deleted to produce area **140,** around the perimeter of the lite. The electrochromic lite has also been laser scribed and bus bars have been attached. The glass lite **105** has a diffusion barrier **110,** and a first transparent conducting oxide layer (TCO) **115,** on the diffusion barrier. In this example, the edge deletion process removes both TCO **115** and diffusion barrier **110,** but in other embodiments only the TCO is removed, leaving the diffusion barrier intact. The TCO **115** is the first of two conductive layers used to form the electrodes of the electrochromic device fabricated on the glass sheet. In this example, the glass sheet includes underlying glass and the diffusion barrier layer. Thus, in this example, the diffusion barrier is formed, and then the first TCO, an electrochromic stack **125,** (e.g., having electrochromic, ion conductor, and counter electrode layers), and a second TCO **130,** are formed. In one embodiment, the electrochromic device (electrochromic stack and second TCO) is fabricated in an integrated deposition system where the glass sheet does not leave the integrated deposition system at any time during fabrication of the stack. In one embodiment, the first TCO layer is also formed using the integrated deposition system where the glass sheet does not leave the integrated deposition system during deposition of the electrochromic stack and the (second) TCO layer. In one embodiment, all of the layers (diffusion barrier, first TCO, electrochromic stack, and second TCO) are deposited in the integrated deposition system where the glass sheet does not leave the integrated deposition system during deposition. In this example, prior to deposition of electrochromic stack **125,** an isolation trench **120,** is cut through TCO **115** and diffusion barrier **110.** Trench **120** is made in contemplation of electrically isolating an area of TCO **115** that will reside under bus bar 1 after fabrication is complete (see **FIG. 1A****).** This is done to avoid charge buildup and coloration of the electrochromic device under the bus bar, which can be undesirable.

After formation of the electrochromic device, edge deletion processes and additional laser scribing are performed. **FIG. 1A** depicts areas **140** where the device has been removed, in this example, from a perimeter region surrounding laser scribe trenches **150, 155, 160,** and **165.** Trenches **150, 160** and **165** pass through the electrochromic stack and also through the first TCO and diffusion barrier. Trench **155** passes through second TCO **130** and the electrochromic stack, but not the first TCO **115.** Laser scribe trenches **150, 155, 160,** and **165** are made to isolate portions of the electrochromic device, **135, 145, 170,** and **175,** which were potentially damaged during edge deletion processes from the operable electrochromic device. In this example, laser scribe trenches **150, 160,** and **165** pass through the first TCO to aid in isolation of the device (laser scribe trench **155** does not pass through the first TCO, otherwise it would cut off bus bar 2's electrical communication with the first TCO and thus the electrochromic stack). The laser or lasers used for the laser scribe processes are typically, but not necessarily, pulse-type lasers, for example, diode-pumped solid state lasers. For example, the laser scribe processes can be performed using a suitable laser from IPG Photonics (of Oxford, Massachusetts), or from Ekspla (of Vilnius, Lithuania). Scribing can also be performed mechanically, for example, by a diamond tipped scribe. One of ordinary skill in the art would appreciate that the laser scribing processes can be performed at different depths and/or performed in a single process whereby the laser cutting depth is varied, or not, during a continuous path around the perimeter of the electrochromic device. In one embodiment, the edge deletion is performed to the depth of the first TCO.

After laser scribing is complete, bus bars are attached. Non-penetrating bus bar 1 is applied to the second TCO. Non-penetrating bus bar 2 is applied to an area where the device was not deposited (e.g., from a mask protecting the first TCO from device deposition), in contact with the first TCO or, in this example, where an edge deletion process (e.g., laser ablation using an apparatus having a XY or XYZ galvanometer) was used to remove material down to the first TCO. In this example, both bus bar 1 and bus bar 2 are non-penetrating bus bars. A penetrating bus bar is one that is typically pressed into and through the electrochromic stack to make contact with the TCO at the bottom of the stack. A non-penetrating bus bar is one that does not penetrate into the electrochromic stack layers, but rather makes electrical and physical contact on the surface of a conductive layer, for example, a TCO.

The TCO layers can be electrically connected using a non-traditional bus bar, for example, a bus bar fabricated with screen and lithography patterning methods. In one embodiment, electrical communication is established with the device's transparent conducting layers via silk screening (or using another patterning method) a conductive ink followed by heat curing or sintering the ink. Advantages to using the above described device configuration include simpler manufacturing, for example, and less laser scribing than conventional techniques which use penetrating bus bars.

After the bus bars are connected, the device is integrated into an insulated glass unit (IGU), which includes, for example, wiring the bus bars and the like. In some embodiments, one or both of the bus bars are inside the finished IGU, however in one embodiment one bus bar is outside the seal of the IGU and one bus bar is inside the IGU. In the former embodiment, area **140** is used to make the seal with one face of the spacer used to form the IGU. Thus, the wires or other connection to the bus bars runs between the spacer and the glass. As many spacers are made of metal, e.g., stainless steel, which is conductive, it is desirable to take steps to avoid short circuiting due to electrical communication between the bus bar and connector thereto and the metal spacer.

As described above, after the bus bars are connected, the electrochromic lite is integrated into an IGU, which includes, for example, wiring for the bus bars and the like. In the embodiments described herein, both of the bus bars are inside the primary seal of the finished IGU.

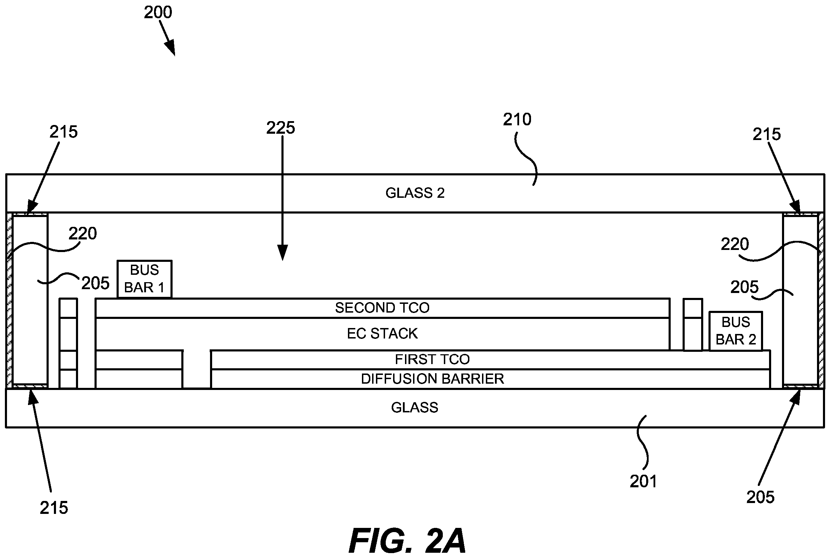

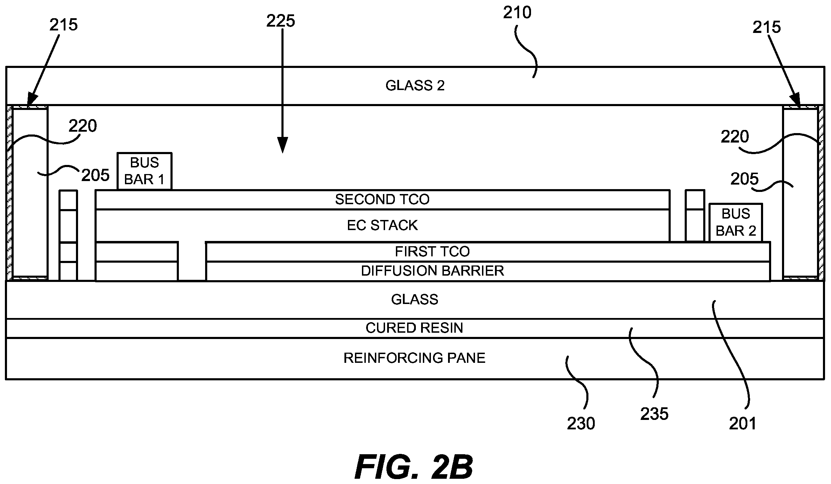

**FIG. 2A** shows a cross-sectional schematic diagram of the electrochromic window as described in relation to **FIGS. 1A-1C** integrated into an IGU **200.** A spacer **205** is used to separate the electrochromic lite from a second lite **210.** Second lite **210** in IGU **200** is a non-electrochromic lite, however, the embodiments disclosed herein are not so limited. For example, lite **210** can have an electrochromic device thereon and/or one or more coatings such as low-E coatings and the like. Lite **201** can also be laminated glass, such as depicted in **FIG. 2B** (lite **201** is laminated to reinforcing pane **230,** via resin **235).** Between spacer **205** and the first TCO layer of the electrochromic lite is a primary seal material **215.** This primary seal material is also between spacer **205** and second glass lite **210.** Around the perimeter of spacer **205** is a secondary seal **220.** Bus bar wiring/leads traverse the seals for connection to a controller. Secondary seal **220** may be much thicker that depicted. These seals aid in keeping moisture out of an interior space **225,** of the IGU. They also serve to prevent argon or other gas in the interior of the IGU from escaping.

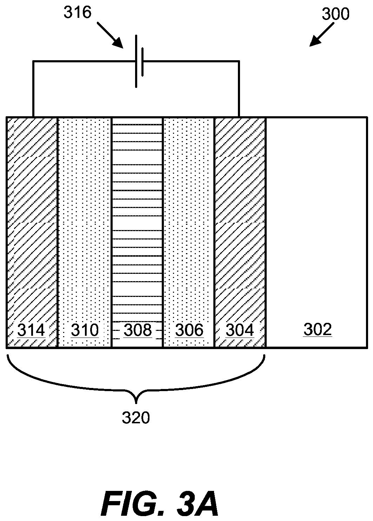

**FIG. 3A** schematically depicts an electrochromic device **300,** in cross-section. Electrochromic device **300** includes a substrate **302,** a first conductive layer (CL) **304,** an electrochromic layer (EC) **306,** an ion conducting layer (IC) **308,** a counter electrode layer (CE) **310,** and a second conductive layer (CL) **314.** Layers **304, 306, 308, 310,** and **314** are collectively referred to as an electrochromic stack **320.** A voltage source **316** operable to apply an electric potential across electrochromic stack **320** effects the transition of the electrochromic device from, for example, a bleached state to a colored state (depicted). The order of layers can be reversed with respect to the substrate.

Electrochromic devices having distinct layers as described can be fabricated as all solid state devices and/or all inorganic devices having low defectivity. Such devices and methods of fabricating them are described in more detail in U.S. Patent Application Serial Number 12/645,111, entitled "Fabrication of Low-Defectivity Electrochromic Devices," filed on December 22, 2009, and naming Mark Kozlowski et al. as inventors, and in U.S. Patent Application Serial Number 12/645,159, entitled, "Electrochromic Devices," filed on December 22, 2009 and naming Zhongchun Wang et al. as inventors, both of which are hereby incorporated by reference in their entireties. It should be understood, however, that any one or more of the layers in the stack may contain some amount of organic material. The same can be said for liquids that may be present in one or more layers in small amounts. It should also be understood that solid state material may be deposited or otherwise formed by processes employing liquid components such as certain processes employing sol-gels or chemical vapor deposition.

Additionally, it should be understood that the reference to a transition between a bleached state and colored state is non-limiting and suggests only one example, among many, of an electrochromic transition that may be implemented. Unless otherwise specified herein (including the foregoing discussion), whenever reference is made to a bleached-colored transition, the corresponding device or process encompasses other optical state transitions such as non-reflective-reflective, transparent-opaque, etc. Further, the term "bleached" refers to an optically neutral state, for example, uncolored, transparent, or translucent. Still further, unless specified otherwise herein, the "color" of an electrochromic transition is not limited to any particular wavelength or range of wavelengths. As understood by those of skill in the art, the choice of appropriate electrochromic and counter electrode materials governs the relevant optical transition.

In embodiments described herein, the electrochromic device reversibly cycles between a bleached state and a colored state. In some cases, when the device is in a bleached state, a potential is applied to the electrochromic stack **320** such that available ions in the stack reside primarily in the counter electrode **310.** When the potential on the electrochromic stack is reversed, the ions are transported across the ion conducting layer **308** to the electrochromic material **306** and cause the material to transition to the colored state. In a similar way, the electrochromic device of embodiments described herein can be reversibly cycled between different tint levels (e.g., bleached state, darkest colored state, and intermediate levels between the bleached state and the darkest colored state).

Referring again to **FIG. 3A****,** voltage source **316** may be configured to operate in conjunction with radiant and other environmental sensors. As described herein, voltage source **316** interfaces with a device controller (not shown in this figure). Additionally, voltage source **316** may interface with an energy management system that controls the electrochromic device according to various criteria such as the time of year, time of day, and measured environmental conditions. Such an energy management system, in conjunction with large area electrochromic devices (e.g., an electrochromic window), can dramatically lower the energy consumption of a building.

Any material having suitable optical, electrical, thermal, and mechanical properties may be used as substrate **302.** Such substrates include, for example, glass, plastic, and mirror materials. Suitable glasses include either clear or tinted soda lime glass, including soda lime float glass. The glass may be tempered or untempered.

In many cases, the substrate is a glass pane sized for residential window applications. The size of such glass pane can vary widely depending on the specific needs of the residence. In other cases, the substrate is architectural glass. Architectural glass is typically used in commercial buildings, but may also be used in residential buildings, and typically, though not necessarily, separates an indoor environment from an outdoor environment. In certain embodiments, architectural glass is at least 20 inches by 20 inches, and can be much larger, for example, as large as about 80 inches by 120 inches. Architectural glass is typically at least about 2 mm thick, typically between about 3 mm and about 6 mm thick. Of course, electrochromic devices are scalable to substrates smaller or larger than architectural glass. Further, the electrochromic device may be provided on a mirror of any size and shape.

On top of substrate **302** is conductive layer **304.** In certain embodiments, one or both of the conductive layers **304** and **314** is inorganic and/or solid. Conductive layers **304** and **314** may be made from a number of different materials, including conductive oxides, thin metallic coatings, conductive metal nitrides, and composite conductors. Typically, conductive layers **304** and **314** are transparent at least in the range of wavelengths where electrochromism is exhibited by the electrochromic layer. Transparent conductive oxides include metal oxides and metal oxides doped with one or more metals. Examples of such metal oxides and doped metal oxides include indium oxide, indium tin oxide, doped indium oxide, tin oxide, doped tin oxide, zinc oxide, aluminum zinc oxide, doped zinc oxide, ruthenium oxide, doped ruthenium oxide and the like. Since oxides are often used for these layers, they are sometimes referred to as "transparent conductive oxide" (TCO) layers. Thin metallic coatings that are substantially transparent may also be used, as well as combinations of TCO's and metallic coatings.

The function of the conductive layers is to spread an electric potential provided by voltage source **316** over surfaces of the electrochromic stack **320** to interior regions of the stack, with relatively little ohmic potential drop. The electric potential is transferred to the conductive layers though electrical connections to the conductive layers. In some embodiments, bus bars, one in contact with conductive layer **304** and one in contact with conductive layer **314,** provide the electric connection between the voltage source **316** and the conductive layers **304** and **314.** The conductive layers **304** and **314** may also be connected to the voltage source **316** with other conventional means.

Overlaying conductive layer **304** is electrochromic layer **306.** In some embodiments, electrochromic layer **306** is inorganic and/or solid. The electrochromic layer may contain any one or more of a number of different electrochromic materials, including metal oxides. Such metal oxides include tungsten oxide (WO3), molybdenum oxide (MoO3), niobium oxide (Nb2O5), titanium oxide (TiO2), copper oxide (CuO), iridium oxide (Ir2O3), chromium oxide (Cr2O3), manganese oxide (Mn2O3), vanadium oxide (V2O5), nickel oxide (Ni2O3), cobalt oxide (Co2O3) and the like. During operation, electrochromic layer **306** transfers ions to and receives ions from counter electrode layer **310** to cause optical transitions.

Generally, the colorization (or change in any optical property - e.g., absorbance, reflectance, and transmittance) of the electrochromic material is caused by reversible ion insertion into the material (e.g., intercalation) and a corresponding injection of a charge balancing electron. Typically some fraction of the ions responsible for the optical transition is irreversibly bound up in the electrochromic material. Some or all of the irreversibly bound ions are used to compensate "blind charge" in the material. In most electrochromic materials, suitable ions include lithium ions (Li+) and hydrogen ions (H+) (that is, protons). In some cases, however, other ions will be suitable. In various embodiments, lithium ions are used to produce the electrochromic phenomena. Intercalation of lithium ions into tungsten oxide (WO3-y (0 < y ≤ ∼0.3)) causes the tungsten oxide to change from transparent (bleached state) to blue (colored state).

Referring again to **FIG. 3A****,** in electrochromic stack **320,** ion conducting layer **308** is sandwiched between electrochromic layer **306** and counter electrode layer **310.** In some embodiments, counter electrode layer **310** is inorganic and/or solid. The counter electrode layer may comprise one or more of a number of different materials that serve as a reservoir of ions when the electrochromic device is in the bleached state. During an electrochromic transition initiated by, for example, application of an appropriate electric potential, the counter electrode layer transfers some or all of the ions it holds to the electrochromic layer, changing the electrochromic layer to the colored state. Concurrently, in the case of NiWO, the counter electrode layer colors with the loss of ions.

In some embodiments, suitable materials for the counter electrode complementary to WO3 include nickel oxide (NiO), nickel tungsten oxide (NiWO), nickel vanadium oxide, nickel chromium oxide, nickel aluminum oxide, nickel manganese oxide, nickel magnesium oxide, chromium oxide (Cr2O3), manganese oxide (MnO2), and Prussian blue.

When charge is removed from a counter electrode **310** made of nickel tungsten oxide (that is, ions are transported from counter electrode **310** to electrochromic layer **306),** the counter electrode layer will transition from a transparent state to a colored state.

In the depicted electrochromic device, between electrochromic layer **306** and counter electrode layer **310,** there is the ion conducting layer **308.** Ion conducting layer **308** serves as a medium through which ions are transported (in the manner of an electrolyte) when the electrochromic device transitions between the bleached state and the colored state. Preferably, ion conducting layer **308** is highly conductive to the relevant ions for the electrochromic and the counter electrode layers, but has sufficiently low electron conductivity that negligible electron transfer takes place during normal operation. A thin ion conducting layer with high ionic conductivity permits fast ion conduction and hence fast switching for high performance electrochromic devices. In certain embodiments, the ion conducting layer **308** is inorganic and/or solid.

Examples of suitable ion conducting layers (for electrochromic devices having a distinct IC layer) include silicates, silicon oxides, tungsten oxides, tantalum oxides, niobium oxides, and borates. These materials may be doped with different dopants, including lithium. Lithium doped silicon oxides include lithium silicon-aluminum-oxide. In some embodiments, the ion conducting layer comprises a silicate-based structure. In some embodiments, a silicon-aluminum-oxide (SiAlO) is used for the ion conducting layer **308.**

Electrochromic device **300** may include one or more additional layers (not shown), such as one or more passive layers. Passive layers used to improve certain optical properties may be included in electrochromic device **300.** Passive layers for providing moisture or scratch resistance may also be included in electrochromic device **300.** For example, the conductive layers may be treated with anti-reflective or protective oxide or nitride layers. Other passive layers may serve to hermetically seal electrochromic device **300.**

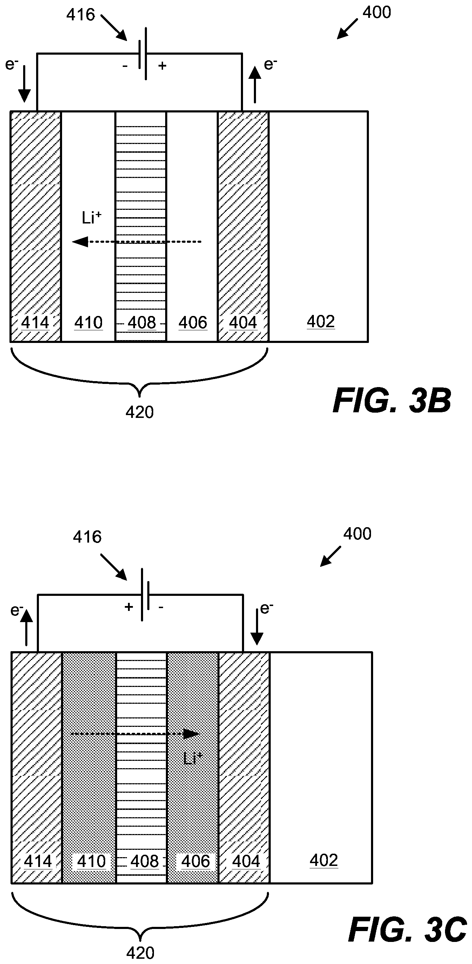

**FIG. 3B** is a schematic cross-section of an electrochromic device in a bleached state (or transitioning to a bleached state). In accordance with specific embodiments, an electrochromic device **400** includes a tungsten oxide electrochromic layer (EC) **406** and a nickel-tungsten oxide counter electrode layer (CE) **410.** Electrochromic device **400** also includes a substrate **402,** a conductive layer (CL) **404,** an ion conducting layer (IC) **408,** and conductive layer (CL) **414.**

A power source **416** is configured to apply a potential and/or current to an electrochromic stack **420** through suitable connections (e.g., bus bars) to the conductive layers **404** and **414.** In some embodiments, the voltage source is configured to apply a potential of a few volts in order to drive a transition of the device from one optical state to another. The polarity of the potential as shown in **FIG. 3A** is such that the ions (lithium ions in this example) primarily reside (as indicated by the dashed arrow) in nickel-tungsten oxide counter electrode layer **410**

**FIG. 3C** is a schematic cross-section of electrochromic device **400** shown in **FIG. 3B** but in a colored state (or transitioning to a colored state). In **FIG. 3C****,** the polarity of voltage source **416** is reversed, so that the electrochromic layer is made more negative to accept additional lithium ions, and thereby transition to the colored state. As indicated by the dashed arrow, lithium ions are transported across ion conducting layer **408** to tungsten oxide electrochromic layer **406.** Tungsten oxide electrochromic layer **406** is shown in the colored state. Nickel-tungsten oxide counter electrode **410** is also shown in the colored state. As explained, nickel-tungsten oxide becomes progressively more opaque as it gives up (deintercalates) lithium ions. In this example, there is a synergistic effect where the transition to colored states for both layers **406** and **410** are additive toward reducing the amount of light transmitted through the stack and substrate.

As described above, an electrochromic device may include an electrochromic (EC) electrode layer and a counter electrode (CE) layer separated by an ionically conductive (IC) layer that is highly conductive to ions and highly resistive to electrons. As conventionally understood, the ionically conductive layer therefore prevents shorting between the electrochromic layer and the counter electrode layer. The ionically conductive layer allows the electrochromic and counter electrodes to hold a charge and thereby maintain their bleached or colored states. In electrochromic devices having distinct layers, the components form a stack which includes the ion conducting layer sandwiched between the electrochromic electrode layer and the counter electrode layer. The boundaries between these three stack components are defined by abrupt changes in composition and/or microstructure. Thus, the devices have three distinct layers with two abrupt interfaces.

In accordance with certain embodiments, the counter electrode and electrochromic electrodes are formed immediately adjacent one another, sometimes in direct contact, without separately depositing an ionically conducting layer. In some embodiments, electrochromic devices having an interfacial region rather than a distinct IC layer are employed. Such devices, and methods of fabricating them, are described in U.S. Patent No. 8,300,298 and U.S. Patent Application Serial Number12/772, 075 filed on April 30, 2010, and U.S. Patent Applications Serial Numbers 12/814,277 and 12/814,279, filed on June 11, 2010 - each of the three patent applications and patent is entitled "Electrochromic Devices," each names Zhongchun Wang et al. as inventors, and each is incorporated by reference herein in its entirety.

### II. Window Controllers

A window controller is used to control the tint level of the electrochromic device of an electrochromic window. In some embodiments, the window controller is able to transition the electrochromic window between two tint states (levels), a bleached state and a colored state. In other embodiments, the controller can additionally transition the electrochromic window (e.g., having a single electrochromic device) to intermediate tint levels. In some disclosed embodiments, the window controller is able to transition the electrochromic window to four or more tint levels. Certain electrochromic windows allow intermediate tint levels by using two (or more) electrochromic lites in a single IGU, where each lite is a two-state lite. This is described in reference to **FIGS. 2A** and **2B** in this section.

As noted above with respect to **FIGS. 2A** and **2B****,** in some embodiments, an electrochromic window can include an electrochromic device **400** on one lite of an IGU **200** and another electrochromic device **400** on the other lite of the IGU **200.** If the window controller is able to transition each electrochromic device between two states, a bleached state and a colored state, the electrochromic window is able to attain four different states (tint levels), a colored state with both electrochromic devices being colored, a first intermediate state with one electrochromic device being colored, a second intermediate state with the other electrochromic device being colored, and a bleached state with both electrochromic devices being bleached. Embodiments of multi-pane electrochromic windows are further described in U.S. Patent Number 8,270,059, naming Robin Friedman et al. as inventors, titled "MULTI-PANE ELECTROCHROMIC WINDOWS," which is hereby incorporated by reference in its entirety.

In some embodiments, the window controller is able to transition an electrochromic window having an electrochromic device capable of transitioning between two or more tint levels. For example, a window controller may be able to transition the electrochromic window to a bleached state, one or more intermediate levels, and a colored state. In some other embodiments, the window controller is able to transition an electrochromic window incorporating an electrochromic device between any number of tint levels between the bleached state and the colored state. Embodiments of methods and controllers for transitioning an electrochromic window to an intermediate tint level or levels are further described in U.S. Patent Number 8,254,013, naming Disha Mehtani et al. as inventors, titled "CONTROLLING TRANSITIONS IN OPTICALLY SWITCHABLE DEVICES," which is hereby incorporated by reference in its entirety.

In some embodiments, a window controller can power one or more electrochromic devices in an electrochromic window. Typically, this function of the window controller is augmented with one or more other functions described in more detail below. Window controllers described herein are not limited to those that have the function of powering an electrochromic device to which it is associated for the purposes of control. That is, the power source for the electrochromic window may be separate from the window controller, where the controller has its own power source and directs application of power from the window power source to the window. However, it is convenient to include a power source with the window controller and to configure the controller to power the window directly, because it obviates the need for separate wiring for powering the electrochromic window.

Further, the window controllers described in this section are described as standalone controllers which may be configured to control the functions of a single window or a plurality of electrochromic windows, without integration of the window controller into a building control network or a building management system (BMS). Window controllers, however, may be integrated into a building control network or a BMS, as described further in the Building Management System section of this disclosure.

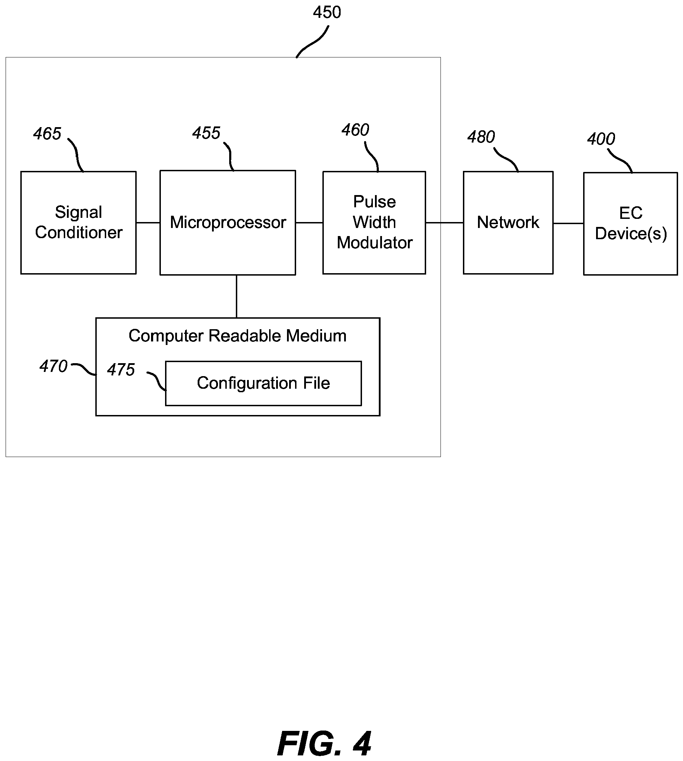

**FIG. 4** depicts a block diagram of some components of a window controller **450** and other components of a window controller system of disclosed embodiments. **FIG. 4** is a simplified block diagram of a window controller, and more detail regarding window controllers can be found in U.S. Patent Application Serial numbers 13/449,248 and 13/449,251, both naming Stephen Brown as inventor, both titled "CONTROLLER FOR OPTICALLY-SWITCHABLE WINDOWS," and both filed on April 17, 2012, and in U.S. Patent Serial Number 13/449,235, titled "CONTROLLING TRANSITIONS IN OPTICALLY SWITCHABLE DEVICES," naming Stephen Brown et al. as inventors and filed on April 17, 2012, all of which are hereby incorporated by reference in their entireties.

In **FIG. 4****,** the illustrated components of the window controller **450** include a window controller **450** having a microprocessor **455** or other processor, a pulse width modulator **460,** a signal conditioning module **465,** and a computer readable medium (e.g., memory) having a configuration file **475.** Window controller **450** is in electronic communication with one or more electrochromic devices **400** in an electrochromic window through network **480** (wired or wireless) to send instructions to the one or more electrochromic devices **400.** In some embodiments, the window controller **450** may be a local window controller in communication through a network (wired or wireless) to a master window controller.

In disclosed embodiments, a building may have at least one room having an electrochromic window between the exterior and interior of a building. One or more sensors may be located to the exterior of the building and/or inside the room. In embodiments, the output from the one or more sensors may be input to the signal conditioning module **465** of the window controller **450.** In some cases, the output from the one or more sensors may be input to a BMS, as described further in the Building Management Systems section. Although the sensors of depicted embodiments are shown as located on the outside vertical wall of the building, this is for the sake of simplicity, and the sensors may be in other locations, such as inside the room or on other surfaces to the exterior, as well. In some cases, two or more sensors may be used to measure the same input, which can provide redundancy in case one sensor fails or has an otherwise erroneous reading.

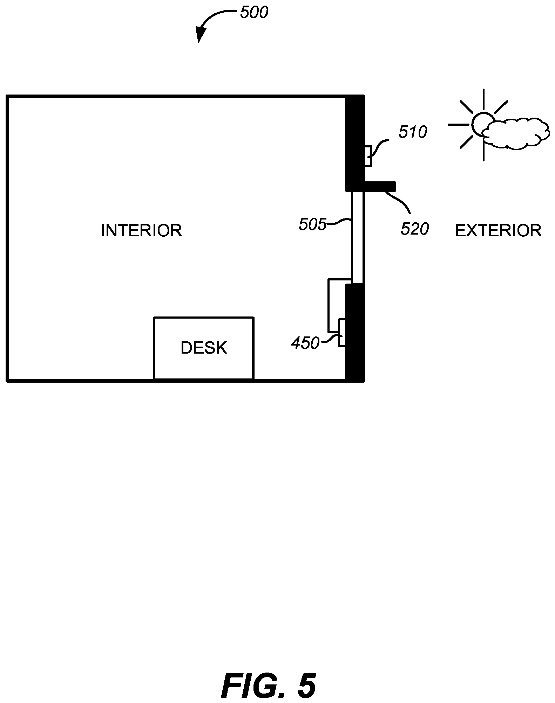

**FIG. 5** depicts a schematic (side view) diagram of a room **500** having an electrochromic window **505** with at least one electrochromic device. The electrochromic window **505** is located between the exterior and the interior of a building, which includes the room **500.** The room **500** also includes a window controller **450** connected to and configured to control the tint level of the electrochromic window **505.** An exterior sensor **510** is located on a vertical surface in the exterior of the building. In other embodiments, an interior sensor may also be used to measure the ambient light in room **500.** In yet other embodiments, an occupant sensor may also be used to determine when an occupant is in the room **500.**

Exterior sensor **510** is a device, such as a photosensor, that is able to detect radiant light incident upon the device flowing from a light source such as the sun or from light reflected to the sensor from a surface, particles in the atmosphere, clouds, etc. The exterior sensor **510** may generate a signal in the form of electrical current that results from the photoelectric effect and the signal may be a function of the light incident on the sensor **510.** In some cases, the device may detect radiant light in terms of irradiance in units of watts/m² or other similar units. In other cases, the device may detect light in the visible range of wavelengths in units of foot candles or similar units. In many cases, there is a linear relationship between these values of irradiance and visible light.

Irradiance values from sunlight can be predicted based on the time of day and time of year as the angle at which sunlight strikes the earth changes. Exterior sensor **510** can detect radiant light in real-time, which accounts for reflected and obstructed light due to buildings, changes in weather (e.g., clouds), etc. For example, on cloudy days, sunlight would be blocked by the clouds and the radiant light detected by an exterior sensor **510** would be lower than on cloudless days.

In some embodiments, there may be one or more exterior sensors **510** associated with a single electrochromic window **505.** Output from the one or more exterior sensors **510** could be compared to one another to determine, for example, if one of exterior sensors **510** is shaded by an object, such as by a bird that landed on exterior sensor **510.** In some cases, it may be desirable to use relatively few sensors in a building because some sensors can be unreliable and/or expensive. In certain implementations, a single sensor or a few sensors may be employed to determine the current level of radiant light from the sun impinging on the building or perhaps one side of the building. A cloud may pass in front of the sun or a construction vehicle may park in front of the setting sun. These will result in deviations from the amount of radiant light from the sun calculated to normally impinge on the building.

Exterior sensor **510** may be a type of photosensor. For example, exterior sensor **510** may be a charge coupled device (CCD), photodiode, photoresistor, or photovoltaic cell. One of ordinary skill in the art would appreciate that future developments in photosensor and other sensor technology would also work, as they measure light intensity and provide an electrical output representative of the light level.

In some embodiments, output from exterior sensor **510** may be input to the signal conditioning module **465.** The input may be in the form of a voltage signal to signal conditioning module **465.** Signal conditioning module **465** passes an output signal to the window controller **450.** Window controller **450** determines a tint level of the electrochromic window **505,** based on various information from the configuration file **475,** output from the signal conditioning module **465,** override values. Window controller **450** and then instructs the PWM **460,** to apply a voltage and/or current to electrochromic window **505** to transition to the desired tint level.

In disclosed embodiments, window controller **450** can instruct the PWM **460,** to apply a voltage and/or current to electrochromic window **505** to transition it to any one of four or more different tint levels. In disclosed embodiments, electrochromic window **505** can be transitioned to at least eight different tint levels described as: 0 (lightest), 5, 10, 15, 20, 25, 30, and 35 (darkest). The tint levels may linearly correspond to visual transmittance values and solar heat gain coefficient (SHGC) values of light transmitted through the electrochromic window 505. For example, using the above eight tint levels, the lightest tint level of 0 may correspond to an SHGC value of 0.80, the tint level of 5 may correspond to an SHGC value of 0.70, the tint level of 10 may correspond to an SHGC value of 0.60, the tint level of 15 may correspond to an SHGC value of 0.50, the tint level of 20 may correspond to an SHGC value of 0.40, the tint level of 25 may correspond to an SHGC value of 0.30, the tint level of 30 may correspond to an SHGC value of 0.20, and the tint level of 35 (darkest) may correspond to an SHGC value of 0.10.

Window controller **450** or a master controller in communication with the window controller **450** may employ any one or more predictive control logic components to determine a desired tint level based on signals from the exterior sensor **510** and/or other input. The window controller **450** can instruct the PWM **460** to apply a voltage and/or current to electrochromic window **505** to transition it to the desired tint level.

### III. An example of Predictive Control Logic

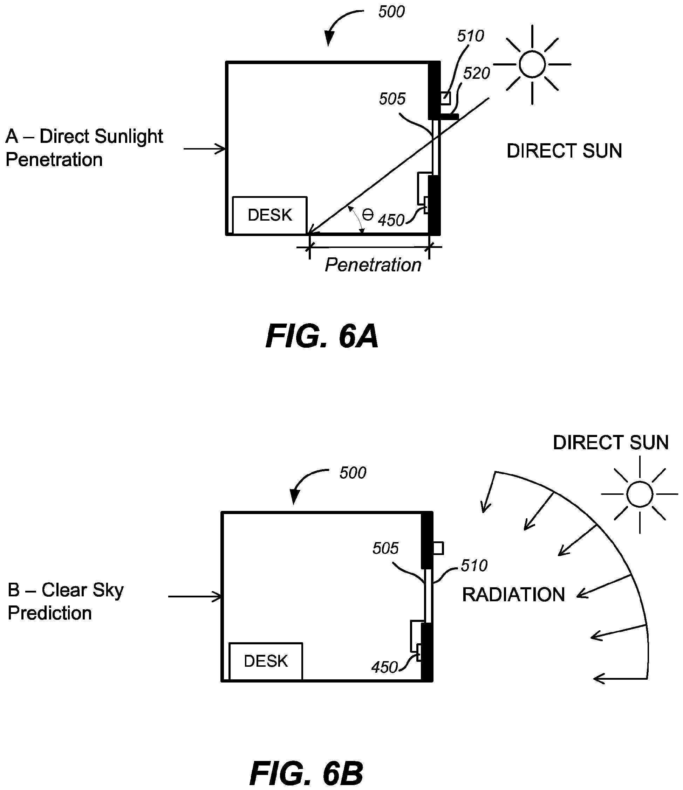

In disclosed embodiments, predictive control logic is used to implement methods of determining and controlling a desired tint level for the electrochromic window **505** or other tintable window that accounts for occupant comfort and/or energy conservation considerations. This predictive control logic may employ one or more logic modules. **FIGS. 6A-6C** include diagrams depicting some information collected by each of three logic modules A, B, and C of an exemplary control logic of disclosed embodiments.

**FIG. 6A** shows the penetration depth of direct sunlight into a room **500** through an electrochromic window **505** between the exterior and the interior of a building, which includes the room **500.** Penetration depth is a measure of how far direct sunlight will penetrate into the room **500.** As shown, penetration depth is measured in a horizontal direction away from the sill (bottom) of window **505.** Generally, the window defines an aperture that provides an acceptance angle for direct sunlight. The penetration depth is calculated based upon the geometry of the window (e.g., window dimensions), its position and orientation in the room, any fins or other exterior shading outside of the window, and the position of the sun (e.g. angle of direct sunlight for a particular time of day and date). Exterior shading to an electrochromic window **505** may be due to any type of structure that can shade the window such as an overhang, a fin, etc. In **FIG. 6A****,** there is an overhang **520** above the electrochromic window **505** that blocks a portion of the direct sunlight entering the room **500** thus shortening the penetration depth. The room **500** also includes a local window controller **450** connected to and configured to control the tint level of the electrochromic window **505.** An exterior sensor **510** is located on a vertical surface in the exterior of the building.

Module A can be used to determine a tint level that considers occupant comfort from direct sunlight through the electrochromic window **505** onto an occupant or their activity area. The tint level is determined based on a calculated penetration depth of direct sunlight into the room and the space type (e.g., desk near window, lobby, etc.) in the room at a particular instant in time. In some cases, the tint level may also be based on providing sufficient natural lighting into the room. In many cases, the penetration depth is the value calculated at a time in the future to account for glass transition time (the time required for the window to tint, e.g. to 80%, 90% or 100% of the desired tint level). The issue addressed in Module A is that direct sunlight may penetrate so deeply into the room **500** as to show directly on an occupant working at a desk or other work surface in a room. Publicly available programs can provide calculation of the sun's position and allow for easy calculation of penetration depth.

**FIG. 6A** also shows a desk in the room **500** as an example of a space type associated with an activity area (i.e. desk) and location of the activity area (i.e. location of desk). Each space type is associated with different tint levels for occupant comfort. For example, if the activity is a critical activity such as work in an office being done at a desk or computer, and the desk is located near the window, the desired tint level may be higher than if the desk were further away from the window. As another example, if the activity is non-critical, such as the activity in a lobby, the desired tint level may be lower than for the same space having a desk.

**FIG. 6B** shows direct sunlight and radiation under clear sky conditions entering the room **500** through the electrochromic window **505.** The radiation may be from sunlight scattered by molecules and particles in the atmosphere. Module B determines a tint level based on predicted values of irradiance under clear sky conditions flowing through the electrochromic window **505** under consideration. Various software, such as open source RADIANCE program, can be used to predict clear sky irradiance at a certain latitude, longitude, time of year, and time of day, and for a given window orientation.

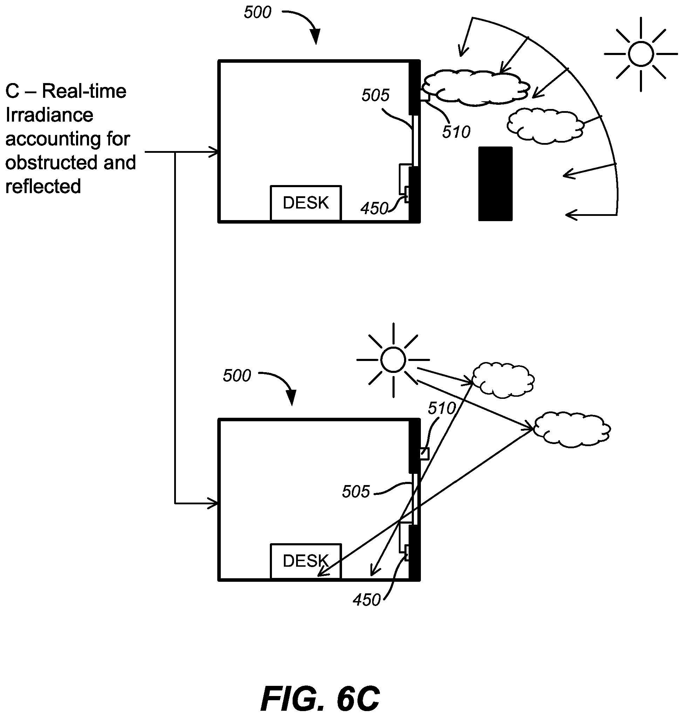

**FIG. 6C** shows radiant light from the sky that is measured in real-time by an exterior sensor **510** to account for light that may be obstructed by or reflected from objects such as buildings or weather conditions (e.g., clouds) that are not accounted for in the clear sky predictions. The tint level determined by Module C is based on the real-time irradiance based on measurements taken by the exterior sensor **510.**

The predictive control logic may implement one or more of the logic Modules A, B and C separately for each electrochromic window **505** in the building. Each electrochromic window **505** can have a unique set of dimensions, orientation (e.g., vertical, horizontal, tilted at an angle), position, associated space type, etc. A configuration file with this information and other information can be maintained for each electrochromic window **505.** The configuration file **475** (refer to Figure 4) may be stored in the computer readable medium **470** of the local window controller **450** of the electrochromic window **505** or in the building management system ("BMS") described later in this disclosure. The configuration file **475** can include information such as a window configuration, an occupancy lookup table, information about an associated datum glass, and/or other data used by the predictive control logic. The window configuration may include information such as the dimensions of the electrochromic window **505,** the orientation of the electrochromic window **505,** the position of the electrochromic window **505,** etc.

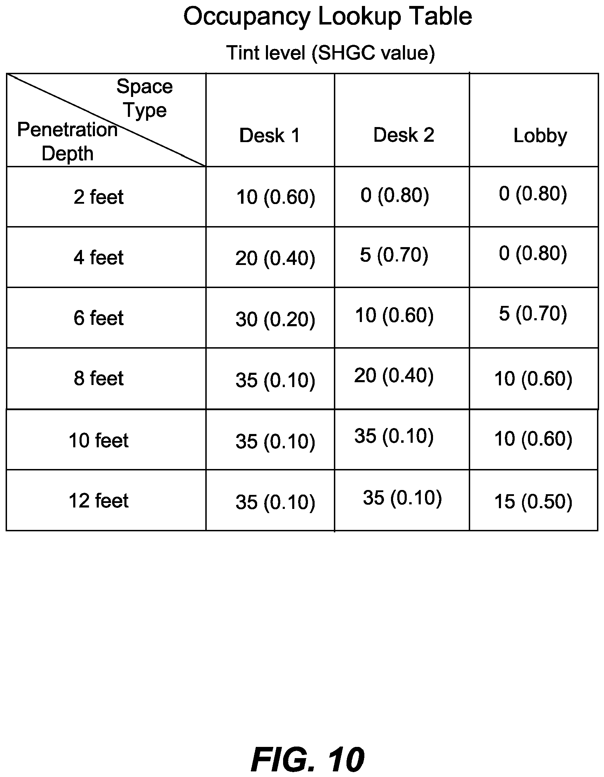

A lookup table describes tint levels that provide occupant comfort for certain space types and penetration depths. That is, the tint levels in the occupancy lookup table are designed to provide comfort to occupant(s) that may be in the room **500** from direct sunlight on the occupant(s) or their workspace. An example of an occupancy lookup table is shown in **FIG. 10****.**

The space type is a measure to determine how much tinting will be required to address occupant comfort concerns for a given penetration depth and/or provide comfortable natural lighting in the room. The space type parameter may take into consideration many factors. Among these factors is the type of work or other activity being conducted in a particular room and the location of the activity. Close work associated with detailed study requiring great attention might be at one space type, while a lounge or a conference room might have a different space type. Additionally, the position of the desk or other work surface in the room with respect to the window is a consideration in defining the space type. For example, the space type may be associated with an office of a single occupant having a desk or other workspace located near the electrochromic window **505.** As another example, the space type may be a lobby.

In certain embodiments, one or more modules of the predictive control logic can determine desired tint levels while accounting for energy conservation in addition to occupant comfort. These modules may determine energy savings associated with a particular tint level by comparing the performance of the electrochromic window **505** at that tint level to a datum glass or other standard reference window. The purpose of using this reference window can be to ensure that the predictive control logic conforms to requirements of the municipal building code or other requirements for reference windows used in the locale of the building. Often municipalities define reference windows using conventional low emissivity glass to control the amount of air conditioning load in the building. As an example of how the reference window **505** fits into the predictive control logic, the logic may be designed so that the irradiance coming through a given electrochromic window **505** is never greater than the maximum irradiance coming through a reference window as specified by the respective municipality. In disclosed embodiments, predictive control logic may use the solar heat gain coefficient (SHGC) value of the electrochromic window **505** at a particular tint level and the SHGC of the reference window to determine the energy savings of using the tint level. Generally, the value of the SHGC is the fraction of incident light of all wavelengths transmitted through the window. Although a datum glass is described in many embodiments, other standard reference windows can be used. Generally the SHGC of the reference window (e.g., datum glass) is a variable that can be different for different geographical locations and window orientations, and is based on code requirements specified by the respective municipality.

Generally, buildings are designed to have a heating, ventilation, and air conditioning system ("HVAC") with the capacity to fulfill the maximum expected heating and/or air-conditioning loads required at any given instance. The calculation of required capacity may take into consideration the datum glass or reference window required in a building at the particular location where the building is being constructed. Therefore, it is important that the predictive control logic meet or exceed the functional requirements of the datum glass in order to allow building designers to confidently determine how much HVAC capacity to put into a particular building. Since the predictive control logic can be used to tint the window to provide additional energy savings over the datum glass, the predictive control logic could be useful in allowing building designers to have a lower HVAC capacity than would have been required using the datum glass specified by the codes and standards.

Particular embodiments described herein assume that energy conservation is achieved by reducing air conditioning load in a building. Therefore, many of the implementations attempt to achieve the maximum tinting possible, while accounting for occupant comfort level and perhaps lighting load in a room having with the window under consideration. However, in some climates, such as those at far northern and for southern latitudes, heating may be more of a concern than air conditioning. Therefore, the predictive control logic can be modified, specifically, road reversed in some matters, so that less tinting occurs in order to ensure that the heating load of the building is reduced.

In certain implementations, the predictive control logic has only two independent variables that can be controlled by an occupant (end user), building designer, or building operator. These are the space types for a given window and the datum glass associated with the given window. Often the datum glass is specified when the predictive control logic is implemented for a given building. The space type can vary, but is typically static. In certain implementations, the space type may be part of the configuration file maintained by the building or stored in the local window controller **450.** In some cases, the configuration file may be updated to account for various changes in the building. For example, if there is a change in the space type (e.g., desk moved in an office, addition of desk, lobby changed into office area, wall moved, etc.) in the building, an updated configuration file with a modified occupancy lookup table may be stored in the computer readable medium **470.** As another example, if an occupant is hitting manual override repeatedly, then the configuration file may be updated to reflect the manual override.

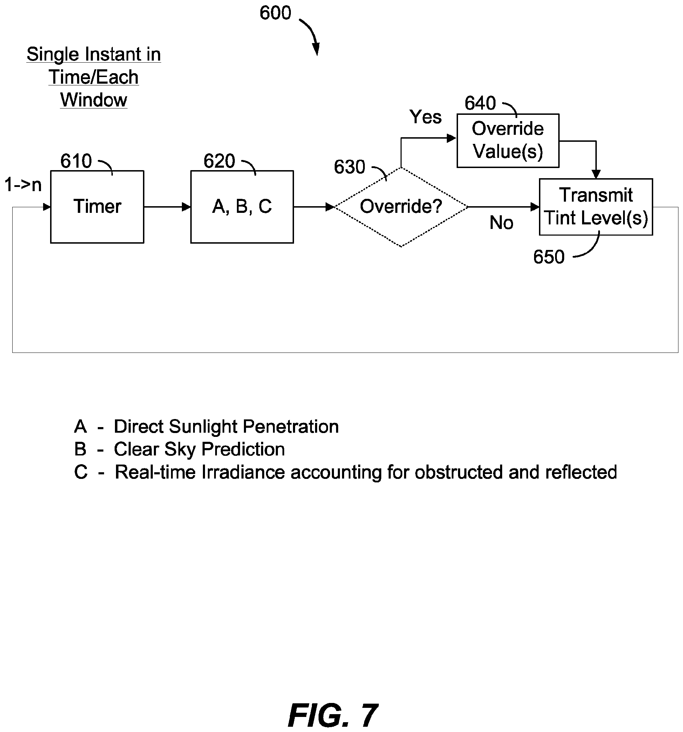

**FIG. 7** is a flowchart showing predictive control logic for a method of controlling one or more electrochromic windows **505** in a building, according to embodiments. The predictive control logic uses one or more of the Modules A, B, and C to calculate tint levels for the window(s) and sends instructions to transition the window(s). The calculations in the control logic are run 1 to n times at intervals timed by the timer at **step 610.** For example, the tint level can be recalculated 1 to *n* times by one or more of the Modules A, B, and C and calculated for instances in time *tᵢ = t₁, t₂,..tₙ. n* is the number of recalculations performed and n can be at least 1. The logic calculations can be done at constant time intervals in some cases. In one cases, the logic calculations may be done every 2 to 5 minutes. However, tint transition for large pieces of electrochromic glass (e.g. up to 6' x 10 feet) can take up to 30 minutes or more. For these large windows, calculations may be done on a less frequent basis such as every 30 minutes.

At **step 620,** logic Modules A, B, and C perform calculations to determine a tint level for each electrochromic window **505** at a single instant in time *tᵢ*. These calculations can be performed by the window controller **450.** In certain embodiments, the predictive control logic predictively calculates how the window should transition in advance of the actual transition. In these cases, the calculations in Modules A, B, and C can be based on a future time around or after transition is complete. In these cases, the future time used in the calculations may be a time in the future that is sufficient to allow the transition to be completed after receiving the tint instructions. In these cases, the controller can send tint instructions in the present time in advance of the actual transition. By the completion of the transition, the window will have transitioned to a tint level that is desired for that time.

At **step 630,** the predictive control logic allows for certain types of overrides that disengage the algorithm at Modules A, B, and C and define override tint levels at **step 640** based on some other consideration. One type of override is a manual override. This is an override implemented by an end user who is occupying a room and determines that a particular tint level (override value) is desirable. There may be situations where the user's manual override is itself overridden. An example of an override is a high demand (or peak load) override, which is associated with a requirement of a utility that energy consumption in the building be reduced. For example, on particularly hot days in large metropolitan areas, it may be necessary to reduce energy consumption throughout the municipality in order to not overly tax the municipality's energy generation and delivery systems. In such cases, the building may override the tint level from the predictive control logic described herein to ensure that all windows have a particularly high level of tinting. Another example of an override may be if there is no occupant in the room, for example at weekends in a commercial office building. In these cases, the building may disengage one or more Modules that relate to occupant comfort and all the windows may have a high level of tinting in cold weather and low level of tinting in warm weather.

At **step 650,** the tint levels are transmitted over a network to electrochromic device(s) in one or more electrochromic windows **505** in the building. In certain embodiments, the transmission of tint levels to all windows of a building may be implemented with efficiency in mind. For example, if the recalculation of tint level suggests that no change in tint from the current tint level is required, then there is no transmission of instructions with an updated tint level. As another example, the building may be divided into zones based on window size. The predictive control logic may recalculate tint levels for zones with smaller windows more frequently than for zones with larger windows.

In some embodiments, the logic in **FIG. 7** for implementing the control methods for multiple electrochromic windows **505** in an entire building can be on a single device, for example, a single master window controller. This device can perform the calculations for each and every tintable window in the building and also provide an interface for transmitting tint levels to one or more electrochromic devices in individual electrochromic windows **505,** for example, in multi-zone windows or on multiple EC lites of an insulated glass unit. Some examples of multi-zone windows can be found in PCT application No. PCT/US14/71314 titled "MULTI-ZONE EC WINDOWS," which is hereby incorporated by reference in its entirety.

Also, there may be certain adaptive components of the predictive control logic of embodiments. For example, the predictive control logic may determine how an end user (e.g. occupant) tries to override the algorithm at particular times of day and makes use of this information in a more predictive manner to determine desired tint levels. In one case, the end user may be using a wall switch to override the tint level provided by the predictive logic at a certain time each day to an override value. The predictive control logic may receive information about these instances and change the predictive control logic to change the tint level to the override value at that time of day.

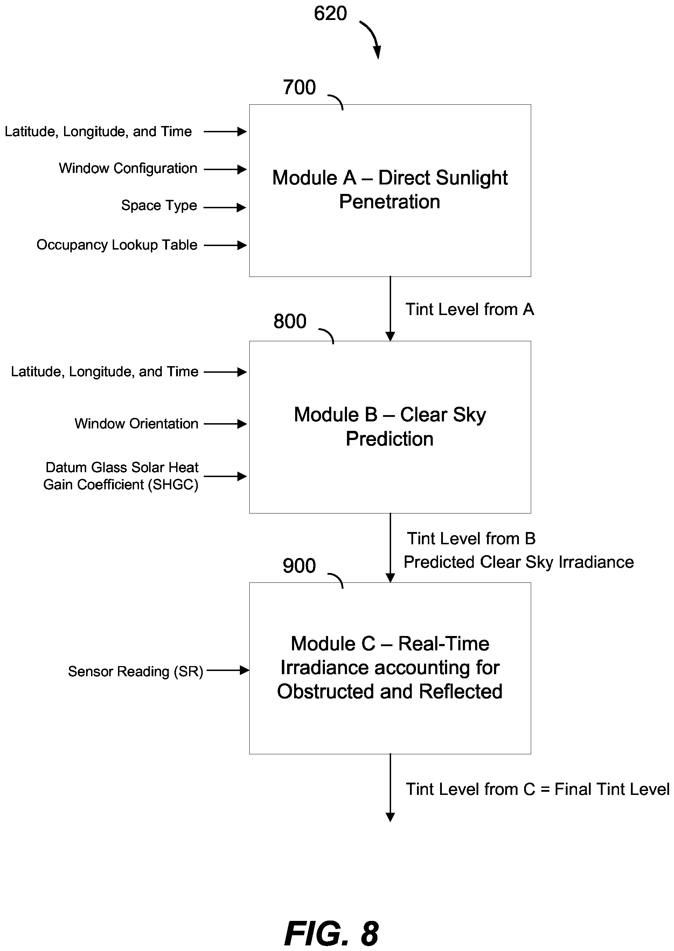

**FIG. 8** is a diagram showing a particular implementation of block **620** from **FIG. 7****.** This diagram shows a method of performing all three Modules A, B, and C in sequence to calculate a final tint level of a particular electrochromic window **505** for a single instant in time *tᵢ*. The final tint level may be the maximum permissible transmissivity of the window under consideration. **FIG. 8** also includes some exemplary inputs and outputs of Modules A, B, and C. The calculations in Modules A, B, and C are performed by window controller **450** in local window controller **450** in embodiments. In other embodiments, one or more of the modules can be performed by another processor. Although illustrated embodiments show all three Modules A, B, and C being used, other embodiments may use one or more of the Modules A, B, and C or may use additional modules.

At **step 700,** window controller **450** uses Module A to determine a tint level for occupant comfort to prevent direct glare from sunlight penetrating the room **500.** Window controller **450** uses Module A to calculate the penetration depth of direct sunlight into the room **500** based on the sun's position in the sky and the window configuration from the configuration file. The position of the sun is calculated based on the latitude and longitude of the building and the time of day and date. The occupancy lookup table and space type are input from a configuration file for the particular window. Module A outputs the Tint level from A to Module B.

The goal of Module A is to ensure that direct sunlight or glare does not strike the occupant or his or her workspace. The tint level from Module A is determined to accomplish this purpose. Subsequent calculations of tint level in Modules B and C can reduce energy consumption and may require even greater tint. However, if subsequent calculations of tint level based on energy consumption suggest less tinting than required to avoid interfering with the occupant, the predictive logic prevents the calculated greater level of transmissivity from being executed to assure occupant comfort.

At **step 800,** the tint level calculated in Module A is input into Module B. A tint level is calculated based on predictions of irradiance under clear sky conditions (clear sky irradiance). Window controller **450** uses Module B to predict clear sky irradiance for the electrochromic window **505** based on window orientation from the configuration file and based on latitude and longitude of the building. These predictions are also based on a time of day and date. Publicly available software such as the RADIANCE program, which is an open-source program, can provide the calculations for predicting clear sky irradiance. The SHGC of the datum glass is also input into Module B from the configuration file. Window controller **450** uses Module B to determine a tint level that is darker than the tint level in A and transmits less heat than the datum glass is predicted to transmit under maximum clear sky irradiance. Maximum clear sky irradiance is the highest level of irradiance for all times predicted for clear sky conditions.

At **step 900,** a tint level from B and predicted clear sky irradiance are input to Module C. Real-time irradiance values are input to Module C based on measurements from an exterior sensor **510.** Window controller **450** uses Module C to calculate irradiance transmitted into the room if the window were tinted to the Tint level from Module B under clear sky conditions. Window controller **450** uses Module C to find the appropriate tint level where the actual irradiance through the window with this tint level is less than or equal to the irradiance through the window with the Tint level from Module B. The tint level determined in Module C is the final tint level.

Much of the information input to the predictive control logic is determined from fixed information about the latitude and longitude, time and date. This information describes where the sun is with respect to the building, and more particularly with respect to the window for which the predictive control logic is being implemented. The position of the sun with respect to the window provides information such as the penetration depth of direct sunlight into the room assisted with the window. It also provides an indication of the maximum irradiance or solar radiant energy flux coming through the window. This calculated level of irradiance can be modified by sensor input which might indicate that there is a reduction from the maximum amount of irradiance. Again, such reduction might be caused by a cloud or other obstruction between the window and the sun.

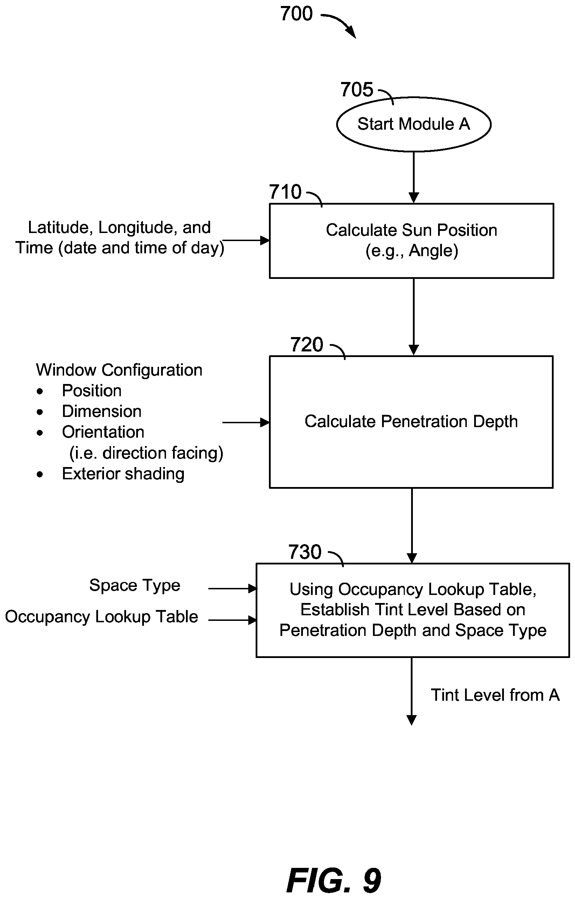

**FIG. 9** is a flowchart showing details of **step 700** of **FIG. 8****.** At **step 705,** Module A begins. At **step 710,** the window controller **450** uses Module A to calculate the position of the sun for the latitude and longitude coordinates of the building and the date and time of day of a particular instant in time, *tᵢ*. The latitude and longitude coordinates may be input from the configuration file. The date and time of day may be based on the current time provided by the timer. The sun position is calculated at the particular instant in time, *tᵢ,* which may be in the future in some cases. In other embodiments, the position of the sun is calculated in another component (e.g., module) of the predictive control logic.

At **step 720,** window controller **450** uses Module A to calculate the penetration depth of direct sunlight into the room **500** at the particular instant in time used in **step 710.** Module A calculates the penetration depth based on the calculated position of the sun and window configuration information including the position of the window, dimensions of the window, orientation of the window (i.e. direction facing), and the details of any exterior shading. The window configuration information is input from the configuration file associated with the electrochromic window **505.** For example, Module A can be used to calculate the penetration depth of the vertical window shown in **FIG. 6A** by first calculating the angle *θ* of the direct sunlight based on the position of the sun calculated at the particular instant in time. The penetration depth can be determined based on calculated angle *θ* and the location of the lintel (top of the window).

At **step 730,** a tint level is determined that will provide occupant comfort for the penetration depth calculated in **step 720.** The occupancy lookup table is used to find a desired tint level for the space type associated with the window, for the calculated penetration depth, and for the acceptance angle of the window. The space type and occupancy lookup table are provided as input from the configuration file for the particular window.

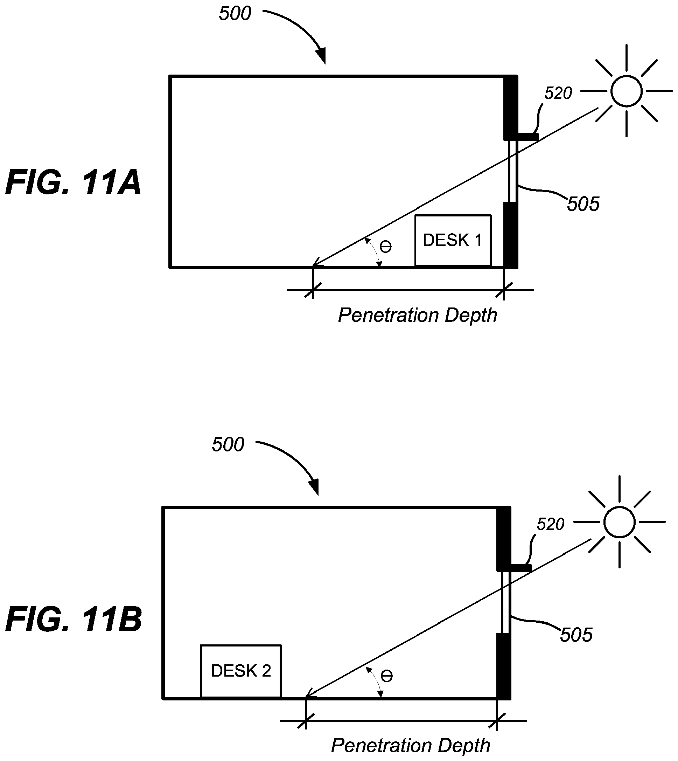

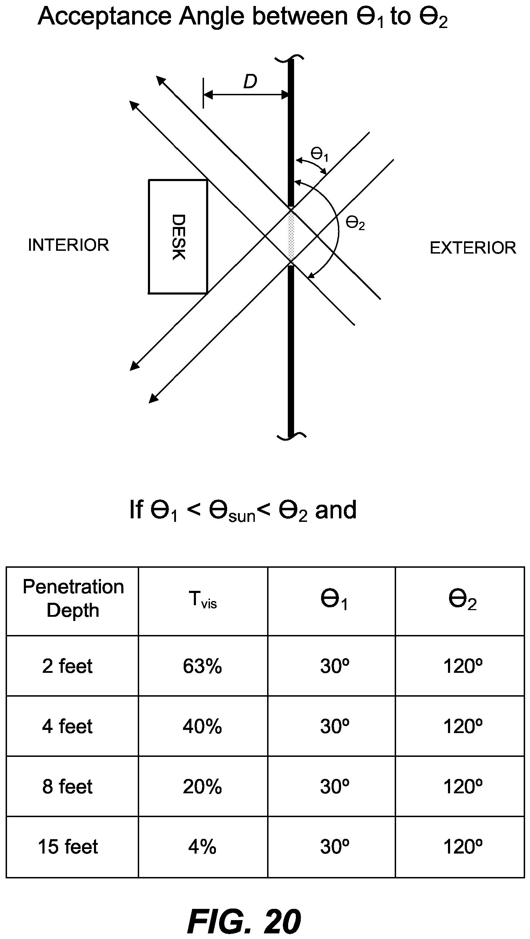

An example of an occupancy lookup table is provided in **FIG. 10****.** The values in the table are in terms of a Tint level and associated SHGC values in parenthesis. **FIG. 10** shows the different tint levels (SHGC values) for different combinations of calculated penetration values and space types. The table is based on eight tint levels including 0 (lightest), 5, 10, 15, 20, 25, 30, and 35 (lightest). The lightest tint level of 0 corresponds to an SHGC value of 0.80, the tint level of 5 corresponds to an SHGC value of 0.70, the tint level of 10 corresponds to an SHGC value of 0.60, the tint level of 15 corresponds to an SHGC value of 0.50, the tint level of 20 corresponds to an SHGC value of 0.40, the tint level of 25 corresponds to an SHGC value of 0.30, the tint level of 30 corresponds to an SHGC value of 0.20, and the tint level of 35 (darkest) corresponds to an SHGC value of 0.10. The illustrated example includes three space types: Desk 1, Desk 2, and Lobby and six penetration depths. **FIG. 11A** shows the location of Desk 1 in the room **500.** **FIG. 11B** shows the location of Desk 2 in the room **500.** As shown in the occupancy lookup table of **FIG. 10****,** the tint levels for Desk 1 close to the window are higher than the tint levels for Desk 2 far from window to prevent glare when the desk is closer to the window. Occupancy lookup tables with other values may be used in other embodiments. For example, one other occupancy lookup table may include only four tint levels associated with the penetration values. Another example of an occupancy table with four tint levels associated with four penetration depths is shown in **FIG. 20****.**

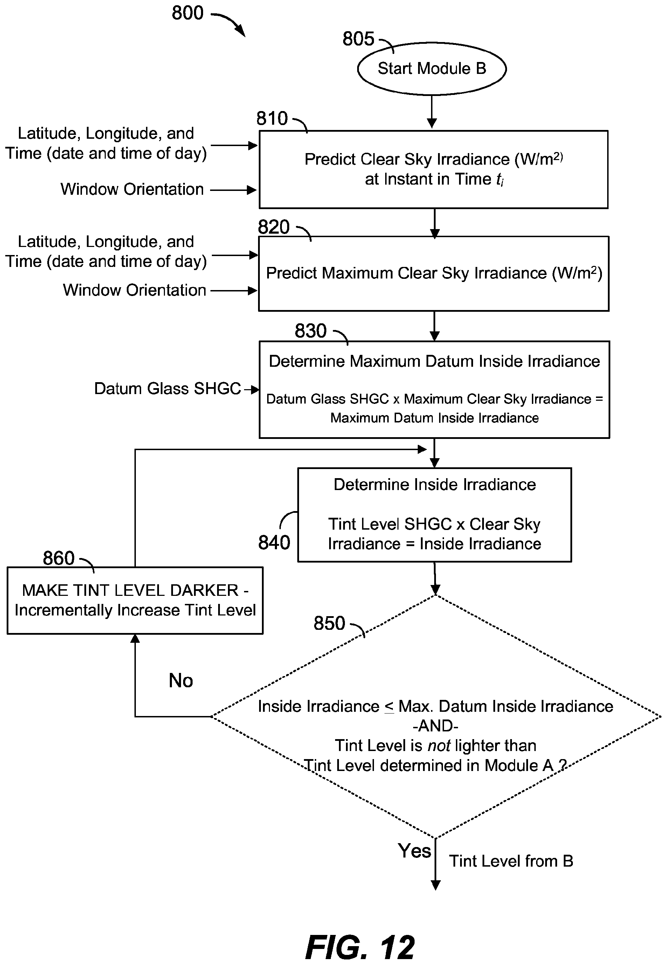

**FIG. 12** is a diagram showing further detail of **step 800** of **FIG. 8****.** At **step 805,** Module B begins. At **step 810,** Module **B** can be used to predict the irradiance at the window under clear sky conditions at *tᵢ*. This clear sky irradiance at *tᵢ* is predicted based on the latitude and longitude coordinates of the building and the window orientation (i.e. direction the window is facing). At **step 820,** the Maximum Clear Sky Irradiance incident the window at all times is predicted. These predicted values of clear sky irradiance can be calculated using open source software, such as Radiance.

At **step 830,** the window controller **450** uses Module B to determine the maximum amount of irradiance that would be transmitted through a datum glass into the room **500** at that time (i.e. determines Maximum Datum Inside Irradiance). The calculated Maximum Clear Sky Irradiance from **step 820** and the datum glass SHGC value from the configuration file can be used to calculate the Maximum Irradiance inside the space using the equation: Maximum Datum Inside Irradiance = Datum Glass SHGC x Maximum Clear Sky Irradiance.

At **step 840,** window controller **450** uses Module B to determine inside irradiance into the room **500** having a window with the current tint level based on the equation. The calculated Clear Sky Irradiance from **step 810** and the SHGC value associated with the current tint level can be used to calculate the value of the inside irradiance using the equation: Tint level Irradiance = Tint level SHGC x Clear Sky Irradiance.

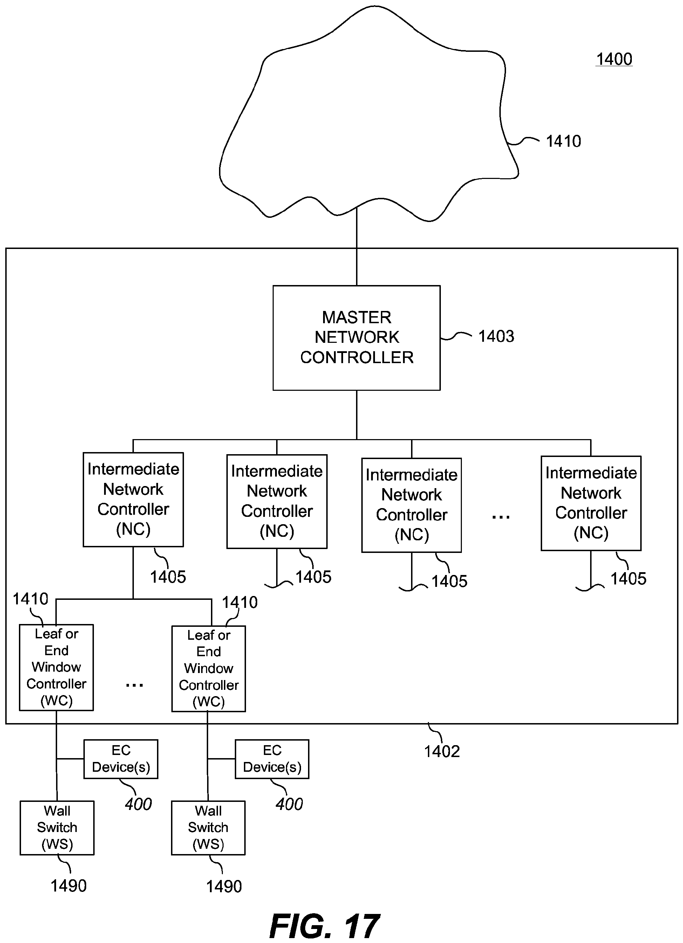

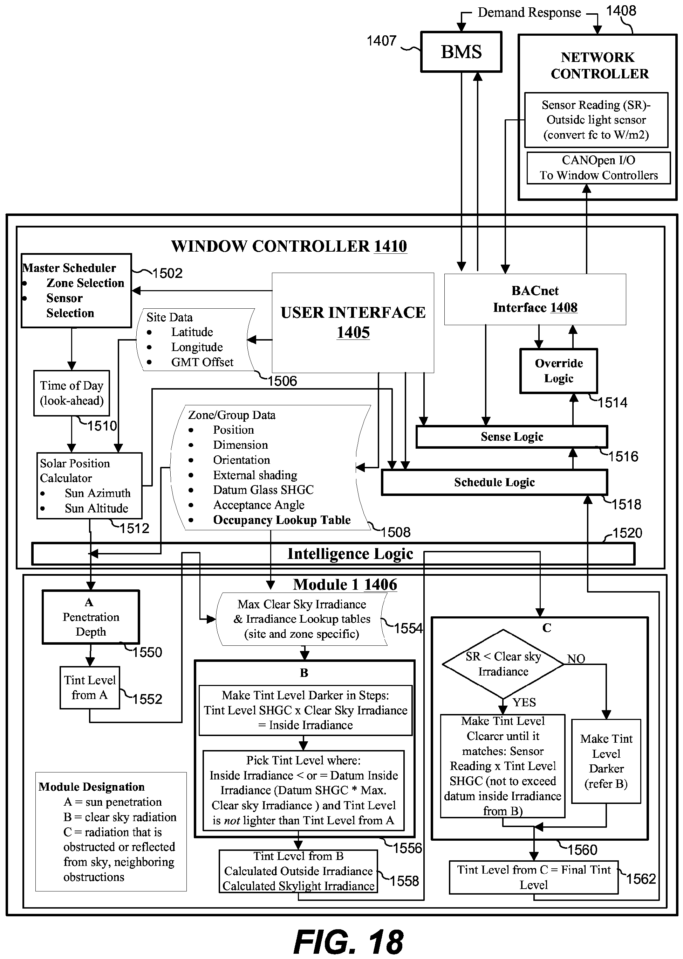

In one embodiment, one or more the steps **705, 810** and **820** may be performed by a solar position calculator separate from Modules A and B. A solar position calculator refers to logic that determines the position of the sun at a particular future time and makes predictive determinations (e.g., predicts clear sky irradiance) based on the sun's position at that future time. The solar position calculator may perform one or more steps of the methods disclosed herein. The solar position calculator may be a portion of the predictive control logic performed by one or more of the components of the master window controller (e.g., master window controller **1402** depicted in **FIG.17****).** For example, the solar position calculator may be part of the predictive control logic shown in **FIG. 18** implemented by the window controller **1410** (shown in **FIG. 17****).**

At **step 850,** window controller **450** uses Module B to determine whether the inside irradiance based on the current tint level is less than or equal to the maximum datum inside irradiance and the tint level is darker than the tint level from A. If the determination is NO, the current tint level is incrementally increased (darkened) at **step 860** and the inside irradiance is recalculated at **step 840.** If the determination is YES at **step 850,** Module B ends.

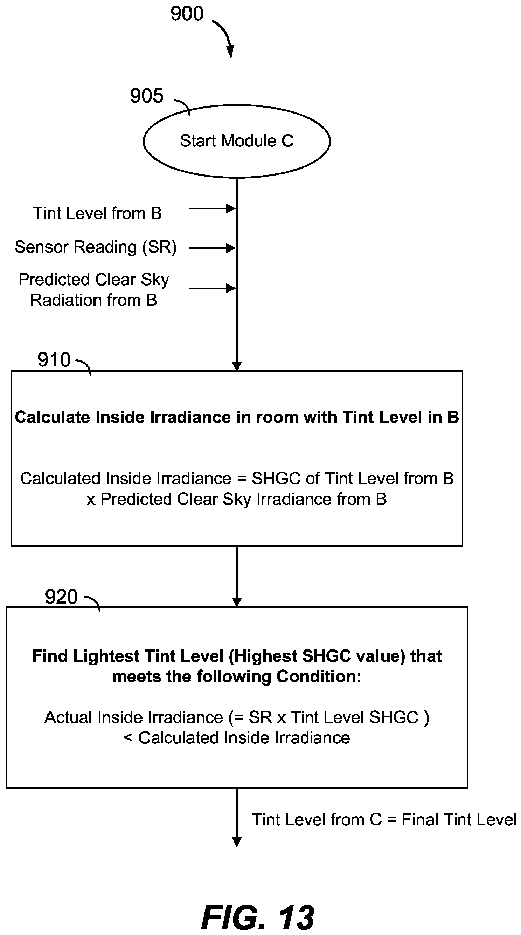

**FIG. 13** is a diagram showing further detail of **step 900** of **FIG. 8****.** At **step 905,** Module C begins. A tint level from B and predicted clear sky irradiance at the instant in time *tᵢ* is input from Module B. Real-time irradiance values are input to Module C based on measurements from an exterior sensor **510.**

At **step 910,** window controller **450** uses Module C to calculate irradiance transmitted into the room through an electrochromic window **505** tinted to the Tint level from B under clear sky conditions. This Calculated Inside Irradiance can be determined using the equation: Calculated Inside Irradiance = SHGC of Tint Level from B x Predicted Clear Sky Irradiance from B.

At **step 920,** window controller **450** uses Module C to find the appropriate tint level where the actual irradiance (=SR x Tint level SHGC) through the window with this tint level is less than or equal to the irradiance through the window with the Tint level from B (i.e. Actual Inside Irradiance ≤ Calculated Inside Irradiance). In some cases, the module logic starts with the tint level from B and incrementally increases the tint level until the Actual Inside Irradiance ≤ Calculated Inside Irradiance. The tint level determined in Module C is the final tint level. This final tint level may be transmitted in tint instructions over the network to the electrochromic device(s) in the electrochromic window **505.**

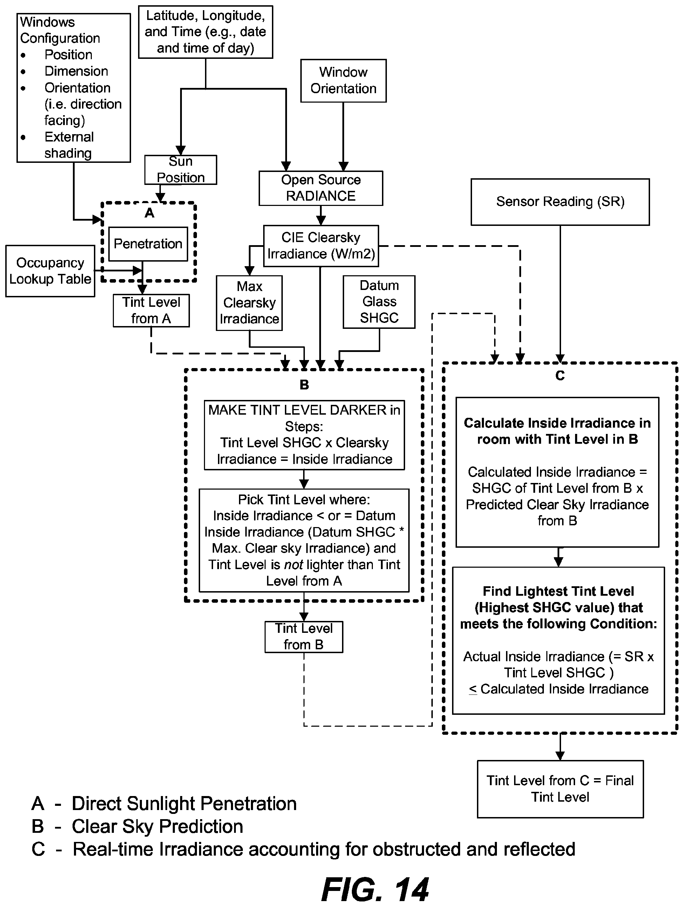

**Figure14** is a diagram includes another implementation of block **620** from **FIG. 7****.** This diagram shows a method of performing Modules A, B, and C of embodiments. In this method, the position of the sun is calculated based on the latitude and longitude coordinates of the building for a single instant in time *tᵢ*. The penetration depth is calculated in Module A based on the window configuration including a position of the window, dimensions of the window, orientation of the window, and information about any external shading. Module A uses a lookup table to determine the tint level from A based on the calculated penetration and the space type. The tint level from A is then input into Module B.

A program such as the open source program Radiance, is used to determine clear sky irradiance based on window orientation and latitude and longitude coordinates of the building for both a single instant in time *tᵢ* and a maximum value for all times. The datum glass SHGC and calculated maximum clear sky irradiance are input into Module B. Module B increases the tint level calculated in Module A in steps and picks a tint level where the Inside radiation is less than or equal to the Datum Inside Irradiance where: Inside Irradiance = Tint level SHGC x Clear Sky Irradiance and Datum Inside Irradiance = Datum SHGC x Maximum Clear Sky Irradiance. However, when Module A calculates the maximum tint of the glass, module B doesn't change the tint to make it lighter. The tint level calculated in B is then input into Module C. The predicted clear sky irradiance is also input into Module C.

Module C calculates the inside irradiance in the room with an electrochromic window **505** having the tint level from B using the equation: Calculated Inside Irradiance = SHGC of Tint Level from B x Predicted Clear Sky Irradiance from B. Module C then finds the appropriate tint level that meets the condition where actual inside irradiance is less than or equal to the Calculated Inside Irradiance. The actual inside irradiance is determined using the equation: Actual Inside Irradiance = SR x Tint level SHGC. The tint level determined by Module C is the final tint level in tint instructions sent to the electrochromic window **505.**

### IV. Building Management Systems (BMSs)

The window controllers described herein also are suited for integration with a BMS. A BMS is a computer-based control system installed in a building that monitors and controls the building's mechanical and electrical equipment such as ventilation, lighting, power systems, elevators, fire systems, and security systems. A BMS consists of hardware, including interconnections by communication channels to a computer or computers, and associated software for maintaining conditions in the building according to preferences set by the occupants and/or by the building manager. For example, a BMS may be implemented using a local area network, such as Ethernet. The software can be based on, for example, internet protocols and/or open standards. One example is software from Tridium, Inc. (of Richmond, Virginia). One communications protocol commonly used with a BMS is BACnet (building automation and control networks).

A BMS is most common in a large building, and typically functions at least to control the environment within the building. For example, a BMS may control temperature, carbon dioxide levels, and humidity within a building. Typically, there are many mechanical devices that are controlled by a BMS such as heaters, air conditioners, blowers, vents, and the like. To control the building environment, a BMS may turn on and off these various devices under defined conditions. A core function of a typical modern BMS is to maintain a comfortable environment for the building's occupants while minimizing heating and cooling costs/demand. Thus, a modern BMS is used not only to monitor and control, but also to optimize the synergy between various systems, for example, to conserve energy and lower building operation costs.

In some embodiments, a window controller is integrated with a BMS, where the window controller is configured to control one or more electrochromic windows **505** or other tintable windows. In one embodiment, the one or more electrochromic windows include at least one all solid state and inorganic electrochromic device, but may include more than one electrochromic device, e.g. where each lite or pane of an IGU is tintable. In one embodiment, the one or more electrochromic windows include only all solid state and inorganic electrochromic devices. In one embodiment, the electrochromic windows are multistate electrochromic windows, as described in U.S. Patent Application, serial number 12/851,514, filed on August 5, 2010, and entitled "Multipane Electrochromic Windows."

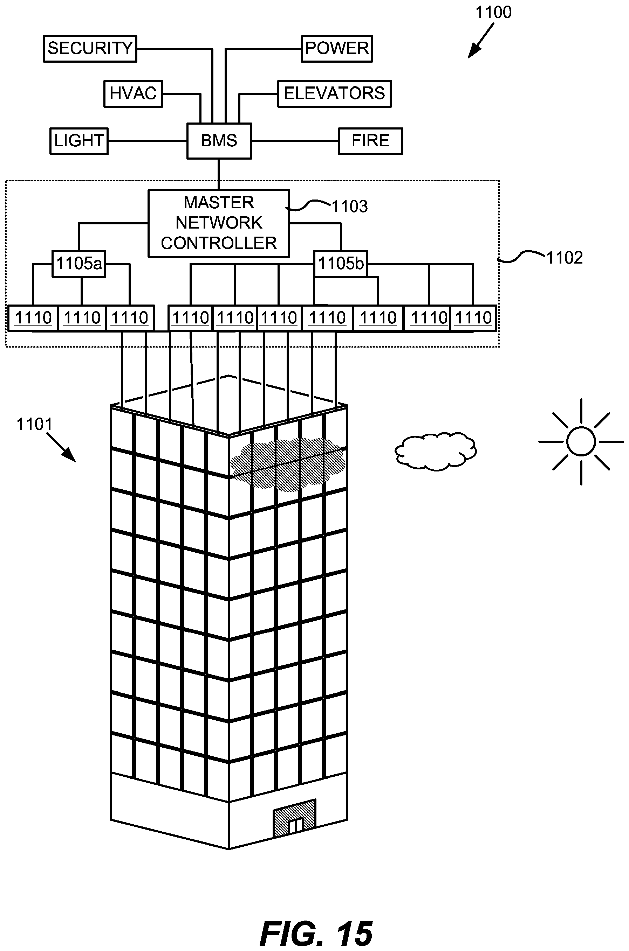

**FIG. 15** depicts a schematic diagram of an embodiment of a BMS **1100,** that manages a number of systems of a building **1101,** including security systems, heating/ventilation/air conditioning (HVAC), lighting of the building, power systems, elevators, fire systems, and the like. Security systems may include magnetic card access, turnstiles, solenoid driven door locks, surveillance cameras, burglar alarms, metal detectors, and the like. Fire systems may include fire alarms and fire suppression systems including a water plumbing control. Lighting systems may include interior lighting, exterior lighting, emergency warning lights, emergency exit signs, and emergency floor egress lighting. Power systems may include the main power, backup power generators, and uninterrupted power source (UPS) grids.

Also, BMS **1100** manages a master window controller **1102.** In this example, master window controller **1102** is depicted as a distributed network of window controllers including a master network controller, **1103,** intermediate network controllers, **1105a** and **1105b,** and end or leaf controllers **1110.** End or leaf controllers **1110** may be similar to window controller **450** described with respect to **FIG. 4****.** For example, master network controller **1103** may be in proximity to the BMS **1100,** and each floor of building **1101** may have one or more intermediate network controllers **1105a** and **1105b,** while each window of the building has its own end controller **1110.** In this example, each of controllers **1110** controls a specific electrochromic window of building **1101.**

Each of controllers **1110** can be in a separate location from the electrochromic window that it controls, or be integrated into the electrochromic window. For simplicity, only ten electrochromic windows of building **1101** are depicted as controlled by master window controller **1102.** In a typical setting there may be a large number of electrochromic windows in a building controlled by master window controller **1102.** Master window controller **1102** need not be a distributed network of window controllers. For example, a single end controller which controls the functions of a single electrochromic window also falls within the scope of the embodiments disclosed herein, as described above. Advantages and features of incorporating electrochromic window controllers as described herein with BMSs are described below in more detail and in relation to **FIG. 15****,** where appropriate.

One aspect of the disclosed embodiments is a BMS including a multipurpose electrochromic window controller as described herein. By incorporating feedback from a electrochromic window controller, a BMS can provide, for example, enhanced: 1) environmental control, 2) energy savings, 3) security, 4) flexibility in control options, 5) improved reliability and usable life of other systems due to less reliance thereon and therefore less maintenance thereof, 6) information availability and diagnostics, 7) effective use of, and higher productivity from, staff, and various combinations of these, because the electrochromic windows can be automatically controlled. In some embodiments, a BMS may not be present or a BMS may be present but may not communicate with a master network controller or communicate at a high level with a master network controller. In certain embodiments, maintenance on the BMS would not interrupt control of the electrochromic windows.

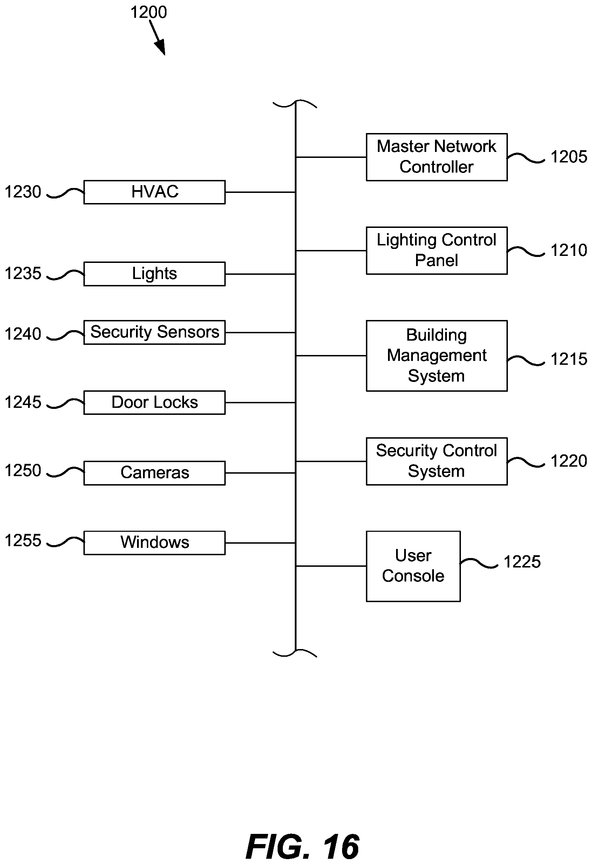

**FIG. 16** depicts a block diagram of an embodiment of a building network **1200** for a building. As noted above, network **1200** may employ any number of different communication protocols, including BACnet. As shown, building network **1200** includes a master network controller **1205,** a lighting control panel **1210,** a building management system (BMS) **1215,** a security control system, **1220,** and a user console, **1225.** These different controllers and systems in the building may be used to receive input from and/or control a HVAC system **1230,** lights **1235,** security sensors **1240,** door locks **1245,** cameras **1250,** and tintable windows **1255,** of the building.

Master network controller **1205** may function in a similar manner as master network controller **1103** described with respect to **FIG. 15****.** Lighting control panel **1210** may include circuits to control the interior lighting, the exterior lighting, the emergency warning lights, the emergency exit signs, and the emergency floor egress lighting. Lighting control panel **1210** also may include occupancy sensors in the rooms of the building. BMS **1215** may include a computer server that receives data from and issues commands to the other systems and controllers of network **1200.** For example, BMS **1215** may receive data from and issue commands to each of the master network controller **1205,** lighting control panel **1210,** and security control system **1220.** Security control system **1220** may include magnetic card access, turnstiles, solenoid driven door locks, surveillance cameras, burglar alarms, metal detectors, and the like. User console **1225** may be a computer terminal that can be used by the building manager to schedule operations of, control, monitor, optimize, and troubleshoot the different systems of the building. Software from Tridium, Inc. may generate visual representations of data from different systems for user console **1225.**

Each of the different controls may control individual devices/apparatus. Master network controller **1205** controls windows **1255.** Lighting control panel **1210** controls lights **1235.** BMS **1215** may control HVAC **1230.** Security control system **1220** controls security sensors **1240,** door locks **1245,** and cameras **1250.** Data may be exchanged and/or shared between all of the different devices/apparatus and controllers that are part of building network **1200.**

In some cases, the systems of BMS **1100** or building network **1200** may run according to daily, monthly, quarterly, or yearly schedules. For example, the lighting control system, the window control system, the HVAC, and the security system may operate on a 24 hour schedule accounting for when people are in the building during the work day. At night, the building may enter an energy savings mode, and during the day, the systems may operate in a manner that minimizes the energy consumption of the building while providing for occupant comfort. As another example, the systems may shut down or enter an energy savings mode over a holiday period.

The scheduling information may be combined with geographical information. Geographical information may include the latitude and longitude of the building. Geographical information also may include information about the direction that each side of the building faces. Using such information, different rooms on different sides of the building may be controlled in different manners. For example, for east facing rooms of the building in the winter, the window controller may instruct the windows to have no tint in the morning so that the room warms up due to sunlight shining in the room and the lighting control panel may instruct the lights to be dim because of the lighting from the sunlight. The west facing windows may be controllable by the occupants of the room in the morning because the tint of the windows on the west side may have no impact on energy savings. However, the modes of operation of the east facing windows and the west facing windows may switch in the evening (e.g., when the sun is setting, the west facing windows are not tinted to allow sunlight in for both heat and lighting).

Described below is an example of a building, for example, like building **1101** in **FIG. 15****,** including a building network or a BMS, tintable windows for the exterior windows of the building (i.e., windows separating the interior of the building from the exterior of the building), and a number of different sensors. Light from exterior windows of a building generally has an effect on the interior lighting in the building about 20 feet or about 30 feet from the windows. That is, space in a building that is more that about 20 feet or about 30 feet from an exterior window receives little light from the exterior window. Such spaces away from exterior windows in a building are lit by lighting systems of the building.

Further, the temperature within a building may be influenced by exterior light and/or the exterior temperature. For example, on a cold day and with the building being heated by a heating system, rooms closer to doors and/or windows will lose heat faster than the interior regions of the building and be cooler compared to the interior regions.

For exterior sensors, the building may include exterior sensors on the roof of the building. Alternatively, the building may include an exterior sensor associated with each exterior window (e.g., as described in relation to **FIG. 5****,** room **500)** or an exterior sensor on each side of the building. An exterior sensor on each side of the building could track the irradiance on a side of the building as the sun changes position throughout the day.

Regarding the methods described with respect to **FIGS. 7****,** **8****,** **9****,** **12****,** **13****,** and **14****,** when a window controller is integrated into a building network or a BMS, outputs from exterior sensors **510** may be input to a network of BMS and provided as input to the local window controller **450.** For example, in some embodiments, output signals from any two or more sensors are received. In some embodiments, only one output signal is received, and in some other embodiments, three, four, five, or more outputs are received. These output signals may be received over a building network or a BMS.

In some embodiments, the output signals received include a signal indicating energy or power consumption by a heating system, a cooling system, and/or lighting within the building. For example, the energy or power consumption of the heating system, the cooling system, and/or the lighting of the building may be monitored to provide the signal indicating energy or power consumption. Devices may be interfaced with or attached to the circuits and/or wiring of the building to enable this monitoring. Alternatively, the power systems in the building may be installed such that the power consumed by the heating system, a cooling system, and/or lighting for an individual room within the building or a group of rooms within the building can be monitored.

Tint instructions can be provided to change to tint of the tintable window to the determined level of tint. For example, referring to **FIG. 15****,** this may include master network controller **1103** issuing commands to one or more intermediate network controllers **1105a** and **1105b,** which in turn issue commands to end controllers **1110** that control each window of the building. End controllers **1100** may apply voltage and/or current to the window to drive the change in tint pursuant to the instructions.

In some embodiments, a building including electrochromic windows and a BMS may be enrolled in or participate in a demand response program run by the utility or utilities providing power to the building. The program may be a program in which the energy consumption of the building is reduced when a peak load occurrence is expected. The utility may send out a warning signal prior to an expected peak load occurrence. For example, the warning may be sent on the day before, the morning of, or about one hour before the expected peak load occurrence. A peak load occurrence may be expected to occur on a hot summer day when cooling systems/air conditioners are drawing a large amount of power from the utility, for example. The warning signal may be received by the BMS of the building or by window controllers configured to control the electrochromic windows in the building. This warning signal can be an override mechanism that disengages the Modules A, B, and C as shown in **FIG. 7****.** The BMS can then instruct the window controller(s) to transition the appropriate electrochromic device in the electrochromic windows **505** to a dark tint level aid in reducing the power draw of the cooling systems in the building at the time when the peak load is expected.

In some embodiments, tintable windows for the exterior windows of the building (i.e., windows separating the interior of the building from the exterior of the building), may be grouped into zones, with tintable windows in a zone being instructed in a similar manner. For example, groups of electrochromic windows on different floors of the building or different sides of the building may be in different zones. For example, on the first floor of the building, all of the east facing electrochromic windows may be in zone 1, all of the south facing electrochromic windows may be in zone 2, all of the west facing electrochromic windows may be in zone 3, and all of the north facing electrochromic windows may be in zone 4. As another example, all of the electrochromic windows on the first floor of the building may be in zone 1, all of the electrochromic windows on the second floor may be in zone 2, and all of the electrochromic windows on the third floor may be in zone 3. As yet another example, all of the east facing electrochromic windows may be in zone 1, all of the south facing electrochromic windows may be in zone 2, all of the west facing electrochromic windows may be in zone 3, and all of the north facing electrochromic windows may be in zone 4. As yet another example, east facing electrochromic windows on one floor could be divided into different zones. Any number of tintable windows on the same side and/or different sides and/or different floors of the building may be assigned to a zone. In embodiments where individual tintable windows have independently controllable zones, tinting zones may be created on a building façade using combinations of zones of individual windows, e.g. where individual windows may or may not have all of their zones tinted.

In some embodiments, electrochromic windows in a zone may be controlled by the same window controller. In some other embodiments, electrochromic windows in a zone may be controlled by different window controllers, but the window controllers may all receive the same output signals from sensors and use the same function or lookup table to determine the level of tint for the windows in a zone.

In some embodiments, electrochromic windows in a zone may be controlled by a window controller or controllers that receive an output signal from a transmissivity sensor. In some embodiments, the transmissivity sensor may be mounted proximate the windows in a zone. For example, the transmissivity sensor may be mounted in or on a frame containing an IGU (e.g., mounted in or on a mullion, the horizontal sash of a frame) included in the zone. In some other embodiments, electrochromic windows in a zone that includes the windows on a single side of the building may be controlled by a window controller or controllers that receive an output signal from a transmissivity sensor.

In some embodiments, a sensor (e.g., photosensor) may provide an output signal to a window controller to control the electrochromic windows **505** of a first zone (e.g., a master control zone). The window controller may also control the electrochromic windows **505** in a second zone (e.g., a slave control zone) in the same manner as the first zone. In some other embodiments, another window controller may control the electrochromic windows **505** in the second zone in the same manner as the first zone.

In some embodiments, a building manager, occupants of rooms in the second zone, or other person may manually instruct (using a tint or clear command or a command from a user console of a BMS, for example) the electrochromic windows in the second zone (i.e., the slave control zone) to enter a tint level such as a colored state (level) or a clear state. In some embodiments, when the tint level of the windows in the second zone is overridden with such a manual command, the electrochromic windows in the first zone (i.e., the master control zone) remain under control of the window controller receiving output from the transmissivity sensor. The second zone may remain in a manual command mode for a period of time and then revert back to be under control of the window controller receiving output from the transmissivity sensor. For example, the second zone may stay in a manual mode for one hour after receiving an override command, and then may revert back to be under control of the window controller receiving output from the transmissivity sensor.

In some embodiments, a building manager, occupants of rooms in the first zone, or other person may manually instruct (using a tint command or a command from a user console of a BMS, for example) the windows in the first zone (i.e., the master control zone) to enter a tint level such as a colored state or a clear state. In some embodiments, when the tint level of the windows in the first zone is overridden with such a manual command, the electrochromic windows in the second zone (i.e., the slave control zone) remain under control of the window controller receiving outputs from the exterior sensor. The first zone may remain in a manual command mode for a period of time and then revert back to be under control of window controller receiving output from the transmissivity sensor. For example, the first zone may stay in a manual mode for one hour after receiving an override command, and then may revert back to be under control of the window controller receiving output from the transmissivity sensor. In some other embodiments, the electrochromic windows in the second zone may remain in the tint level that they are in when the manual override for the first zone is received. The first zone may remain in a manual command mode for a period of time and then both the first zone and the second zone may revert back to be under control of the window controller receiving output from the transmissivity sensor.

Any of the methods described herein of control of a tintable window, regardless of whether the window controller is a standalone window controller or is interfaced with a building network, may be used control the tint of a tintable window.

### V. Wireless or Wired Communication

In some embodiments, window controllers described herein include components for wired or wireless communication between the window controller, sensors, and separate communication nodes. Wireless or wired communications may be accomplished with a communication interface that interfaces directly with the window controller. Such interface could be native to the microprocessor or provided via additional circuitry enabling these functions.

A separate communication node for wireless communications can be, for example, another wireless window controller, an end, intermediate, or master window controller, a remote control device, or a BMS. Wireless communication is used in the window controller for at least one of the following operations: programming and/or operating the electrochromic window **505,** collecting data from the EC window **505** from the various sensors and protocols described herein, and using the electrochromic window **505** as a relay point for wireless communication. Data collected from electrochromic windows **505** also may include count data such as number of times an EC device has been activated, efficiency of the EC device over time, and the like. These wireless communication features is described in more detail below.

In one embodiment, wireless communication is used to operate the associated electrochromic windows **505,** for example, via an infrared (IR), and/or radio frequency (RF) signal. In certain embodiments, the controller will include a wireless protocol chip, such as Bluetooth, EnOcean, WiFi, Zigbee, and the like. Window controllers may also have wireless communication via a network. Input to the window controller can be manually input by an end user at a wall switch, either directly or via wireless communication, or the input can be from a BMS of a building of which the electrochromic window is a component.

In one embodiment, when the window controller is part of a distributed network of controllers, wireless communication is used to transfer data to and from each of a plurality of electrochromic windows via the distributed network of controllers, each having wireless communication components. For example, referring again to **FIG. 15****,** master network controller **1103,** communicates wirelessly with each of intermediate network controllers **1105a** and **1105b,** which in turn communicate wirelessly with end controllers **1110,** each associated with an electrochromic window. Master network controller **1103** may also communicate wirelessly with the BMS **1100.** In one embodiment, at least one level of communication in the window controller is performed wirelessly.

In some embodiments, more than one mode of wireless communication is used in the window controller distributed network. For example, a master window controller may communicate wirelessly to intermediate controllers via WiFi or Zigbee, while the intermediate controllers communicate with end controllers via Bluetooth, Zigbee, EnOcean, or other protocol. In another example, window controllers have redundant wireless communication systems for flexibility in end user choices for wireless communication.

Wireless communication between, for example, master and/or intermediate window controllers and end window controllers offers the advantage of obviating the installation of hard communication lines. This is also true for wireless communication between window controllers and BMS. In one aspect, wireless communication in these roles is useful for data transfer to and from electrochromic windows for operating the window and providing data to, for example, a BMS for optimizing the environment and energy savings in a building. Window location data as well as feedback from sensors are synergized for such optimization. For example, granular level (window-by-window) microclimate information is fed to a BMS in order to optimize the building's various environments.

### VI. Example of System for controlling functions of tintable windows

**FIG. 17** is a block diagram of components of a system **1400** for controlling functions (e.g., transitioning to different tint levels) of one or more tintable windows of a building (e.g., building **1101** shown in **FIG. 15****),** according to embodiments. System **1400** may be one of the systems managed by a BMS (e.g., BMS **1100** shown in **FIG. 15****)** or may operate independently of a BMS.

System **1400** includes a master window controller **1402** that can send control signals to the tintable windows to control its functions. System **1400** also includes a network **1410** in electronic communication with master window controller **1402.** The predictive control logic, other control logic and instructions for controlling functions of the tintable window(s), and/or sensor data may be communicated to the master window controller **1402** through the network **1410.** Network **1410** can be a wired or wireless network (e.g. cloud network). In one embodiment, network **1410** may be in communication with a BMS to allow the BMS to send instructions for controlling the tintable window(s) through network **1410** to the tintable window(s) in a building.

System **1400** also includes EC devices **400** of the tintable windows (not shown) and wall switches **1490,** which are both in electronic communication with master window controller **1402.** In this illustrated example, master window controller **1402** can send control signals to EC device(s) **400** to control the tint level of the tintable windows having the EC device(s) **400.** Each wall switch **1490** is also in communication with EC device(s) **400** and master window controller **1402.** An end user (e.g., occupant of a room having the tintable window) can use the wall switch **1490** to control the tint level and other functions of the tintable window having the EC device(s) **400.**

In **FIG. 17****,** master window controller **1402** is depicted as a distributed network of window controllers including a master network controller **1403,** a plurality of intermediate network controllers **1405** in communication with the master network controller **1403,** and multiple pluralities of end or leaf window controllers **1410.** Each plurality of end or leaf window controllers **1410** is in communication with a single intermediate network controller **1405.** Although master window controller **1402** is illustrated as a distributed network of window controllers, master window controller **1402** could also be a single window controller controlling the functions of a single tintable window in other embodiments. The components of the system **1400** in **FIG. 17** may be similar in some respects to components described with respect to **FIG. 15****.** For example, master network controller **1403** may be similar to master network controller **1103** and intermediate network controllers **1405** may be similar to intermediate network controllers **1105.** Each of the window controllers in the distributed network of **FIG. 17** may include a processor (e.g., microprocessor) and a computer readable medium in electrical communication with the processor.

In **FIG. 17****,** each leaf or end window controller **1410** is in communication with EC device(s) **400** of a single tintable window to control the tint level of that tintable window in the building. In the case of an IGU, the leaf or end window controller **1410** may be in communication with EC devices **400** on multiple lites of the IGU control the tint level of the IGU. In other embodiments, each leaf or end window controller **1410** may be in communication with a plurality of tintable windows. The leaf or end window controller **1410** may be integrated into the tintable window or may be separate from the tintable window that it controls. Leaf and end window controllers **1410** in **FIG. 17** may be similar to the end or leaf controllers **1110** in **FIG. 15** and/or may also be similar to window controller **450** described with respect to **FIG. 4****.**

Each wall switch **1490** can be operated by an end user (e.g., occupant of the room) to control the tint level and other functions of the tintable window in communication with the wall switch **1490.** The end user can operate the wall switch **1490** to communicate control signals to the EC devices **400** in the associated tintable window. These signals from the wall switch **1490** may override signals from master window controller **1402** in some cases. In other cases (e.g., high demand cases), control signals from the master window controller **1402** may override the control signals from wall switch **1490.** Each wall switch **1490** is also in communication with the leaf or end window controller **1410** to send information about the control signals (e.g. time, date, tint level requested, etc.) sent from wall switch **1490** back to master window controller **1402.** In some cases, wall switches **1490** may be manually operated. In other cases, wall switches **1490** may be wirelessly controlled by the end user using a remote device (e.g., cell phone, tablet, etc.) sending wireless communications with the control signals, for example, using infrared (IR), and/or radio frequency (RF) signals. In some cases, wall switches **1490** may include a wireless protocol chip, such as Bluetooth, EnOcean, WiFi, Zigbee, and the like. Although wall switches **1490** depicted in **FIG. 17** are located on the wall(s), other embodiments of system **1400** may have switches located elsewhere in the room.

### VII. Another Example of Predictive Control Logic

**FIG. 18** is a block diagram depicting predictive control logic for a method of controlling the tint level of one or more tintable windows (e.g., electrochromic windows) in different zones of a building, according to embodiments. This logic makes predictive determinations at a time in the future that accounts for the transition time of the EC devices **400** in the tintable windows. This predictive control logic can be employed by components of system **1400** described with respect to **FIG. 17** or by components of systems of other disclosed embodiments. In the illustrated example, a portion of the predictive control logic is performed by window controller **1410,** another portion is performed by network controller **1408,** and the logic in Module 1 **1406** is performed by a separate component from the window controller **1410** and network controller **1408.** Alternatively, Module **1 1406** may be separate logic that may or may not be loaded onto the window controller **1410.**

In **FIG. 18****,** the portions of the predictive control logic employed by window controller **1410** and Module **1 1406** are managed by BMS **1407.** BMS **1407** may be similar to BMS **1100** described with respect to **FIG. 15****.** BMS **1407** is in electronic communication with window controller **1410** through a BACnet Interface **1408.** In other embodiments, other communications protocol may be used. Although not shown in **FIG. 18****,** Module 1 **1406** is also in communication with BMS **1407** through BACnet Interface **1408.** In other embodiments, the predictive control logic depicted in **FIG. 18** may operate independently of a BMS.

Network controller **1408** receives sensor readings from one or more sensors (e.g., an outside light sensor) and may also convert the sensor reading into W/m². The network controller **1408** is in electronic communication with the window controller **1410** via either CANbus or CANOpen protocol. The network controller **1408** communicates the converted sensor readings to the window controller **1410.** Network controller **1408** may be similar to either the intermediate network controller **1405** or the master network controller **1403** of **FIG. 17****.**

In **FIG. 18****,** the portion of the predictive control logic employed by window controller **1410** includes a master scheduler **1502.** The master scheduler **1502** includes logic that allows a user (e.g., building administrator) to prepare a schedule that can use different types of control programs at different times of day and/or dates. Each of the control programs includes logic for determining a tint level based on or more independent variables. One type of control program is simply a pure state. A pure state refers to particular level of tint (e.g., transmissivity = 40%) that is fixed during a certain time period, regardless of other conditions. For example, the building manager may specify that the windows are clear after 3 PM every day. As another example, building manager may specify a pure state for the time period between the hours of 8 PM to 6 AM every day. At other times of day, a different type of control program may be employed, for example, one employing a much greater level of sophistication. One type of control program offering a high level of sophistication. For example, a highly sophisticated control program of this type includes predictive control logic described in reference to **FIG. 18** and may include the implementation of one or more of the logic Modules A, B, and C of Module 1 **1406.** As another example, another highly sophisticated control program of this type includes predictive control logic described in reference to **FIG. 18** and may include the implementation of one or more of the logic Modules A, B, and C of Module 1 **1406** and Module D described later in this Section VII. As another example, another highly sophisticated control program of this type is the predictive control logic described in reference to **FIG. 7** and includes full multi-module implementation of logic Modules A, B, and C described in reference to **FIGS. 8****,** **9****,** and **12****.** In this example, the predictive control logic uses sensor feedback in Module C and solar information in Modules A and B. Another example of a highly sophisticated control program is the predictive control logic described in reference to **FIG. 7** with partial logic module implementation of one or two of the logic Modules A, B, and C described in reference to **FIGS. 8****,** **9****,** and **12****.** Another type of control program is a threshold control program that relies on feedback from one or more sensors (e.g., photosensors) and adjusts the tint level accordingly without regard to solar position. One of the technical advantages of using master scheduler **1502** is that the user can select and schedule the control program (method) being used to determine the tint level.

Master scheduler **1502** runs the control programs in the schedule according to time in terms of the date and time of day based on a 24-hour day. Master scheduler **1502** may determine the date in terms of a calendar date and/or the day of the week based on a 7-day week with five weekdays (Monday through Friday) and two weekend days (Saturday and Sunday). Master scheduler **1502** may also determine whether certain days are holidays. Master scheduler **1502** may automatically adjust the time of day for daylight savings time based on the location of the tintable windows, which is determined by site data **1506.**

In one embodiment, master scheduler **1502** may use a separate holiday schedule. The user may have determined which control program(s) to use during the holiday schedule. The user may determine which days will be included in the holiday schedule. Master scheduler **1502** may copy the basic schedule set up by the user and allow the user to set up their modifications for the holidays in the holiday schedule.

When preparing the schedule employed by master scheduler **1502,** the user may select the zone or zones (Zone Selection) of the building where the selected program(s) will be employed. Each zone includes one or more tintable windows. In some cases, a zone may be an area associated with a space type (e.g., offices having a desk at a particular position, conference rooms, etc.) or may be associated with multiple space types. For example, the user may select Zone 1 having offices to: 1) Monday through Friday: heat up at 8 am in morning to 70 degrees and turn on air conditioning to at 3 pm in afternoon to keep temperature in offices to 80 degrees, and then turn off all air conditioning, and heat at 5 pm during weekdays, and 2) (Saturday and Sunday) turn off heat and air conditioning. As another example, the user may set Zone 2 having a conference room to run the predictive control logic of **FIG. 18** including full-module implementation of Module 1 using all of the logic Module A, B, and C. In another example, the user may select a Zone 1 having conference rooms to run Module 1 from 8AM to 3PM and a threshold program or pure state after 3 PM. In other cases, a zone may be the entire building or may be one or more windows in a building.

When preparing the schedule with programs that may use sensor input, the user may also be able to select the sensor or sensors used in the programs. For example, the user may select a sensor located on the roof or a sensor located near or at the tintable window. As another example, the user may select an ID value of a particular sensor.

The portion of the predictive control logic employed by window controller **1410** also includes a user interface **1504** in electronic communication with master scheduler **1502.** User interface **1504** is also in communication with site data **1506,** zone/group data **1508,** and sense logic **1516.** The user may input their schedule information to prepare the schedule (generate a new schedule or modify an existing schedule) using user interface **1504.** User interface **1504** may include an input device such as, for example, a keypad, touchpad, keyboard, etc. User interface **1504** may also include a display to output information about the schedule and provide selectable options for setting up the schedule. User interface **1504** is in electronic communication with a processor (e.g., microprocessor), which is in electronic communication with a computer readable medium (CRM). Both the processor and CRM are components of the window controller **1410.** The logic in master scheduler **1502** and other components of the predictive control logic may be stored on the computer readable medium of window controller **1410.**

The user may enter their site data **1506** and zone/group data **1508** using user interface **1504.** Site data **1506** includes the latitude, longitude, and GMT Offset for the location of the building. Zone/group data includes the position, dimension (e.g., window width, window height, sill width, etc.), orientation (e.g., window tilt), external shading (e.g., overhang depth, overhang location above window, left/right fin to side dimension, left/right fin depth, etc.), datum glass SHGC, and occupancy lookup table for the one or more tintable windows in each zone of the building. In **FIG. 18****,** site data **1506** and zone/group data **1508** is static information (i.e. information that is not changed by components of the predictive control logic). In other embodiments, this data may be generated on the fly. Site data **1506** and zone/group data **1508** may be stored on a computer readable medium of the window controller **1410.**

When preparing (or modifying) the schedule, the user selects the control program that master scheduler **1502** will run at different time periods in each of the zones of a building. In some cases, the user may be able to select from multiple control programs. In one such case, the user may prepare a schedule by selecting a control program from a list of all control programs (e.g., menu) displayed on user interface **1405.** In other cases, the user may have limited options available to them from a list of all control programs. For example, the user may have only paid for the use of two control programs. In this example, the user would only be able to select one of the two control programs paid for by the user.

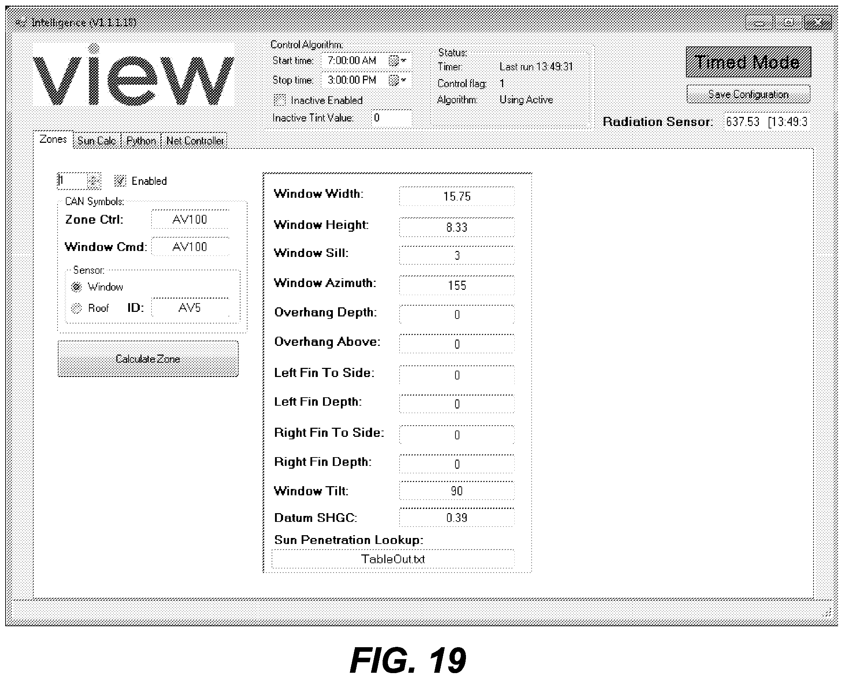

An example of a user interface **1405** is shown in **FIG. 19****.** In this illustrated example, the user interface **1405** is in the form of a table for entering schedule information used to generate or change a schedule employed by the master scheduler **1502.** For example, the user can enter the time period into the table by entering start and stop times. The user can also select a sensor used by a program. The user can also enter Site data **1506** and Zone/Group Data **1508.** The user can also select an occupancy lookup table to be used by selecting "Sun Penetration Lookup."

Returning to **FIG. 18****,** the portion of the predictive control logic employed by window controller **1410** also includes time of day (look ahead) logic **1510.** Time of day (look ahead) logic **1510** determines a time in the future used by predictive control logic to make its predictive determinations. This time in the future accounts for time needed to transition the tint level of the EC devices **400** in the tintable windows. By using a time that accounts for transition time, the predictive control logic can predict a tint level appropriate for the future time at which time the EC devices **400** will have had the time to transition to the tint level after receiving the control signal. Time of day portion **1510** may estimate the transition time of EC device(s) in a representative window based on information about the representative window (e.g., window dimension, etc.) from the Zone/Group Data. Time of day logic **1510** may then determine the future time based on the transition time and the current time. For example, the future time may be equal to or greater than the current time added to the transition time.

The Zone/Group Data includes information about the representative window of each zone. In one case, the representative window may be one of the windows in the zone. In another case, the representative window may be a window having average properties (e.g., average dimensions) based on averaging all the properties from all the windows in that zone.

The predictive control logic employed by window controller **1410** also includes a solar position calculator **1512.** Solar position calculator **1512** includes logic that determines the position of the sun, Sun azimuth and Sun altitude, at an instance in time. In **FIG. 18****,** solar position calculator **1512** makes its determinations based on a future instance in time received from time of day logic **1510.** Solar position calculator **1512** is in communication with time of day portion **1510** and site data **1506** to receive the future time, latitude and longitude coordinates of the building, and other information that may be needed to make its calculation(s), such as the solar position calculation. Solar position calculator **1512** may also perform one or more determinations based on the calculated solar position. In one embodiment, solar position calculator **1512** may calculate clear sky irradiance or make other determinations from Modules A, B, and C of Module 1 **1406.**

The control logic employed by window controller **1410** also includes schedule logic **1518,** which is in communication with the sense logic **1516,** the user interface **1405,** the solar position calculator **1512,** and Module 1 **1406.** The schedule logic **1518** includes logic that determines whether to use the tint level passing through the intelligence logic **1520** from Module 1 **1406** or use another tint level based on other considerations. For example, as sunrise and sunset times change throughout the year, the user may not want to reprogram the schedule to account for these changes. The schedule logic **1518** may use the sunrise and sunset times from the solar position calculator **1512** to set an appropriate tint level before sunrise and after sunset without requiring the user to reprogram the schedule for these changing times. For example, the schedule logic **1508** may determine that according to the sunrise time received from the solar position calculator **1512** the sun has not risen and that a pre-sunrise tint level should be used instead of the tint level passed from Module 1 **1406.** The tint level determined by the schedule logic **1518** is passed to sense logic **1516.**

Sense logic **1516** is in communication with override logic **1514,** schedule logic **1518,** and user interface **1405.** Sense logic **1516** includes logic that determines whether to use the tint level passed from schedule logic **1516** or use another tint level based on the sensor data received through the BACnet interface **1408** from one or more sensors. Using the example in the paragraph above, if schedule logic **1518** determines that it the sun has not risen and passed a pre-sunrise tint level and the sensor data shows that the sun has actually risen, then sense logic **1516** would use the tint level passed from Module 1 **1406** through schedule logic **1518.** The tint level determined by sense logic **1516** is passed to override logic **1514.**

BMS **1407** and network controller **1408** are also in electronic communication with a demand response (e.g., utility company) to receive signals communicating the need for a high demand (or peak load) override. In response to receiving these signals from the demand response, BMS 1407 and/or network controller **1408** may send instructions through BACnet Interface **1408** to override logic **1514** that will process the override information from the demand response. Override logic **1514** is in communication with BMS **1407** and network controller **1408** through the BACnet Interface **1408,** and also in communication with sense logic **1516.**

Override logic **1514** allows for certain types of overrides to disengage predictive control logic and use an override tint level based on another consideration. Some examples of types of overrides that may disengage predictive control logic include a high demand (or peak load) override, manual override, vacant room override, etc. A high demand (or peak load) override defines a tint level from the demand response. For a manual override, an end user may enter the override value at a wall switch **1490** (shown in **FIG.17****)** either manually or through a remote device. A vacant room override defines an override value based on a vacant room (i.e. no occupant in the room). In this case, the sense logic **1516** may receive sensor data from a sensor (e.g., motion sensor) indicating that the room is vacant and sense logic **1516** may determine an override value and relay the override value to override logic **1514.** The override logic **1514** can receive an override value and determine whether to use the override value or use another value, such as another override value received from a source having higher priority (i.e., demand response). In some cases, the override logic **1514** may operate by steps similar to the override steps **630, 640,** and **650** described with respect to **FIG. 7****.**

The control logic employed by window controller **1410** also includes intelligence logic **1520** that can shut off one or more of Modules A **1550,** B **1558** and C **1560.** In one case, the intelligence logic **1520** may be used to shut off one or more Modules where the user has not paid for those Modules. Intelligence logic **1520** may prevent the use of certain more sophisticated features such as the penetration calculation made in Module A. In such cases, a basic logic is used that "short-circuits" the solar calculator information and uses it to calculate tint levels, possibly with the assistance of one or more sensors. This tint level from the basic logic is communicated to schedule logic **1518.**

Intelligence logic **1520** can shut off one or more of the Modules (Module A **1550,** Module B **1558** and Module C **1560**) by diverting certain communications between the window controller **1410** and Module 1 **1406.** For example, the communication between the solar position calculator **1512** and Module A **1550** goes through intelligence logic **1520** and can be diverted to schedule logic **1518** by intelligence logic **1520** to shut off Module A **1550,** Module B **1558** and Module C **1560.** As another example, the communication of tint level from Module A at 1552 to the Clear Sky Irradiance calculations at **1554** goes through intelligence logic **1520** and can be diverted instead to schedule logic **1518** to shut off Module B **1558** and Module C **1560.** In yet another example, the communication of tint level from Module B at **1558** to Module C **1560** goes through intelligence logic **1520** and can be diverted to schedule logic **1518** to shut off Module C **1560.**

Module 1 **1406** includes logic that determines and returns a tint level to the schedule logic **1518** of window controller **1410.** The logic predicts a tint level that would be appropriate for the future time provided by the time of day portion **1510.** The tint level is determined for a representative tintable window associated with each of the zones in the schedule.

In **FIG. 18****,** Module 1 **1406** includes Module A **1550,** Module B **1558** and Module C **1560,** which may have some steps that are similar in some respects to the steps performed in Modules A, B, and C as described with respect to **FIGS. 8****,** **9****,****12** and **13****.** In another embodiment, Module 1 **1406** may be comprised of Modules A, B, and C as described with respect to **FIGS. 8****,** **9****,** **12** and **13****.** In yet another embodiment, Module 1 **1406** may be comprised of Modules A, B, and C described with respect to **FIG. 14****.**

In **FIG. 18****,** Module A **1550** determines the penetration depth through the representative tintable window. The penetration depth predicted by Module A **1550** is at the future time. Module A **1550** calculates the penetration depth based on the determined position of the sun (i.e. Sun azimuth and Sun altitude) received from the solar position calculator **1512** and based on the position of the representative tintable window, acceptance angle, dimensions of the window, orientation of the window (i.e. direction facing), and the details of any exterior shading retrieved from the zone/group data **1508.**

Module A **1550** then determines the tint level that will provide occupant comfort for the calculated penetration depth. Module A **1550** uses the occupancy lookup table retrieved from the zone/group data **1508** to determine the desired tint level for the space type associated with the representative tintable window, for the calculated penetration depth, and for the acceptance angle of the window. Module A **1550** outputs a tint level at step **1552.**

The maximum clear sky irradiance incident the representative tintable window is predicted for all times in the logic **1554.** The clear sky irradiance at the future time is also predicted based on the latitude and longitude coordinates of the building and the representative window orientation (i.e. direction the window is facing) from the site data **1506** and the zone/group data **1508.** These clear sky irradiance calculations can be performed by the sun position calculator **1512** in other embodiments.

Module B **1556** then calculates new tint levels by incrementally increasing the tint level. At each of these incremental steps, the Inside Irradiance in the room based on the new tint level is determined using the equation: Inside Irradiance = Tint level SHGC x Clear Sky Irradiance. Module B selects the tint level where Inside Irradiance is less than or equal to Datum Inside Irradiance (Datum SHGC x Max. Clear sky Irradiance) and the tint level is not lighter than Tint Level from A. Module B **1556** outputs the selected tint level from B. From the Tint level from B, logic **1558** calculates the outside irradiance and the calculated skylight irradiance.

Module C **1560** makes a determination of whether a sensor reading of irradiance is less than the clear sky irradiance. If the determination result is YES, then the tint level being calculated is made incrementally lighter (clearer) until the value matches or is less than a tint level calculated as Sensor Reading x Tint Level SHGC, but not to exceed datum inside Irradiance from B. If the determination result is NO, then the tint level being calculated is made darker in incremental steps as done in Module B **1556.** Module C outputs the tint level. Logic **1562** determines that the tint level from Module C is the final tint level and returns this final tint level (Tint level from Module C) to the schedule logic **1518** of the window controller **1410.**

In one aspect, Module 1 **1406** may also include a fourth Module D that can predict the effects of the surrounding environment on the intensity and direction of sunlight through the tintable windows in the zone. For example, a neighboring building or other structure may shade the building and block some light from passing through the windows. As another example, reflective surfaces (e.g., surfaces having snow, water, etc.) from a neighboring building or other surfaces in the environment surrounding the building may reflect light into the tintable windows. This reflected light can increase the intensity of light into the tintable windows and cause glare in the occupant space. Depending on the values of the intensity and direction of sunlight predicted by Module D, Module D may modify the tint level determined from Modules A, B, and C or may modify certain determinations from Modules A, B, and C such as, for example, the penetration depth calculation or the acceptance angle of the representative window in the Zone/Group data.

In some cases, a site study may be conducted to determine the environment surrounding the building and/or one or more sensors may be used to determine the effects of the surrounding environment. Information from the site study may be static information based on predicting the reflectance and shading (surrounding) effects for a time period (e.g., a year), or may be dynamic information that can be updated on a periodic basis or other timed basis. In one case, Module D may use the site study to modify the standard acceptance angle and associated θ₁ and θ₂ (shown in **FIG. 20**) of the representative window of each zone retrieved from the Zone/group data. Module D may communicate this modified information regarding the representative windows other modules of the predictive control logic. The one or more sensors employed by Module D to determine the effects of the surrounding environment may be the same sensors used by other modules (e.g., by Module C) or may be different sensors. These sensors may be specifically designed to determine the effects of the surrounding environment for Module D.

To operate the predictive control logic shown in **FIG. 18****,** the user first prepares a schedule with details of the times and dates, zones, sensors, and programs used. Alternatively, a default schedule may be provided. Once the schedule is in place (stored), at certain time intervals (every 1 minute, 5 minutes, 10 minutes, etc.) the time of day portion **1510** determines a future time of day based on the current time and the transition time of the EC device(s) **400** in the representative window or each zone in the schedule. Using the zone/group data **1508** and site data **1506,** the solar position calculator **1512** determines the solar position at the future (look ahead) time for each representative window of each zone in the schedule. Based on the schedule prepared by the user, the intelligence logic **1520** is used to determine which program to employ for each zone in the schedule. For each zone, the scheduled program is employed and predicts an appropriate tint level for that future time. If there is an override in place, an override value will be used. If there is no override in place, then the tint level determined by the program will be used. For each zone, the window controller **1410** will send control signals with the zone-specific tint level determined by the scheduled program to the associated EC device(s) **400** to transition the tint level of the tintable window(s) in that zone by the future time.

### VIII. Example of Occupancy Lookup Table

**FIG. 20** is an illustration including an example of an occupancy lookup table. The tint level in the table is in terms of *Tᵥᵢₛ* (visible transmission). The table includes different tint levels (*Tᵥᵢₛ* values) for different combinations of calculated penetration depth values (2 feet, 4 feet, 8 feet, and 15 feet) for a particular space type and when the sun angle *θ_{Sun}* is between the acceptance angle of the window between *θ₁* = 30 degrees and *θ₂* = 120 degrees. The table is based on four tint levels including 4% (lightest), 20%, 40%, and 63%. **FIG. 20** also shows a diagram of a desk near a window and the acceptance angle of the window to sunlight having an angle *θ_{Sun}* between the angle of *θ₁* and *θ₂*. This diagram shows the relationship between the sun angle *θ_{Sun}* and the location of the desk. When the angle of the sun *θ_{Sun}* is between the angle of acceptance between *θ₁* and *θ₂*, then the sunlight could strike the surface of the desk. If the sun angle *θ_{Sun}* is between the acceptance angle between *θ₁* and *θ₂* (If *θ₁* < *θ_{Sun}* < *θ₂*) and the penetration depth meets the criteria to tint the window, then that tint level determined by the occupancy lookup table is sent to the window controller, which sends control signals to the EC devices in the window to transition the window to the determined tint level. These two angles *θ₁* and *θ₂* can be calculated or measured for each window, and stored in the zone/group data **1508** with the other window parameters for that zone.

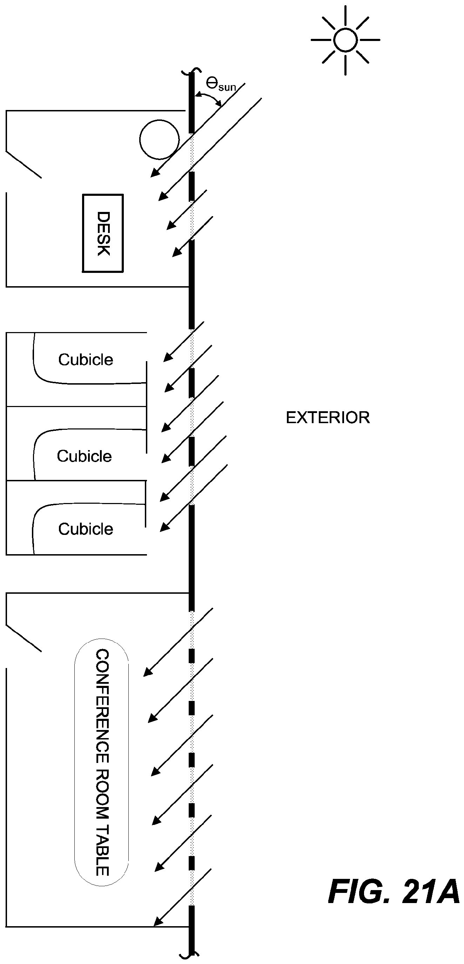

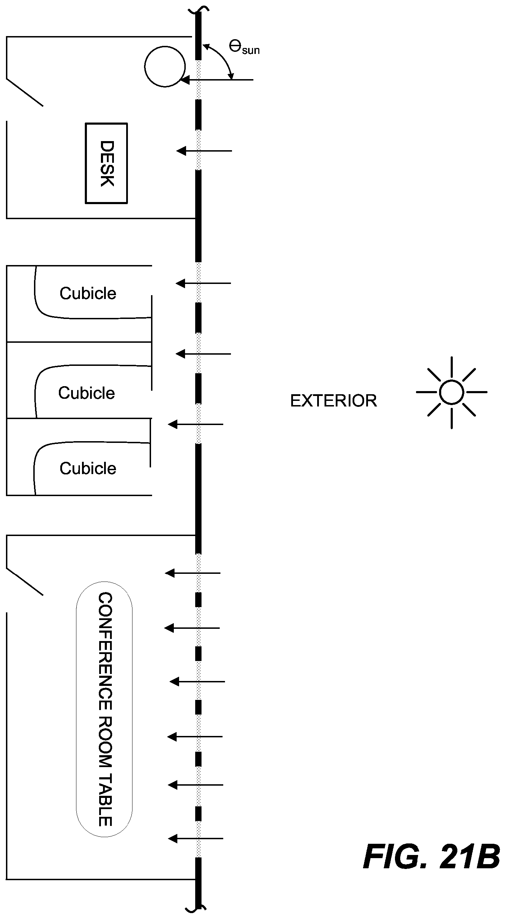

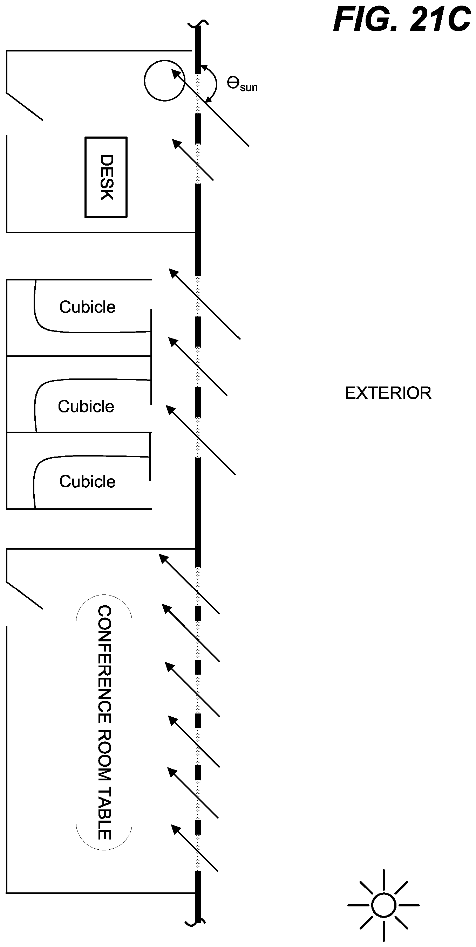

**FIGS. 21A****,** **21B****,** and **21C** are plan views of a portion of a building **2100,** according to embodiments. Building **2100** may be similar in some respects to the building **1101** in **FIG. 15** and the rooms in building **2100** may be similar in some respects to the room **500** described in **FIGS. 5****,** **6A****,** **6B****,** and **6C****.** The portion of building **2100** includes three different space types including: a desk in an office, a group of cubicles, and a conference room in the building **2100.** **FIGS. 21A****,** **21B****,** and **21C** show the sun at different angles *θ_{Sun.}* These figures also illustrate the different acceptance angles of the different types of windows in building **2100.** For example, the conference room with the largest window will have the largest acceptance angle allowing the most light into the room. In this example, the *Tᵥᵢₛ* values in an associated occupancy lookup table may be relatively low (low transmissivity) for the conference room. If however, a similar window having the same acceptance angle was instead in a solarium, then the *Tᵥᵢₛ* values in an associated occupancy lookup table may be higher values (higher transmissivity) to allow for more sunlight to enter the room.

### IX. Subsystems

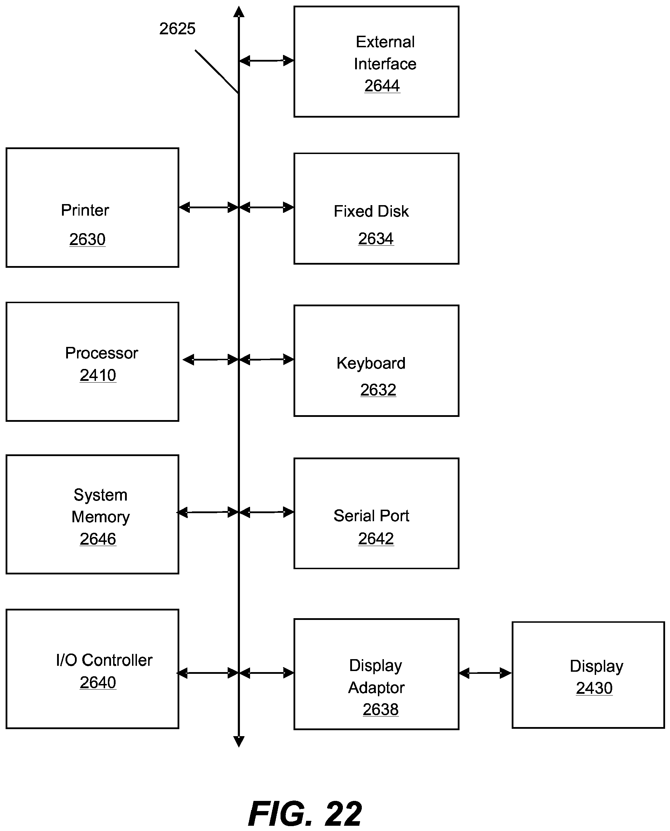

**FIG. 22** is a block diagram of subsystems that may be present in window controllers used to control the tint level or more tintable windows, according to embodiments. For example, window controllers depicted in **FIG. 17** may have a processor (e.g., microprocessor) and a computer readable medium in electronic communication with the processor.

The various components described in the Figures of other Sections may operate using one or more of the subsystems in this Section to facilitate the functions described herein. Any of the components in the Figures may use any suitable number of subsystems to facilitate the functions described herein. Examples of such subsystems and/or components are shown in a **FIG. 22****.** The subsystems shown in **FIG. 22** are interconnected via a system bus **2625.** Additional subsystems such as a printer **2630,** keyboard **2632,** fixed disk **2634** (or other memory comprising computer readable media), display **2430,** which is coupled to display adapter **2638,** and others are shown. Peripherals and input/output (I/O) devices, which couple to I/O controller **2640,** can be connected to the computer system by any number of means known in the art, such as serial port **2642.** For example, serial port **2642** or external interface **2644** can be used to connect the computer apparatus to a wide area network such as the Internet, a mouse input device, or a scanner. The interconnection via system bus allows the processor **2410** to communicate with each subsystem and to control the execution of instructions from system memory **2646** or the fixed disk **2634,** as well as the exchange of information between subsystems. The system memory **2646** and/or the fixed disk **2634** may embody a computer readable medium. Any of these elements may be present in the previously described features.

In some embodiments, an output device such as the printer **2630** or display **2430** of one or more systems can output various forms of data. For example, the system **1400** may output schedule information on a display to a user.

### X. Filter(s) for making Tinting Decisions based on Rapidly Changing Conditions

In some systems, once a decision is made to tint a tintable window to a particular end state, the window is committed to complete that transition until reaching the end state. Such systems cannot adjust the final tint state during transition, and can only wait until transition is complete. If an unsuitable end tint state is selected by these systems, the window is committed to this unsuitable tint level during the transition cycle and additionally any time that it takes to transition the window to a more appropriate tint level. Since tint/clear times take 5 to 30 minutes, for example, an unsuitable selection could tie up a window in an inappropriate tint level for a substantial period of time which could make conditions uncomfortable for the occupant.

Rapidly changing conditions (e.g., weather change such as intermittent clouds on a sunny day, a fog bank moving in or out, fog burning off to sunshine, etc.) combined with long transition times can cause some control methods to "bounce" between end tint states. In addition, such control methods can decide on an end tint state based on a condition that changes immediately after the method commits to the transition, in which case the window is locked into an unsuitable tint level until the transition is complete. For example, consider a mostly sunny day with dappled clouds. A control method may react to a drop in illumination values when a cloud passes by and when the values rebound, glare conditions could exist. Even though the cloud passes by quickly, the window is committed to transitioning to the inappropriately low end tint state for at least the duration of the transition cycle. During this time, solar radiation enters the room which could also make it uncomfortably warm for the occupant.

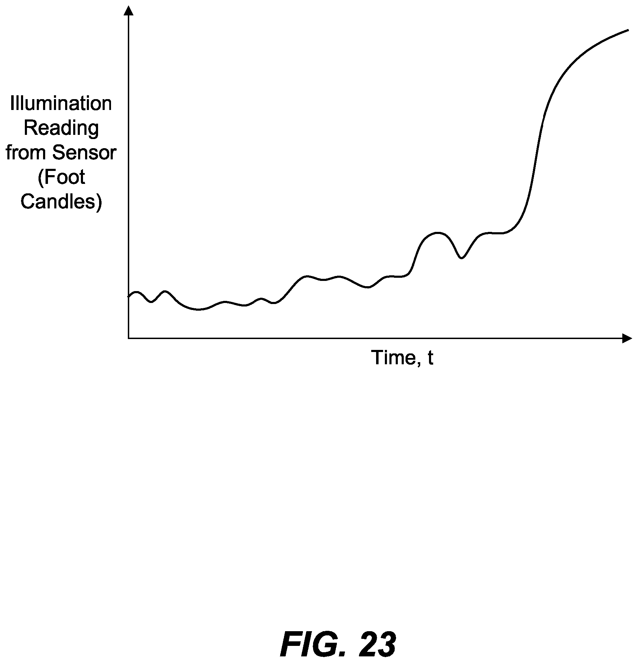

An example of a rapidly changing weather condition is a foggy morning that breaks into sunshine. **FIG. 23** is a graph of sensor illumination readings taken on a day that begins with fog that rapidly burns off to sunshine later in the day. Certain control systems would determine a low tint level at the beginning of the day based on the low illumination readings during the morning fog. This low tint level would be inappropriately low for the period of time when the weather quickly transitions to clear sky after the fog burns off. In this example, a more appropriate higher tint level for the clear sky may not be determined for a substantial period of time (e.g., 35-45 minutes after the fog burns off). Another example of a rapidly changing condition is the onset of a reflection from an object such as, for example, a parked car or an adjacent building's window.

Certain embodiments described herein include window control methods that use multiple filters to make tinting decisions that address rapidly changing conditions. In certain cases, these filters can be used to determine a more appropriate end tint state during a current transition cycle to adjust the tint level of the window to a level appropriate for current conditions. One type of filter is a box car filter (sometimes called a sliding window filter), which employs multiple sensor readings of illumination values sampled over time. A box car value is a calculated central tendency (e.g., mean, average, or median) of a number, n, of contiguous sensor samples (readings of illumination values measured over time). Typically, the sensor samples are measurements of external radiation (e.g., by a sensor located on the outside of a building). In some cases, a single sensor can be used to take sensor samples for multiple windows such as windows in a particular zone of a building. Sensors generally take readings on a periodic basis at a uniform frequency based on a sampling rate. For example, a sensor may take samples at a sampling rate in the range of about one sample every 30 seconds to one sample every twenty minutes. In one embodiment, a sensor takes samples at a rate of one sample every minute. In some cases, one or more timers may also be used by the control method to maintain the tint at a current setting determined using a box car value.

In certain aspects, control methods use a short term box car and one or more long term box cars (filters) to make tinting decisions. A short box car (e.g., box car that employs sample values taken over 10 minutes, 20 minutes, 5 minutes, etc.) is based on a smaller number of sensor samples (e.g., n=1, 2, 3, ...10, etc.) relative to the larger number of sensor samples (e.g., n=10, 20, 30, 40, etc.) in a long box car (e.g., box car that employs sample values taken over 1 hour, 2 hours, etc.). A box car (illumination) value may be based on a mean, average, median or other representative value of the sample values in the box car. In one case, a short box car value is a median value of sensor samples and a long box car value is an average value of sensor samples. Since a short box car value is based on a smaller number of sensor samples, short box car values more closely follow the current sensor readings than long box car values. Thus, short box car values respond to rapidly changing conditions more quickly and to a greater degree than the long box car values. Although both the calculated short and long box car values lag behind the sensor readings, short box car values will lag behind to a lesser extent than the long box car values.

In many cases, short box car values react more quickly than long box car values to current conditions. Based on this, a long box car filter can be used to smooth the response of the window controller to frequent short duration weather fluctuations, while a short box car does not smooth as well but responds more quickly to rapid and significant weather changes. In the case of a passing cloud condition, a control algorithm using only a long box car value will not react quickly to the current passing cloud condition. In this case, the long box car value should be used in tinting decisions to determine an appropriate high tint level. In the case of a fog burning off condition, it may be more appropriate to use a short term box car value in tinting decisions. In this case, the short term box car reacts more quickly to a new sunny condition after the fog burns off. By using the short term box car value to make tinting decisions, the tintable window quickly adjusts to the sunny condition and keeps the occupant comfortable as the fog rapidly burns off.

In certain aspects, control methods evaluate the difference between the short and long term box car values to determine which box car value to use in tinting decisions. For example, when the difference (short term box car value minus long term box car value) is positive and exceeds a first (positive) threshold (e.g., 20 W/m²), the value of the short term box car may be used to calculate a tint level (state). A positive value typically corresponds to a transition to brightening (i.e. increasing radiant intensity outside the window). In some implementations, a first timer is set when the positive threshold is exceeded, in which case a currently calculated tint level is maintained for a prescribed amount of time of the first timer. Using the first timer will favor glare control by holding the window in a more tinted state and preventing too many transitions that may annoy an occupant. On the other hand, when the difference between the short car and long car values is less than the first positive threshold or is negative, the long term box value is used to calculate the next tint state. And if the difference is negative and more negative than a second negative threshold, then a second timer may be set. In certain cases, the positive threshold values are in the range of about 1 Watts/m² to 200 Watts/m² and the negative threshold values are in the range of about -200Watts/m² to -1 Watts/m². The calculated tint value based on the long box car is maintained during a prescribed amount of the time of the second timer. Once the control method determines which box car value to use, the method will make tinting decisions based on whether the box car value is above an upper limit, below a lower limit, or between the upper and lower limits. If above the upper limit, Modules A and B (or just B in some cases) are used to determine tint level change. If above the lower limit and below the upper limit, Modules A, B, and C (or just B and C in some cases) are used to determine tint change. If below the lower limit, a defined tint level is applied (e.g., nominally clear). In certain cases, the lower limit may be in the range of 5 Watts/m² to 200 Watts/m² and the upper limit may be in the range of 50 Watts/m² to 400 Watts/m².

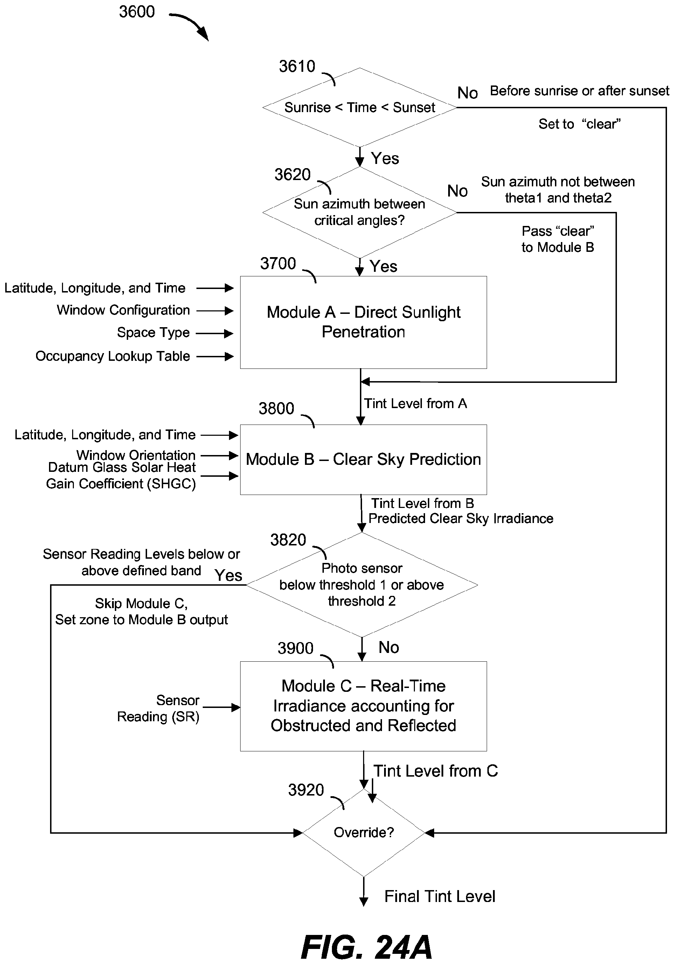

**FIG. 24A** is a flowchart **3600** showing a particular implementation of the control logic shown in **FIG. 7****.** At step **3610,** the control method determines whether the current time is between sunrise and sunset. If it is either before sunrise or after sunset at step **3610,** the control method clears the tint in the tintable window and proceeds to step **3920** to determine whether there is an override. If it is determined to be between sunrise and sunset at step **3610,** the control method determines whether the sun azimuth is between critical angles (step **3620**). Although certain control methods are described with respect to a single tintable window, it would be understood that these control methods can be used to control one or more tintable windows or a zone of one or more tintable windows.

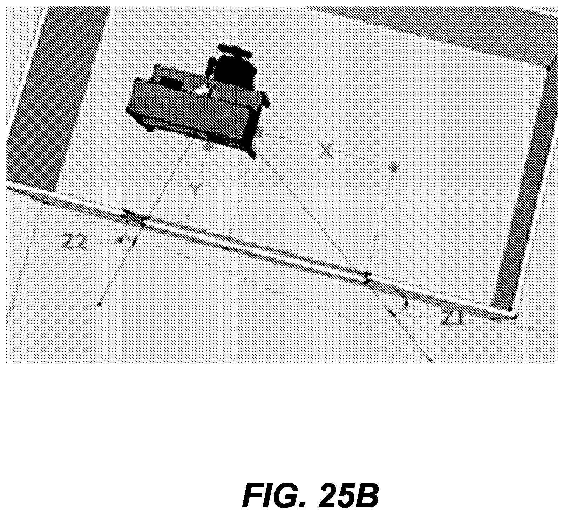

**FIG. 25B** depicts a room having a desk and critical angles of Sun shining through the tintable window in the room. If the sun's azimuth is within the critical angles, then the sun's glare is shining on an occupancy region defined by an occupant sitting at the desk. In **FIG 25B****,** the sun's azimuth is shown outside the illustrated critical angles.

Returning to the flowchart in **FIG. 24A****,** if it is determined at step **3620** that the sun azimuth is outside the critical angles, Module A is not used and Module B is used at step **3800.** If it is determined that the sun azimuth is between the critical angles, Module A is used at step **3700** and then Module B is used at step **3800.** At step **3820,** the control method determines whether the sensor value is below a threshold 1 or above a threshold 2. If the sensor value is below threshold 1 or above threshold 2, Module C (step **3900**) is not used. If the sensor value is above threshold 1 and below threshold 2, Module C is used. In either case, the control method proceeds to step **3920** to determine whether there is an override in place.

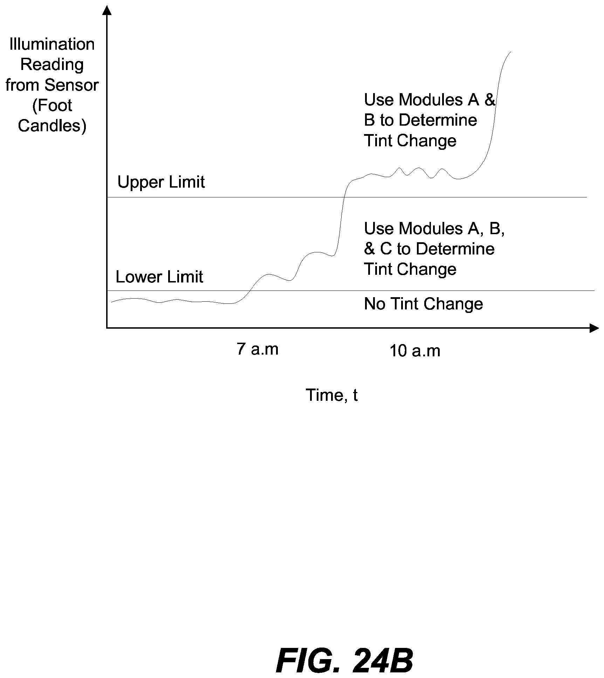

**FIG. 24B** is a graph of illumination readings from a sensor taken during a day that is cloudy (e.g., foggy) early in the day and sunny (clear sky) later in the day. As shown, the values of the illumination readings are below a lower limit before 7 a.m., rise above the lower limit and then above the upper limit, and then as the clouds burn off after 10 a.m. the illumination readings become much higher later in the day. While the sensor reads illumination levels below a lower limit (e.g., 10 Watts/m²) before 7 a.m., the amount of radiation through the tintable window is not significant enough to affect occupant comfort. In this case, a re-evaluation of tint level does not need to be made and a defined tint level (e.g., maximum window transmissivity) is applied. While the sensor reads between the lower and upper limit (e.g., 100 Watts/m²) after 7 a.m. and before 10 a.m., modules A, B, and C will be used to calculate an end tint state. While the sensor reads above the upper limit (e.g., 100 Watts/m2) after 10 a.m., modules A and B will be used to calculate an end tint state.

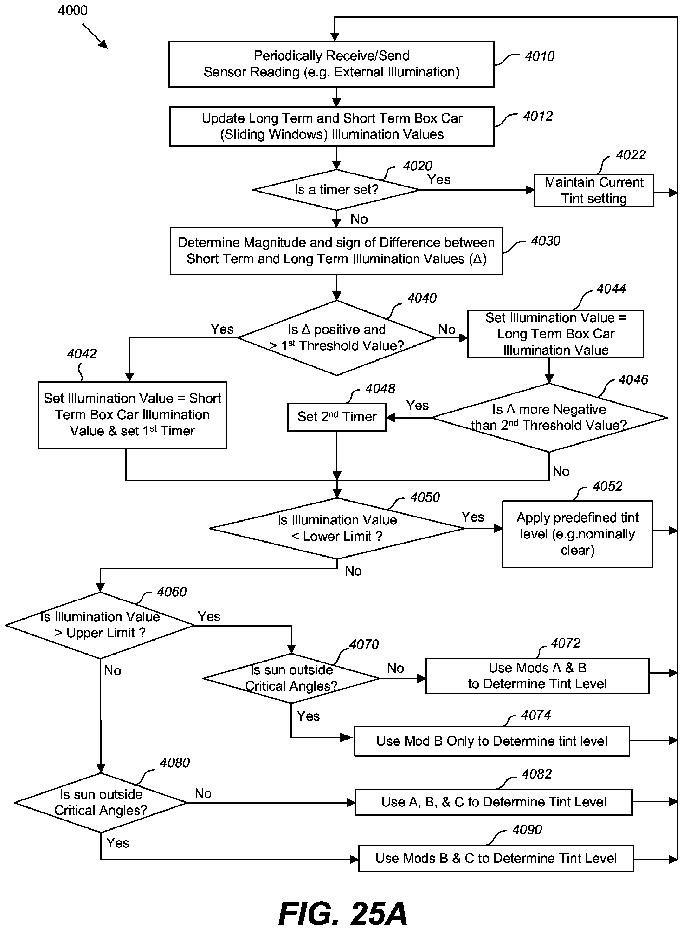

**FIG. 25A** is a flowchart **4000** of a control method that uses short and long box car values to make tinting decisions, according to some embodiments. Although the flowchart is shown using one short term box car value and one long term box car value, other embodiments may include one or more box car values such as, for example, a second long term box car value. The illustrated control method periodically receives sensor readings of illumination values and updates the long term and short term box car values. If a timer is set, then current tint level will be maintained at the current tint setting. The method evaluates the difference between the short and long term box car values to determine which box car value to use as an illumination value in tinting decisions. If the difference between the values is greater than a threshold value, then the short term box car value is used and a first timer is set during which the current tint setting will be maintained. If the difference between the values is lower than the threshold value, the long term box car value is used and a different timer may be set (depending on the magnitude of the difference). Using the previously determined box car value as the illumination value, the method determines whether the illumination value is below a lower limit and if so, a pre-defined tint level is applied (e.g., nominally clear). If the illumination value is above an upper limit, the method determines whether the sun is outside the critical angles.

**FIG. 25B** depicts a room having a desk and the critical angles of the room within which glare from the sun is shining in an occupancy region defined by an occupant sitting at the desk. In the illustration, the sun is outside the critical angles. If the method determines that the sun is outside the critical angles, only Module B is used to determine tint level. If within the critical angles, Modules A and B are used to determine tint level. If the illumination value is above the lower limit and below the upper limit, the method determines whether the sun is outside the critical angles. If outside the critical angles, Modules B and C are used to determine tint level. If within the critical angles, Modules A, B, and C are used to determine tint level.

More specifically with reference back to **FIG. 25A****,** sensor readings of illumination values (e.g., external radiation readings) are sent by the sensor and received by the processor at step **4010.** Generally, the sensor takes samples on a periodic basis at a uniform rate (e.g., one sample taken every minute). At step **4012,** the long term and short term box car illumination values are updated with the received sensor readings. In other words, the oldest readings in the box car filters are replaced with the newest readings and new box car illumination values are calculated, usually as central tendencies of readings in the box cars.

At step **4020,** it is determined whether a timer is set. If a timer is set, then the current tint setting is maintained at step **4022** and the process returns to step **4010.** In other words, the process does not calculate a new tint level. If a timer is not set, the magnitude and sign of the difference between the short term and long term box car illumination values (*Δ*) is determined at step **4030.** That is, *Δ* = Short Term Box Car value - Long term Box Car value.

At step **4040,** it is determined whether *Δ* is positive and greater than a first positive threshold value. If *Δ* is positive and greater than a first threshold value, then the illumination value for the system is set to short term box car illumination value and a first timer is set at step **4042** and the method proceeds to step **4050.** If *Δ* is positive but not greater than the first positive threshold value, then the illumination value for the system is set to the long term box car illumination value at step **4044.** At step **4046,** it is determined whether *Δ* is more negative than a second negative threshold value. If *Δ* is more negative than the second negative threshold value, then a second timer is set at **4048,** and the method proceeds to step **4050.** If not, the method directly proceeds to step **4050.**

At step **4050,** it is determined whether the set illumination value for the system is less than a lower limit. If the set illumination value for the system is less than the lower limit, a predefined tint level (e.g., nominally clear) is applied at step **4052** and the process returns to step **4010.** If the set illumination value for the system is greater than a lower limit, it is determined whether the set illumination value for the system is greater than an upper limit at step **4060.** If it is determined that the set illumination value for the system is greater than an upper limit, then it is determined whether the sun azimuth is outside the critical angles at **4070.** If the sun is not outside the critical angles, Modules A and B are used to determine a final tint level applied to the tintable window and the process returns to step **4010.** If the sun is outside the critical angles, only Module B is used to determine the final tint state at step **4074** and the process returns to step **4010.** If it is determined that the set illumination value for the system is not greater than an upper limit at step **4060,** then it is determined whether the sun is outside the critical angles at **4080.** If the sun is not outside the critical angles, Modules A, B, and C are used to determine a final tint level at step **4082** applied to the tintable window and the process returns to step **4010.** If the sun is outside the critical angles, only Modules B and C are used to determine the final tint level at step **4090** applied to the tintable window and the process returns to step **4010.**

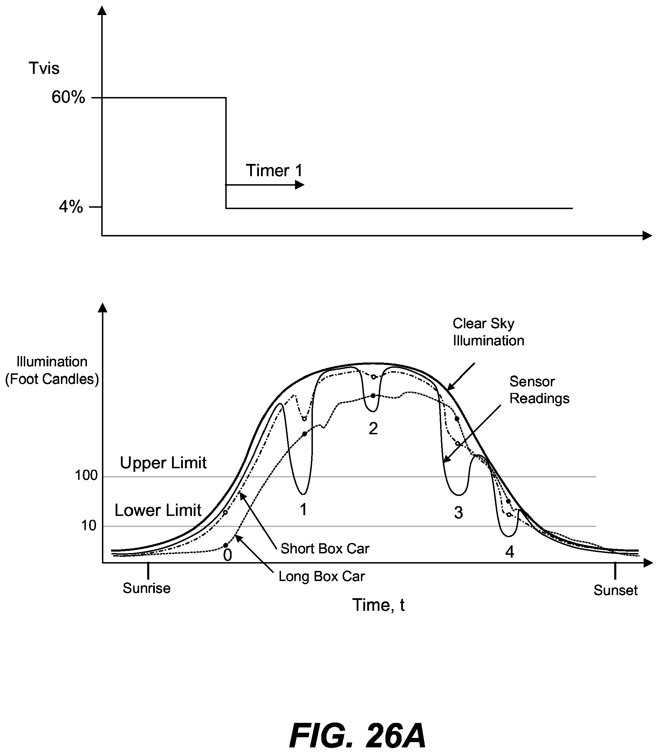

**FIG. 26A** depicts two graphs associated with sensor readings during a regular day and the associated tint states determined by the control method described with reference to **FIG. 25A****.** The bottom graph includes a bell-shaped curve of clear sky illumination values over time, *t,* for reference purposes. This particular bell-shaped curve would be an example of values measured at a south facing window (i.e. because the bell is roughly centered in the dawn to dusk time scale) with critical angles of 90 (East) to 270 (West). The bottom graph also includes a curve of sensor readings taken over time, t during a day when the weather periodically deviates from clear sky. The sensor readings are typically measurements of external radiation. The bottom graph also includes curves of updated short box car values and long box car values calculated at time, *t.* These values are usually calculated as central tendencies of the samples in the box cars updated at time, *t.* The curve of sensor readings also shows drops in illumination at the passing of four clouds 1, 2, 3, and 4, and then returning to sunshine after each of the clouds pass. The short box car curve follows the sensor reading curve and reacts quickly to the drops in illumination from the four clouds. The long box car values lag behind the sensor reading drops in illumination and do not react to the same extent as the short box car values to these drops in illumination from the clouds. The top graph shows the tint state transmission (*Tᵥᵢₛ*) through the tintable window determined by the control method at time, *t.* Until just before event 0, the positive difference between the short term box car value and the long term box car value is less than a first (positive) threshold value (e.g., 20 Watts/m²), and the illumination value is set to the updated long box car value. Since the illumination value is below the lower limit, a defined tint level (nominally clear state) associated with a *Tᵥᵢₛ* of 60% is applied. As shown, the control method applies *Tᵥᵢₛ* of 60% until the positive difference between the short term box car value and the long term box car value is greater than a first positive threshold value (e.g., 20 Watts/m²), and then the illumination value is set to the short box car value (event 0). At this time, Timer 1 is set and the tint state calculated at event 0 is maintained until Timer 1 expires just after cloud 1 passes. Since the illumination value (based on the short box car value) is greater than the lower limit and less than the high limit and the sun is within the critical angles, Modules A, B, and C are used to determine a tint level at event 0 corresponding to *Tᵥᵢₛ* of 20%. Thereafter, the value of the short term box car passes the upper level, triggering a calculation based on Modules A and B only. However, no change in tint level occurs since Timer 1 is set. Just after the time Cloud 1 passes, Timer 1 expires. From this time until just before cloud 3, the positive difference between the short term box car value and the long term box car value is greater than the first positive threshold value and the illumination value is set to the updated short term box car value. During this time, the illumination values (based on the updated short term box car values) remain above the upper limit and the sun remains within the critical angles, and so Modules A and B are again used to determine a tint level and they calculate a tint level corresponding to *Tᵥᵢₛ* of 4%. At Cloud 3, the long box car value is greater than the short box car value and the difference is now negative and so the illumination value is set to the long box car value. Since the difference is less negative than the second negative threshold value, no timer is set. Since the illumination value is greater than the upper limit and the sun is outside the critical angles, Modules A and B are again used to determine tint level to determine a tint level corresponding to *Tᵥᵢₛ* of 4%. At Cloud 4, the long box car value is again greater than the short box car value, and the difference is less negative than the negative threshold value. At this time, the illumination value is set to the updated long box car value, but no timer is set. Since the illumination value is greater than the low limit and less than the high limit and the sun is within the critical angles, Modules A, B, and C are used to determine a tint level and they calculate a tint level corresponding to a *Tᵥᵢₛ* of 4%.

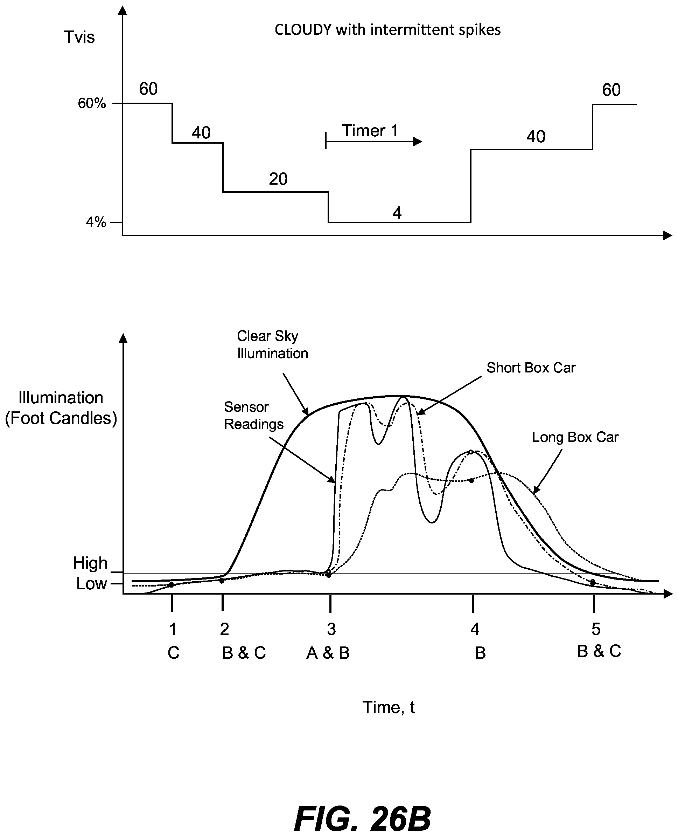

**FIG. 26B** depicts two graphs associated with sensor readings during a cloudy day with intermittent spikes and the associated tint states determined by the control method described with reference to **FIG. 25A****.** The bottom graph shows sensor readings at time, *t,* over the cloudy day. The bottom graph also includes a bell-shaped curve of clear sky illumination values over time, *t,* for reference purposes. The bottom graph also includes curves of updated short box car values and long box car values calculated at time, *t.* The curve of sensor readings shows that conditions are cloudy in the morning until point 3 when it becomes sunny for a short period with two drops before becoming cloudy again at point 4. The top graph shows the tint state transmission *Tᵥᵢₛ* through the tintable window calculated by the control method at time, *t.* Before point 1, the positive difference between the short term box car value and the long term box car value is less than the first positive threshold value, and the illumination value is set to the long box car value. Since the illumination value is below the lower limit, a predefined tint level (e.g. nominally clear) associated with a *Tᵥᵢₛ* of 60% is applied. At point 1, the difference between the short term and long term box car values is positive and less than a first positive threshold value, and the illumination value is set to the updated long box car value. In this case, the illumination value is between the lower and upper limit and it is early in the day so that the sun is outside the critical angles so that Module A does not need to be used to determine glare into the room. In this case, only Modules B and C are used and they calculate the tint level at *Tᵥᵢₛ* of 40% to darken the window. At point 2, the difference between the short term and long term box car values is positive and less than the first positive threshold value, and the illumination value is set to the updated long box car value. At this point, it is still early in the day and the sun is outside the critical angles. The illumination value is higher than it was at point 1, but still between the upper and lower limit, and Modules B and C determine a tint level at *Tᵥᵢₛ* of 20% to darken the window further. At point 3, the difference between the short term and long term box car values is positive and greater than a threshold value, and so the illumination value is set to the updated short box car value and Timer 1 is set. Since the illumination value is above the upper limit and the sun is within the critical angles, Modules A and B are used to determine increase the tint to a tint level corresponding to *Tᵥᵢₛ* of 4%. During the timer's length, the tint state will be maintained. Just before point 4, Timer 1 expires. At point 4, the positive difference between the short term and long term box car values is greater than a first positive threshold value, and the illumination value is set to the updated short box car value. The illumination value is above the upper limit and the sun is outside the critical angles at this time of day so that only Module B is used to determine a tint level corresponding to *Tᵥᵢₛ* of 40%. At point 5, the positive difference between the short term and long term box car values is less than the first threshold value, and the illumination value is set to the updated long box car value. No timer is set. At this point late in the day, the illumination value is below the lower limit and the sun is outside the crucial angles so that Modules B and C are used to determine a tint level corresponding to *Tᵥᵢₛ* of 60%.

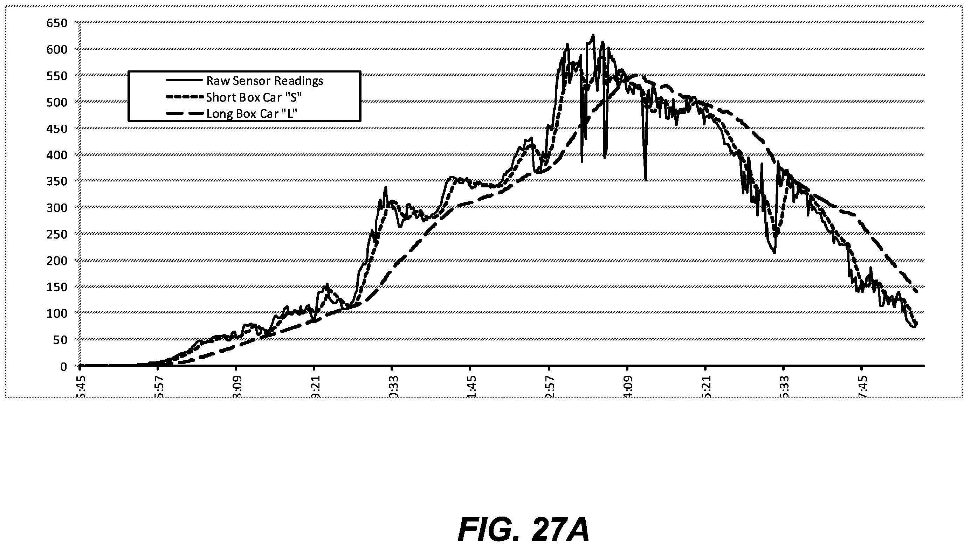

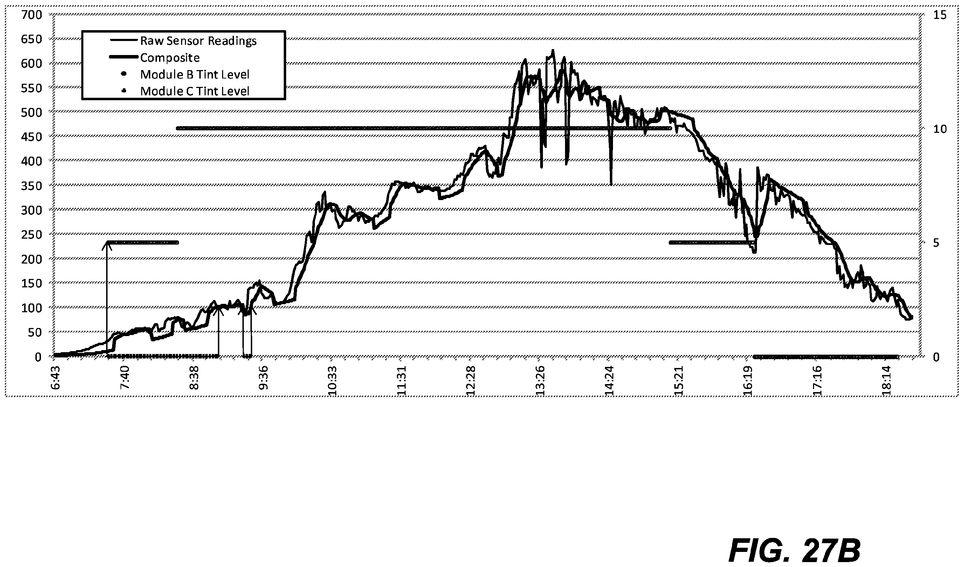

**FIG. 27A** is a plot of illumination values including sensor readings, short box car values, and long box car values determined at time, *t,* during a day. **FIG. 27B** is a plot of the sensor readings of **FIG. 27A** and associated tint level determined by Module B, and tint level determined by Module C during a day.

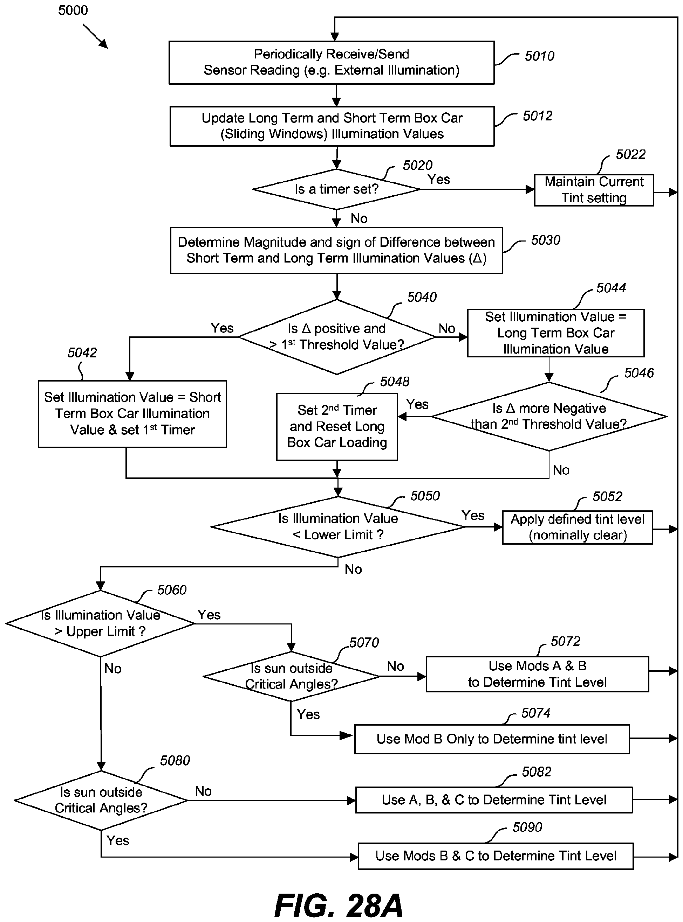

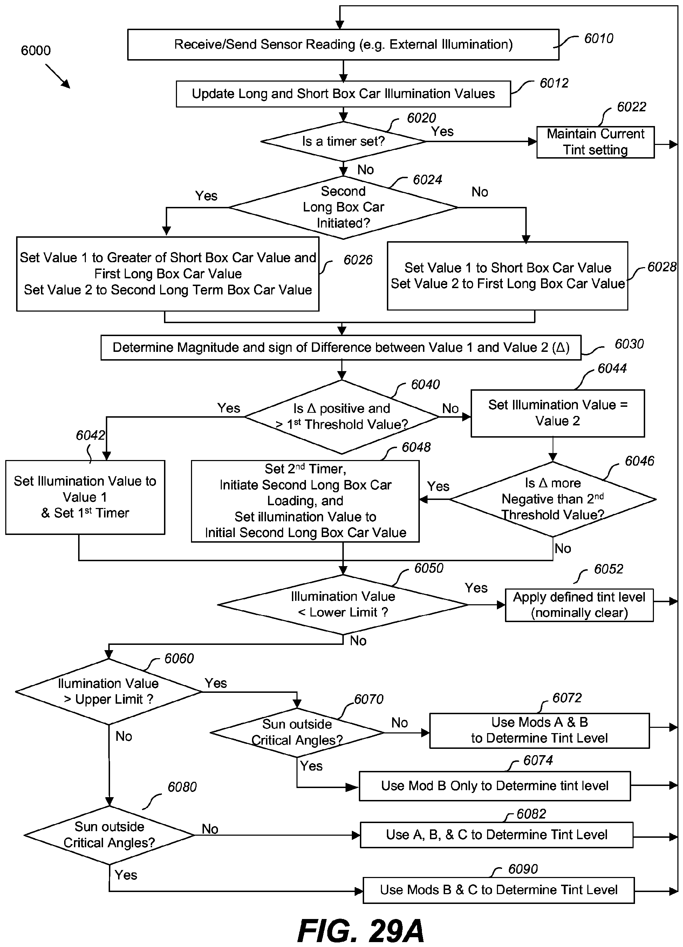

In some aspects, the long box car value is updated with sensor readings and is never reset during the day. If sensor readings were to change significantly during the day (e.g., when a storm front arrived), these long box car values would lag substantially behind the rapid change in sensor readings and would not reflect the rapid change. For example, the long box car values are significantly higher than the sensor readings after a substantial drop in external illumination. If these high long box car values are used to calculate a tint level, the windows may be over-tinted until the long box cars had time to load with more current sensor readings. In certain aspects, control methods reset the long box car after a rapid change in illumination so that the long box car can be loaded with more current sensor readings. **FIGS. 28A-B** are illustrations of control methods that reset loading of the long box car. In other aspects, control methods use a second long box car that is initiated with a significant change in illumination condition. **FIGS. 29A-B** are illustrations of control methods that have a second long box car. In these cases, the control methods can use long box car values that are closer to the current sensor readings and may avoid over tinting the windows after a rapid drop in illumination.

**FIG. 28A** is a flowchart **5000** of a control method that resets loading of a long box car, according to embodiments. The long box car is reset and starts reloading current sensor readings after a rapid change in sensor readings. The long box car is reset when the negative difference between the short box car value and long box car value is more negative than a second negative threshold value. That is, a negative difference that is more negative than the negative threshold value indicates a rapid change in sensor readings. At the same time, the control method starts a second timer. The control method uses the reset long box car value to calculate tint level that will be maintained during the second timer. Since the long box car starts reloads with new sensor readings when the conditions rapidly change, the long box car value closely follows sensor readings for a time and the control method will determine tint levels that closely correspond to the current changing sensor readings after the rapid change.

More specifically with reference to **FIG. 28A****,** sensor readings are sent by the sensor and received by the processor at step **5010.** At step **5012,** the long term and short term box car illumination values are updated with more current sensor readings received. If it is determined at step **5020** that a timer is set, then the current tint setting is maintained at step **5022** and the process returns to step **5010.** If is determined that a timer is not set at step **5020,** then the magnitude and sign of the difference between the short term and long term box car illumination values (*Δ*) is determined at step **5030.** That is, *Δ* = Short Term Box Car value - Long Term Box Car value. If it is determined at step **5030** that *Δ* is positive and greater than a first positive threshold value, then the illumination value is set to the short term box car illumination value, a first timer is set at step **5042,** and the method proceeds to step **5050.** If it is determined at step **5030** that *Δ* is positive and less than the positive threshold value or is a negative value, then the illumination value is set to the long term box car illumination value at step **5044.** At step **5046,** it is determined whether *Δ* is more negative than a second negative threshold value. If *Δ* is more negative than the second threshold value, this is an indication of a significant drop in illumination. In this case, a second timer is set and the long box car is reset (emptied of values) at step **5048** to start loading again, and the method proceeds to step **5050.** If *Δ* is not more negative than the second negative threshold value, the method directly proceeds to step **5050.** At step **5050,** it is determined whether the set illumination value is less than a lower limit. If less than the lower limit, a defined tint level (e.g., nominally clear) is applied at step **5052** and the process returns to step **5010.** If the set illumination value for the system is greater than a lower limit, it is determined whether the set illumination value for the system is greater than an upper limit at step **5060.** If it is determined that the set illumination value for the system is greater than an upper limit, then it is determined whether the sun azimuth is outside the critical angles at **5070.** If the sun is within the critical angles, Modules A and B are used to determine a final tint level applied to the tintable window and the process returns to step **5010.** If the sun is outside the critical angles, only Module B is used to determine the final tint state at step **5074** and the process returns to step **5010.** If it is determined that the set illumination value for the system is not greater than an upper limit at step **5060,** then it is determined whether the sun is outside the critical angles at **5080.** If the sun is within the critical angles, Modules A, B, and C are used to determine a final tint level at step **5082** applied to the tintable window and the process returns to step **5010.** If the sun is outside the critical angles, only Modules B and C are used to determine the final tint level at step **5090** applied to the tintable window and the process returns to step **5010.**

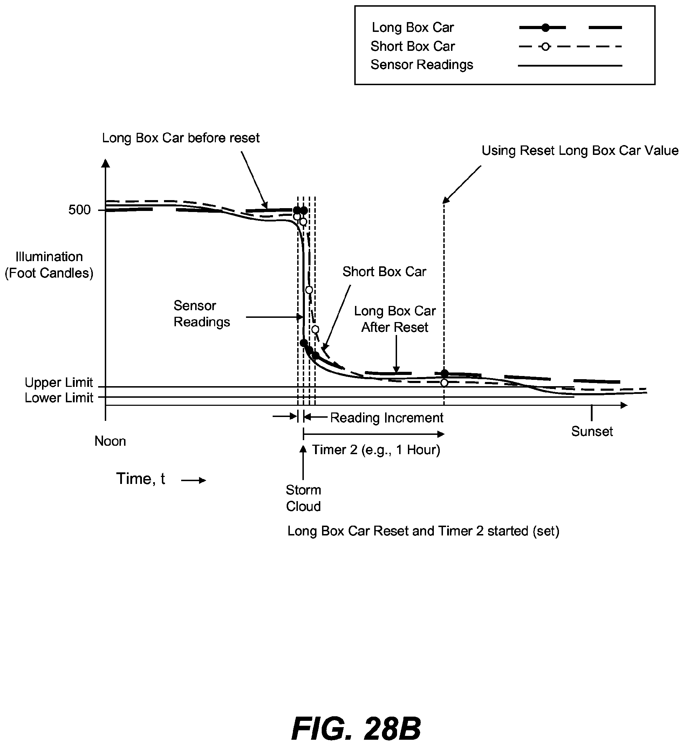

**FIG. 28B** illustrates a scenario of sensor readings and box car values during time, *t,* during a portion of a day. This scenario assumes a bright sunny day (500 W/m²) at noon and the box car curves are tracking together for the most part at this time, with calculations going on every 5 minutes. At the first vertical dotted black line (regular 5 min interval calculations) there has been a slight drop in sensor readings and the short term box car value is slightly higher than the long term box car value, which lags behind the sensor readings. Since the negative difference between the short term and long term values is more negative than the negative threshold value, the long term box car value is used to determine tint level. At the very next calculation, the sensor readings are showing a large drop in external illumination (e.g., storm front arrived). The negative difference is more negative than the negative threshold value and the control method triggers a 1 hour timer (changing condition has caused this event, made delta sufficient to trigger the timer) and the long box car is reset. The control method sets the illumination value to the reset long box car value to determine a tint level to use during the timer period. Since the long term box car value is above the upper limit and the sun is within the critical angles, Modules A and B are used to determine the tint level based on the reset long box car value. At the end of the second timer period, the negative difference between short box car and long box car values is more negative than the negative threshold value so that the illumination is set to the long term box car value with readings taken since the reset.

At the end of the second timer period, if the logic did not reset the long box car, the second timer would have been again implemented and the long box car value would have been used during the time period (as before). As you can see, this would have inappropriately over-tinted the window since the current sensor readings (and associated short box car value) show it is a dull day and the window does not need to be tinted as high as long box car value would seem to indicate. In this scenario, a long term box car is reset at the timer start period. In other words, once the timer is triggered, this simultaneously triggers resetting the long box car to start loading with new sensor data. Using this reset logic, at the end of the second timer, the short term box car value is compared with the reset long box car value and the delta would more closely reflect current sensor readings.

**FIG. 29A** is a flowchart **6000** of a control method that initiates a second long box car when there is a rapid change in sensor readings. The values of the newly-initiated second long box car closely track the sensor readings during the rapid change. The first long box car lags behind the sensor readings.

With reference back to **FIG. 29A****,** sensor readings of illumination values are sent by the sensor and received by the processor at step **6010.** At step **6012,** box car illumination values are updated with the received sensor readings. If it is determined at step **6020** that a timer is set, then the current tint setting is maintained (i.e. no calculation of new tint level) at step **6022** and the process returns to step **6010.** If is determined that a timer is not set at step **6020,** it is determined whether a second long box car has been initiated at step **6024.** If a second long box car is determined to be initiated at step **6024,** Value 1 is set to the greater of the short box car and the first long box car illumination values and Value 2 is set to the second long box car illumination value. If a second long box car has not been initiated, Value 1 is set to the short box car illumination value and Value 2 is set to the second long box car illumination value. At step **6030,** the magnitude and sign of the difference between Value 1 and Value 2 (*Δ*) is determined. If it is determined at step **6030** that *Δ* is positive and greater than a first positive threshold value, then at step **6042,** the illumination value is set to Value 1 and a first timer is set, and then the method proceeds to step **6050.** If it is determined at step **6030** that *Δ* is positive and less than the first positive threshold value or *Δ* is a negative value, then the illumination value is set to Value 2 at step **6044.** At step **6046,** it is determined whether *Δ* is more negative than a second negative threshold value. If *Δ* is more negative than the second negative threshold value, then there has been a significant drop in illumination. In this case, a second timer is set, a second long box car is initiated, and the illumination value is set to the initial value of the second long box car at step **6048,** and the method proceeds to step **6050.** If *Δ* is not more negative than the second threshold value, the method directly proceeds to step **6050.** At step **6050,** it is determined whether the set illumination value is less than a lower limit. If less than the lower limit, a defined tint level (e.g., nominally clear) is applied at step **6052** and the process returns to step **6010.** If the set illumination value for the system is greater than a lower limit, it is determined whether the set illumination value for the system is greater than an upper limit at step **6060.** If it is determined that the set illumination value for the system is greater than an upper limit, then it is determined whether the sun azimuth is outside the critical angles at **6070.** If the sun is not outside the critical angles, Modules A and B are used to determine a final tint level applied to the tintable window and the process returns to step **6010.** If the sun is outside the critical angles, only Module B is used to determine the final tint state at step **6074** and the process returns to step **6010.** If it is determined that the set illumination value for the system is not greater than an upper limit at step **6060,** then it is determined whether the sun is outside the critical angles at **6080.** If the sun is not outside the critical angles, Modules A, B, and C are used to determine a final tint level at step **6082** applied to the tintable window and the process returns to step **6010.** If the sun is outside the critical angles, only Modules B and C are used to determine the final tint level at step **6090** applied to the tintable window and the process returns to step **6010.**

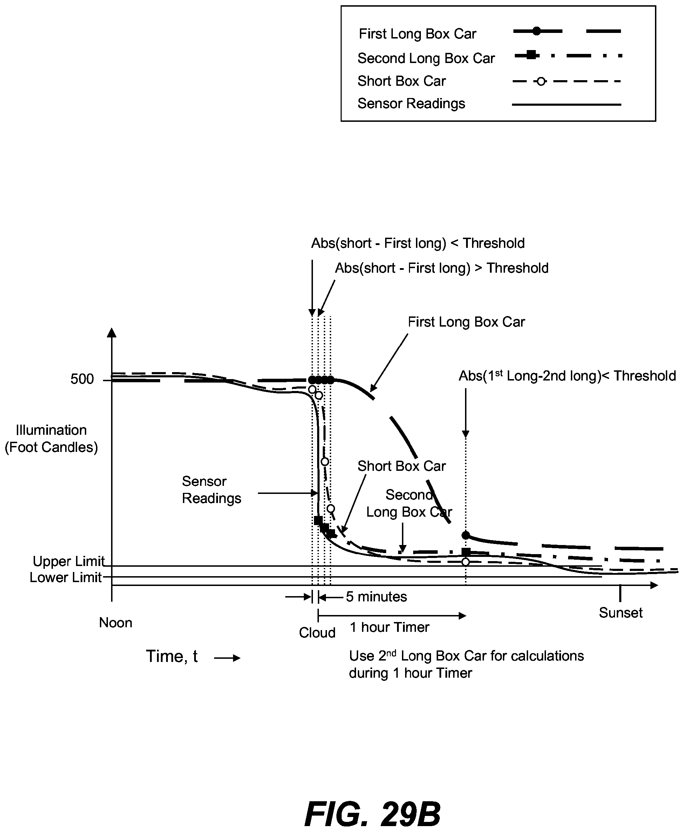

**FIG. 29B** illustrates a scenario of sensor readings and box car values during time, *t,* during a portion of a day. This scenario assumes a bright sunny day (500 W/m²) at noon and the box car curves are tracking together for the most part at this time, with calculations going on every 5 minutes. At the first vertical black line (regular 5 min interval calculations) there has been a slight drop in sensor readings and the short term box car value is slightly higher than the first long term box car value, which lags behind the sensor readings. Since the negative difference between the short and first long box car values is below the threshold value, the first long box car value is used to determine tint level. At the very next calculation, the sensor readings are showing a larger drop in external illumination. In this case, the negative difference is more negative than the negative threshold value and the control method triggers a 1 hour timer (changing condition has caused this event, made delta sufficient to trigger the timer) and a second long box car is initiated. In addition, the illumination value is set to the initial second long box car value. Since this initial second long term box car value is above the upper limit and the sun is within the critical angles, Modules A and B are used to determine the tint level based on the initial second long box car value. At the end of the second timer period, the first long box car value is greater than the short box car value and the positive difference between the second long box car value and first long box car value is below the first threshold value. The control method uses the first long box car illumination value to determine a tint level that will be used during the first timer.

In certain embodiments, Module A may increase tint in a window if calculated direction of solar radiation through the window is within critical acceptance angles associated with a glare scenario in an occupied area of the room with the window. The direction of solar radiation is calculated based on Sun azimuth and/or Sun altitude. **FIG. 25B****,** for example, shows critical acceptance angles, **Z1** and **Z2** associated with a desk in a room. In this example, when the sun is located in a position that provides solar radiation at an azimuth angle within the critical acceptance angles, **Z1** and **Z2**, solar radiation is generating glare onto an area occupied by the desk. In response, Module A may send a control signal to increase tint state in the window to provide comfort from the glare. Outside the critical acceptance angles, **Z1** and **Z2**, the direct parallel rays of solar radiation do not impinge on the desk area and Module A may return a control command of "clear tint state." Another example of a set of critical acceptance angles, ***θ₁*** and ***θ₂***, associated with Sun azimuth is shown in **FIG. 20****.** In some cases, two sets of critical angles associated separately with Sun Azimuth and Sun Altitude respectfully may be used. In these cases, Module A may turn on to increase tint state if the calculated Sun azimuth is within the first set of critical angles and the sun altitude is within the second set of critical angles.

### X1. MODULE A BASED ON THREE-DIMENSIONAL PROJECTION OF LIGHT

In certain embodiments, Module A determines whether glare is on an occupancy area by using a three-dimensional projection of light through the room from one or more apertures (e.g., tintable windows). The three-dimensional projection of light may be considered to be a volume of light in a room where the outside light directly penetrates into the room. For example, the three dimensional projection may be defined by parallel light rays from the sun through a window. The direction of the three-dimensional projection into the room is based on Sun azimuth and/or Sun altitude. The three-dimensional projection of light can be used to determine two-dimensional light projections (P-images) at intersections of one or more planes in the room. The size and shape of a P-mage from an aperture is based on the dimensions and orientation of the aperture and a directional vector of the solar radiation calculated based on the sun azimuth and/or Sun altitude. The P-images are determined based on the assumption that the sun generates parallel light rays at an infinite distance away from an aperture. With this assumption, a horizontally-oriented aperture provides a two-dimensional light projection onto a horizontal surface with the same shape and size as the actual aperture.

In certain cases, Module A determines a P-image at a particular plane of interest by calculating a P-image offset. A P-image offset can refer to an offset distance at the particular plane between a geometric center of the projected image and a vertical axis at the geometric center of the aperture. The P-image offset can be determined based on dimensions of the aperture, the sun azimuth and altitude, and the normal distance between the plane of the aperture and the plane of interest. With the P-image offset, Module A can determine a projection image by building out the projected aperture area around the P-image offset.

Once Module A determines the light projection at a particular plane, Module A determines the amount that the light projection or a glare area associated with the light projection overlaps the occupancy region (i.e. region occupied in the room). An occupancy region can refer to an area at a plane of interest (e.g., plane at a desk) that defines boundaries in space that when crossed by the three-dimensional light projection or the glare area infers a glare scenario. In some cases, an occupancy region may be all or part of a two dimensional surface (e.g., a desk top) or a volume such as a region in front of the occupant's head, possibly including a desktop. If the light projection or glare area is determined to be outside of the occupancy region, a glare scenario is determined to not exist.

In some cases, Module A may calculate a glare area at the plane of interest based on the light projected through one or more apertures. A glare area can refer to an area at a plane of interest that is impinged upon by the light projected through the one or more apertures. In some cases, Module A defines a glare area as an area between the vertical axis at the geometric center of an effective aperture and the outer boundaries of the P-image at the plane of interest. In one case, the geometric center of an aperture can refer to the centroid of the shape of the aperture or the center of mass. The glare area may be defined having different shapes such as, for example, a rectangular, circular, or annular shape, and may be in rectangular or polar coordinates. After determining the glare area from one or more apertures, Module A may then determine that a glare scenario exists if the glare area overlaps with an occupancy region.

In certain cases, Module A determines a tint level based on the calculated amount of overlap of the light projection or the glare area with the occupancy region. For example, if the light projection has any overlap with the occupancy region, Module A may turn on to increase the tint state to address the glare scenario. If the light projection does not overlap with the occupancy region, Module A may return a "clear tint state" command.

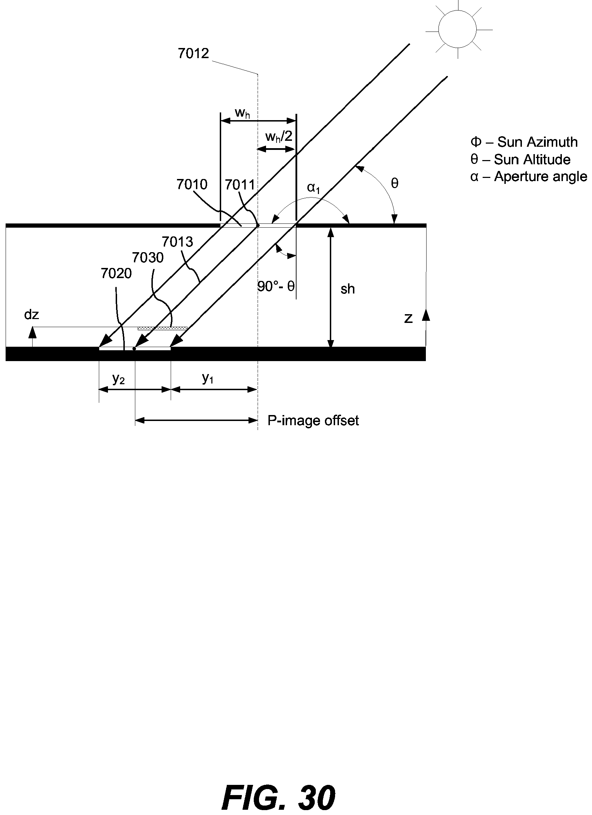

**FIG. 30** illustrates a schematic drawing of a side view of a room with a single horizontal and circular aperture **7010** in the form of a skylight in the ceiling, according to an embodiment. The room has a desk **7030** that defines the occupancy region in the room. The circular aperture **7010** has a diameter of *wₕ*. The aperture **7010** is at a Window Azimuth of α₁. The geometric center of the circular aperture **7010** is at the center of the circular aperture **7010** at *wₕ*/*2.* A vertical axis **7012** at the geometric center **7011** of the aperture **7010** is shown. Solar radiation from the sun is shown as a three dimensional cylinder of light rays projected to the floor. The Solar radiation is shown having a Sun altitude of θ. In this illustration, the light projection (P-image) **7020** of the aperture **7010** is determined at the plane of the floor as an approximation of a projection at the plane of the desk **7030** at dz. In other examples, aperture **7010** may be projected to other planes such as at the plane at the upper surface of the desk **7030.** In certain embodiments of Module A, the P-image offset may be determined by projecting the geometric center of the aperture **7010** to the plane at the floor or other plane of interest along a directional vector **7013** associated with the sun azimuth and altitude. In some cases, the light projection (P-image) **7022** of the aperture **7010** is determined by "building out" the aperture **7010** around the P-image offset. In **FIG. 30****,** the P-image **7020** is shown laterally offset at the floor by a distance of P-image offset from the vertical axis **7012.** In this example, Module A defines the glare area by the outer edges of the projection image **7020** at the plane at the floor.

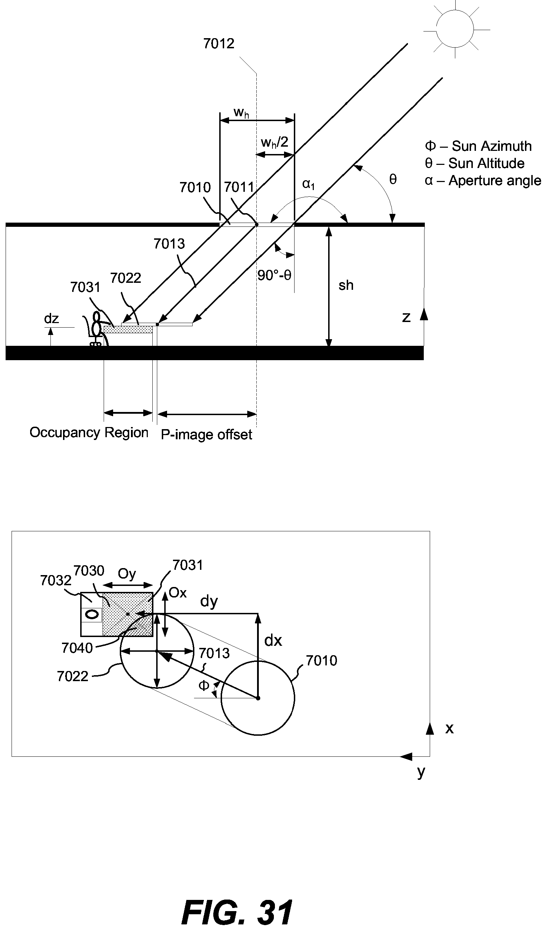

**FIG. 31** is a schematic drawing of a side view (top) and a sectional view (bottom) of the room shown in **FIG. 30** with the single horizontal circular aperture **7010** in the form of a skylight, according to an embodiment. In this example, the room has a desk **7031** that defines the occupancy region and the light projection (P-image) **7022** is determined at the plane of the desk **7031** at z-position of dz. In this example, the P-image offset is determined by projecting the geometric center of the aperture **7010** along a directional vector **7013** associated with the sun azimuth and altitude to the plane at the desk **7031.** The light projection (P-image) **7022** of the aperture **7010** may be determined by "building out" the aperture around the P-image offset. In other cases, a light projection can be determined at a plane at the floor, for example, as shown in **FIG.30**. In **FIG. 31****,** the P-image **7022** is shown laterally offset by a distance of a P-image offset from the vertical axis **7012** at the geometric center of the aperture **7010.**

In **Figure 31****,** the bottom illustration is a sectional view of the room at z = dz. In this illustration, the occupancy region **7030** has a centroid that is offset from the vertical axis **7012** by dx and dy at the plane of interest at the desk **7031** at z-position of dz. As shown in **FIG. 31****,** the calculated glare area partially overlaps the occupancy region **7030** defined by the desk **7031** at the plane of interest by an overlapping area **7040.** When the glare area exceeds the predetermined threshold (by dimension or-and/or the area) Module A may cause a tint change to reduce glare. The occupancy region **7030** has dimensions Oₓ x O_{y} in the illustration for a rectangular aperture, or may be specified as a diameter for a circle, the facet lengths of a polygon, triangle, trapezoid, or other coordinates appropriate for the aperture. In other examples, the occupancy region may include both the area defined by the desk **7031** and the area **7032** defined by the occupant at the desk **7031.** In other examples, there may be multiple occupancy regions associated with multiple occupants. The P-image position will change with the time of day following the directional vector **7013,** determined by the azimuth and altitude of the sun, and will illuminate one or more of the occupancy regions in the course of a day. When the overlap exceeds a predetermined threshold Module A will tint the glass to the prescribed value for that occupancy region and time of day.

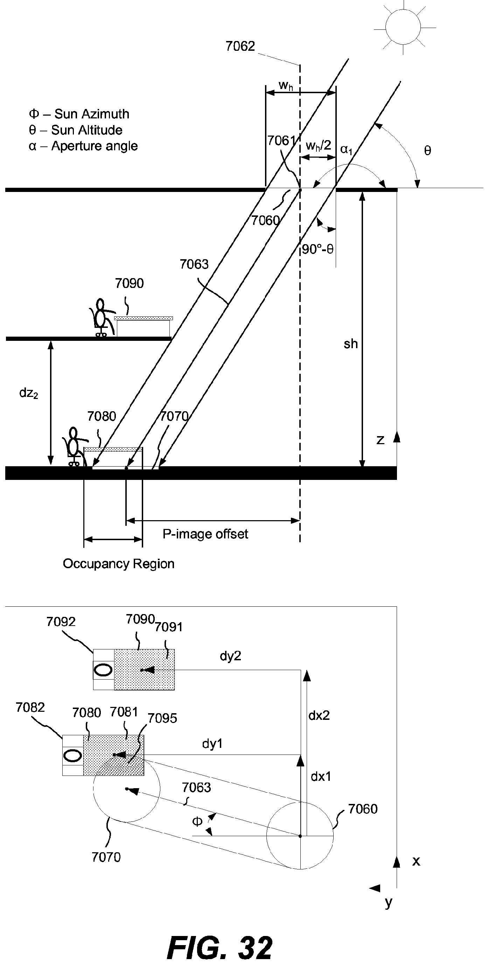

**FIG. 32** illustrates a schematic drawing of a side view (top) and a sectional view (bottom) of a room having two floors and a horizontal circular aperture **7060** in the form of a skylight, according to an embodiment. In this example, first floor has a desk **7090** and the second floor has a desk **7090.** The aperture **7060** has a geometric center **7061.** The P-image offset may be determined by projecting the geometric center **7061** along a directional vector **7063** associated with the sun azimuth and altitude to the plane of interest, which in this case is the plane at the floor of the first floor, for example, as an approximation of a projection at the plane of the desk at dz. The light projection (P-image) **7070** of the aperture **7060** is determined by building out the aperture at the P-image offset at the plane of interest. The light projection (P-image) **7070** of the aperture **7060** is shown provided at the plane of the floor and is shown laterally offset by a distance of a P-image offset from the vertical axis **7062** at the geometric center **7061.** In this illustration, the occupancy region **7091** of desk **7090** has a centroid that is offset from the vertical axis **7062** by dx2 and dy2 at the plane of the desk **7090** and the occupancy region **7081** of desk **7080** has a centroid that is offset from the vertical axis **7062** by dx1 and dylat the plane of the desk **7080.** As shown in **FIG. 32****,** the calculated glare area of the light projection **7070** partially overlaps the occupancy region **7081** defined by the desk **7080** at an overlapping area **7095.** As shown, the light projection does not provide glare onto the desk **7090** on the second floor.

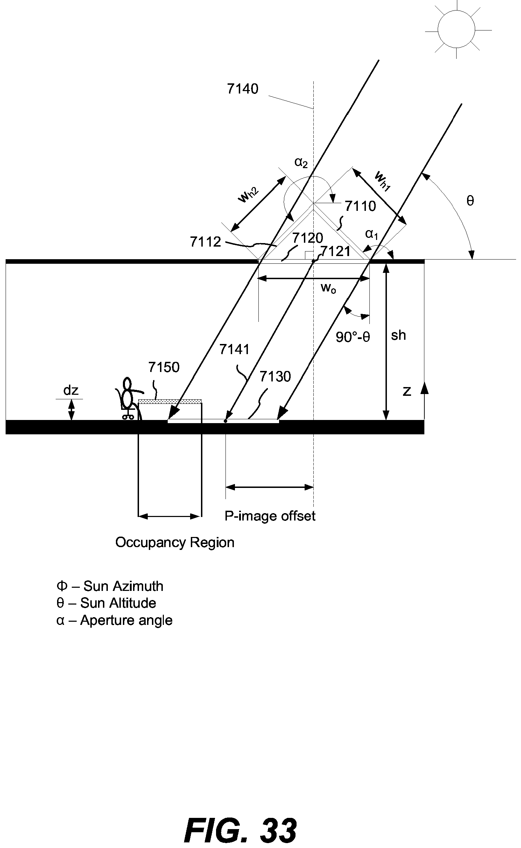

**FIG. 33** illustrates a schematic drawing of a side view of a room with a desk **7150,** a first aperture **7110,** and a second aperture **7112,** according to an embodiment. The width of the first aperture **7110** is *wₕ₁* and the width of the second aperture **7112** is *wₕ₂*. The first aperture **7110** is at an angle from the horizontal of α₁, which is 135 degrees in this case. The two apertures **7110** and **7112** have an effective aperture **7120** with a centroid **7121.** The first aperture **7110** is at an angle from the horizontal of α₁. The second aperture **7112** is at an angle from the horizontal of α₂. The P-image offset may be determined by projecting the geometric center of the effective aperture **7120** along a directional vector **7141** associated with the sun azimuth and altitude to the plane at the floor. The light projection (P-image) **7130** of the effective aperture **7120** is provided at the plane of the floor, for example, as an approximation of a projection at the plane of the desk at dz. The P-image **7130** is shown laterally offset by a distance of a P-image offset from the vertical axis **7140** at the geometric center of the effective aperture **7120.** The glare area of the P-image **7130** partially overlaps the occupancy region defined by the desk **7150.**

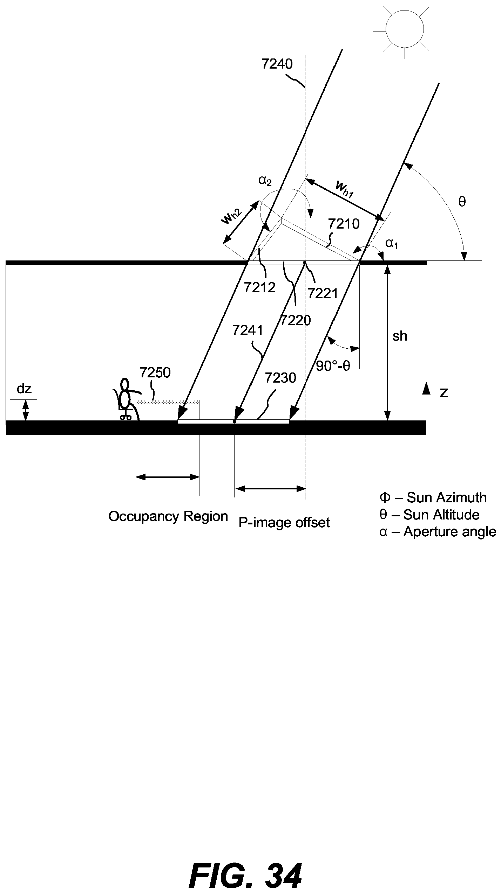

**FIG. 34** illustrates a schematic drawing of a side view of a room with a multi-faceted skylight comprising a first aperture **7210** and a second aperture **7212,** and with a desk **7250,** according to an embodiment. The width of the first aperture **7210** is *wₕ₁* and the width of the second aperture **7212** is *wₕ₂*. The first aperture **7210** is at an angle from the horizontal of α₁. The second aperture **7212** is at an angle from the horizontal of α₂. The two apertures **7210** and **7212** have an effective aperture **7220** with a geometric center **7221.** The image P-image offset may be determined by projecting the geometric center of the effective aperture **7220** along a directional vector **7241** associated with the sun azimuth and altitude to the plane of interest, which in this case is the plane of the floor, for example, as an approximation of a projection at the plane of the desk at dz. The light projection (P-image) **7230** of the effective aperture **7220** is provided at the plane of the floor. The P-image **7230** is shown laterally offset by a distance of a P-image offset from the vertical axis **7240** at the geometric center of the effective aperture **7220.** The glare area of the P-image **7230** partially overlaps the occupancy region defined by the desk **7250.**

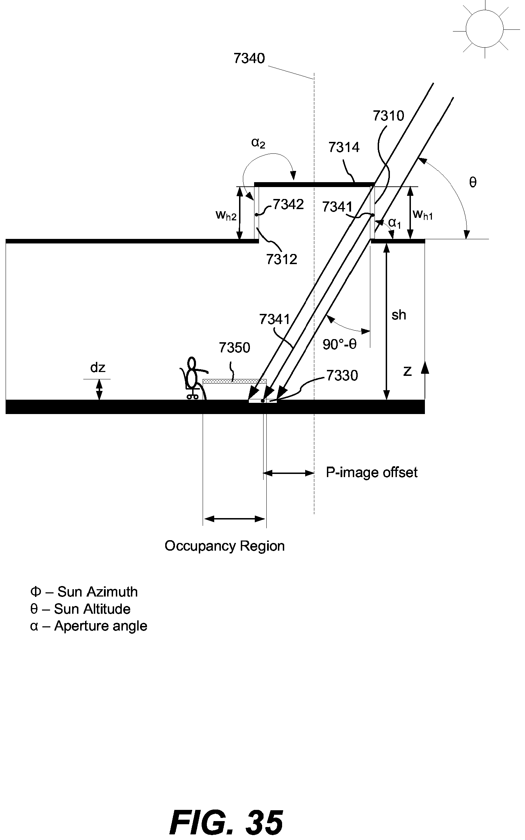

**FIG. 35** illustrates a schematic drawing of a side view of a room with a multi-faceted skylight comprising a first aperture **7310,** a second aperture **7312,** and a facet **7314** without an aperture, according to an embodiment. The room also has a desk **7350.** The two apertures **7310** and **7312** have geometric centers **7341** and **7342** respectively. The width of the first aperture **7310** is *wₕ₁* and the width of the second aperture **7312** is *wₕ₂*. The first aperture **7310** is at an angle from the horizontal of α₁, which is 90 degrees in this case. The second aperture **7212** is at an angle from the horizontal of α₂, which is 270 degrees in this case. In this illustration, a light projection (P-image) **7330** of the first aperture **7310** is provided at the plane of the floor as an approximation of a projection at the plane of the desk at dz. In this case, the facet **7314** without the aperture can block light from the first and/or second aperture **7312** depending on the direction of the solar radiation. That is, when the sun altitude θ is less than the angle α₂ of the second aperture **7321,** solar radiation rays do not directly impinge the second aperture **7321** since the facet **7314** is blocking. In the illustration, the sun altitude θ is less than the angle α₂ so that the second aperture **7312** does not receive solar radiation. In this case, the effective aperture is only based on the first aperture **7310** and the geometric center of the first aperture **7310** is used to determine the P-image offset and the projection. The P-image offset may be determined by projecting the geometric center of the aperture **7310** along a directional vector **7341** associated with the sun azimuth and altitude to floor. The P-image **7330** of the first aperture **7312** is shown laterally offset by a distance of a P-image offset from the vertical axis **7340** at the geometric center of both first aperture **7310** and the second aperture **7312.** The glare area of the P-image **7330** partially overlaps the occupancy region defined by the desk **7350.**

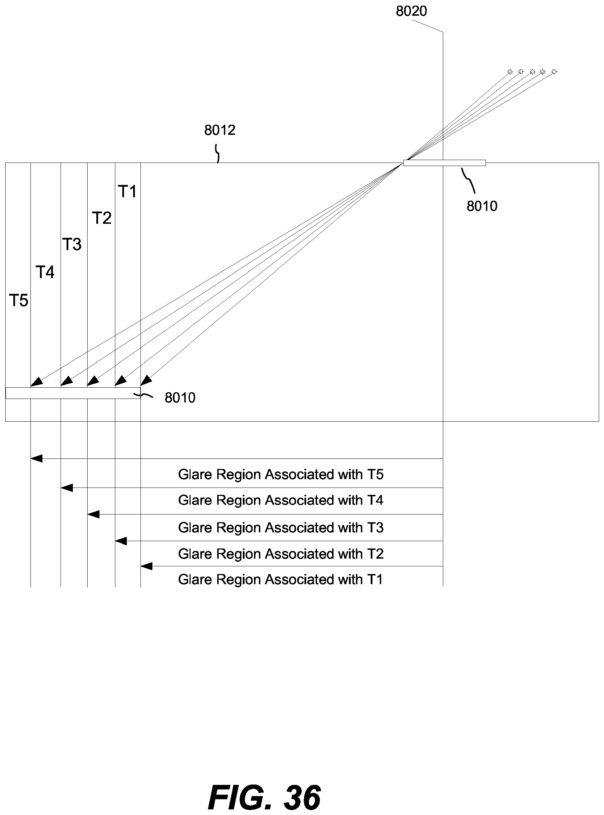

In some cases, the amount of overlap of the occupancy area with the glare area of the P-image can be used by Module A to determine an appropriate tint state. In these cases, Module A may determine higher tint states for higher levels of overlap. In some cases, the tint state is determined based on the amount of overlap. In other cases, the tint state is determined based on the percentage of overlap to the amount of occupancy area used. **FIG. 36** depicts a schematic drawing of a room with a skylight having an aperture **8010** and a desk **8012,** according to an embodiment. A vertical axis **8020** is shown through the geometric center of the aperture **8010.** In this illustration, the sun is shown at five Sun altitudes and the edges of five glare areas are shown corresponding with the five Sun altitudes associated with five directional vectors. The schematic drawing also illustrates a method of determining an appropriate tint state for different overlaps. With each increasing glare area overlapping into the occupancy region defined by the desk **8010,** the tint level increases from T1 to T5.

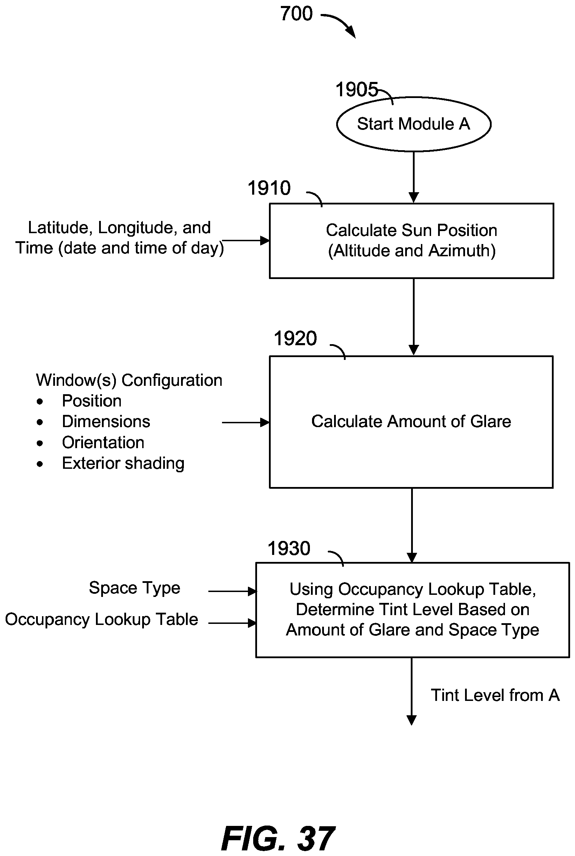

**FIG. 37** is a flowchart showing details of **step 700** of **FIG. 8** with a Module A that uses a three dimensional light projection, according to embodiments. At **step 1905,** Module A begins. At **step 1910,** the window controller **450** uses Module A to calculate the position of the sun for the latitude and longitude coordinates of the building and the date and time of day of a particular instant in time, *tᵢ*. The latitude and longitude coordinates may be input from the configuration file. The date and time of day may be based on the current time provided by the timer. The sun position is calculated at the particular instant in time, *t_{i,}* which may be in the future in some cases. In other embodiments, the position of the sun is calculated in another component (e.g., module) of the predictive control logic. The sun position is calculated in terms of Sun azimuth and/or Sun altitude.

At **step 1920,** window controller **450** uses Module A to calculate the amount of glare into a room or whether there is a glare at a particular instant in time used in **step 1910.** Module A calculates the amount of glare using a three-dimensional projection of light rays through the room from the one or more unblocked apertures (e.g., windows) based on a direction vector determined by the sun azimuth and altitude. Module A determines the P-image(s) of the one or more unblocked apertures using the directional vector and the configuration information. The configuration information may include one or more of the location of the one or more apertures (e.g. electrochromic windows), the dimensions of the one or more apertures, whether the apertures are blocked or unblocked, the orientation of each of the one or more apertures, the dimensions of the room, and any details regarding exterior shading or other structures that may be blocking the solar radiation from entering the one or more apertures. The window configuration information is input from the configuration file associated with the electrochromic window **505.** Module A determines the amount of glare or determination of glare in a room based on an intersection of the P-image of the unblocked apertures with an occupancy region at a particular plane of interest. In some cases, Module A determines which of the one or more apertures is unblocked i.e., receiving solar radiation. For example, in **FIG.35****,** the second aperture **7342** oriented at 270 degrees is blocked from receiving the solar radiation in the illustration. To determine the P-image(s) of the unblocked apertures at a particular plane of interest, Module A first determines a geometric center of the one or more unblocked apertures. In some cases, the geometric center may be the combined centroid of the shapes of the apertures. Module A then determines a P-image offset by projecting the geometric center of the one or more unblocked apertures in the direction of the directional vector of the three-dimensional projection of light based on the sun azimuth and altitude to the plane of interest. The directional vector of the three-dimensional projection of light is based on the sun azimuth and Sun altitude calculated at the particular instant in time in step **1910.** Module A determines the P-image offset based on the geometric center of the one or more unblocked apertures, the directional vector associated with the sun azimuth and altitude, and the normal distance between the one or more apertures and the plane of interest. Module A then "builds out" a P-image by generating an effective aperture area around the projected geometric center of the one or more unblocked apertures at the plane of interest. In certain cases, Module A determines the glare area based on the outer boundaries of the P-image at the plane of interest. Illustrations of glare area determined for different aperture arrangements are shown in **FIGS. 31-37****.**

At **step 1930,** a tint level is determined that will provide occupant comfort from the amount of glare from the P-image(s) of the unblocked apertures determined in **step 1920.** At step **1930,** Module A determines the amount of overlap between the occupancy area and the p-image(s) of the unblocked apertures. Based on the amount of overlap, Module A determines a desired tint level for the determined amount of overlap in the occupancy lookup table. The occupancy lookup table is provided as input from the configuration file for the particular aperture. In some cases, the amount of overlapping area or percentage of encroachment (i.e. percentage of overlapping area of the occupancy area) may be used to determine the end tint state. For example, Module A may not increase tint state if there is a little to no overlapping area (e.g. a small corner of a desk). A larger amount or percentage of overlapping area (e.g., more than 50% of a desk) may result in a higher tint state.

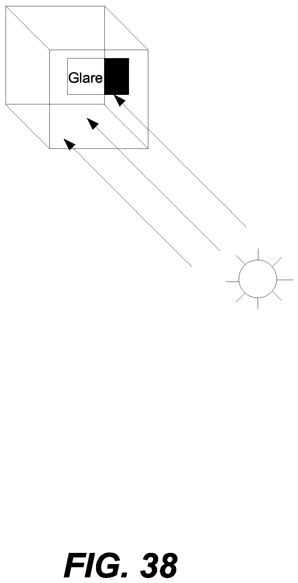

**FIG. 38** illustrates a schematic drawing of a three dimensional projection of light intersecting a portion of a surface with glare, according to embodiments.

Modifications, additions, or omissions may be made to any of the above-described predictive control logic, other control logic and their associated control methods (e.g., logic described with respect to **FIG. 18****,** logic described with respect to **FIGS. 7****,** **8****,** **9****,** **12****,** and **13****,** and logic described with respect to **FIG. 14**) without departing from the scope of the disclosure. Any of the logic described above may include more, fewer, or other logic components without departing from the scope of the disclosure. Additionally, the steps of the described logic may be performed in any suitable order without departing from the scope of the disclosure.

Also, modifications, additions, or omissions may be made to the above-described systems (e.g., system described with respect to **FIG. 17**) or components of a system without departing from the scope of the disclosure. The components may be integrated or separated according to particular needs. For example, the master network controller **1403** and intermediate network controller **1405** may be integrated into a single window controller. Moreover, the operations of the systems can be performed by more, fewer, or other components. Additionally, operations of the systems may be performed using any suitable logic comprising software, hardware, other logic, or any suitable combination of the preceding.

It should be understood that the present invention as described above can be implemented in the form of control logic using computer software in a modular or integrated manner. Based on the disclosure and teachings provided herein, a person of ordinary skill in the art will know and appreciate other ways and/or methods to implement the present invention using hardware and a combination of hardware and software.

Any of the software components or functions described in this application, may be implemented as software code to be executed by a processor using any suitable computer language such as, for example, Java, C++ or Python using, for example, conventional or object-oriented techniques. The software code may be stored as a series of instructions, or commands on a computer readable medium, such as a random access memory (RAM), a read only memory (ROM), a magnetic medium such as a hard-drive or a floppy disk, or an optical medium such as a CD-ROM. Any such computer readable medium may reside on or within a single computational apparatus, and may be present on or within different computational apparatuses within a system or network.

Although the foregoing disclosed embodiments have been described in some detail to facilitate understanding, the described embodiments are to be considered illustrative and not limiting. It will be apparent to one of ordinary skill in the art that certain changes and modifications can be practiced within the scope of the appended claims.

## Claims

1. A method of controlling tint of one or more tintable windows to account for occupancy comfort in a room of a building, the method comprising:
determining an overlap between an occupancy region of the room and an intersection of a three-dimensional projection of light through the one or more tintable windows with a plane of interest in the room, the three-dimensional projection of light being defined by parallel light rays passing through the one or more tintable windows;
using the overlap to determine a tint level for the one or more tintable windows; and
providing instructions to transition tint of the one or more tintable windows from a current tint level to the tint level determined.

2. The method of claim 1, wherein the instructions are provided over a network.

3. A controller for controlling tint of one or more tintable windows to account for occupancy comfort in a room, the controller comprising a processor configured to:
determine an intersection of a three-dimensional projection of light through the one or more tintable windows with a plane of interest in the room, the three-dimensional projection of light being defined by parallel light rays passing through the one or more tintable window;
determine an overlap of the intersection with an occupancy region of the room;
use the overlap determined to determine a tint level for the one or more tintable windows; and
provide instructions to transition tint of the one or more tintable windows from a current tint level to the tint level determined.

4. The controller of claim 3, further comprising a pulse width modulator in communication with the processor and with the one or more tintable windows over a network, the pulse width modulator configured to receive the tint level determined from the processor and send a signal with tint instructions over the network to transition the current tint of the one or more tintable windows to the tint level determined.

5. The method of claim 1, or the controller of claim 3, wherein the three-dimensional projection is defined by parallel light rays from a sun passing through the one or more tintable windows.

6. The method of claim 1, or the controller of claim 5, wherein determining the three-dimensional projection of light through the one or more tintable windows comprises determining the direction of the parallel light rays passing through the windows using an azimuth and an altitude of a sun.

7. The method of claim 1, or the controller of claim 3, wherein when the overlap determined is zero, the determined tint level is a clear tint state.

8. The method of claim 1, or the controller of claim 3,
wherein the intersection of the three-dimensional projection of light with the plane of interest in the room is a two-dimensional light projection (P-image), and
wherein determining the tint level for the one or more tintable windows comprises determining an amount of overlap of the P-image with the occupancy region.

9. The controller of claim 8,
wherein the overlap is determined in terms of a percentage of the occupancy region that is overlapped by the P-image and determining the tint level for the one or more tintable windows is based on a determined percentage.

10. The controller of claim 8, wherein determining the P-image comprises:
determining an effective aperture of the one or more tintable windows and a geometric center of the effective aperture;
determining a P-image-offset from the geometric center based on an azimuth and an altitude of the sun, the P-image-offset being a horizontal distance of the geometric center of the P-image from a vertical axis passing through the geometric center of the effective aperture at the plane of interest in the room; and
determining the P-image by generating the effective aperture around the P-image-offset at the plane of interest in the room.

11. The method of claim 1, or the controller of claim 3, wherein the three-dimensional projection of light is determined for a future time.

12. The controller of claim 11, wherein the future time is at least five minutes from a current time and tinting to the tint level determined is initiated before the future time.

## Patentansprüche

1. Verfahren zum Steuern der Tönung eines oder mehrerer tönbarer Fenster zur Berücksichtigung des Belegungskomforts in einem Raum eines Gebäudes, wobei das Verfahren Folgendes umfasst:
Bestimmen einer Überlappung zwischen einem Belegungsbereich des Raumes und einem Schnittpunkt einer dreidimensionalen Lichtprojektion durch das eine oder die mehreren tönbaren Fenster mit einer interessierenden Ebene im Raum, wobei die dreidimensionale Lichtprojektion durch parallele Lichtstrahlen definiert ist, die durch das eine oder die mehreren tönbaren Fenster verlaufen;
Verwenden der Überlappung zur Bestimmung eines Tönungsgrades für das eine oder die mehreren tönbaren Fenster; und
Bereitstellen von Befehlen für den Übergang der Tönung eines oder mehrerer tönbarer Fenster von einem aktuellen Tönungsgrad zum bestimmten Tönungsgrad.

2. Verfahren nach Anspruch 1, wobei die Befehle über ein Netzwerk bereitgestellt werden.

3. Regler zum Steuern der Tönung von einem oder mehreren tönbaren Fenstern zur Berücksichtigung des Belegungskomforts in einem Raum, wobei der Regler einen Prozessor umfasst, der wie folgt konfiguriert ist:
Bestimmen eines Schnittpunkts einer dreidimensionalen Lichtprojektion durch das eine oder die mehreren tönbaren Fenster mit einer interessierenden Ebene im Raum, wobei die dreidimensionale Lichtprojektion durch parallele Lichtstrahlen definiert wird, die durch das eine oder die mehreren tönbaren Fenster verlaufen;
Bestimmen einer Überlappung des Schnittpunkts mit einem Belegungsbereich des Raumes;
Verwenden der bestimmten Überlappung zur Bestimmung eines Tönungsgrades für das eine oder die mehreren tönbaren Fenster; und
Bereitstellen von Befehlen für einen Übergang der Tönung eines oder mehrerer tönbarer Fenster von einem aktuellen Tönungsgrad zum bestimmten Tönungsgrad.

4. Regler nach Anspruch 3, ferner umfassend einen Impulsbreitenmodulator, der über ein Netzwerk mit dem Prozessor und mit dem einen oder den mehreren tönbaren Fenstern kommuniziert, wobei der Impulsbreitenmodulator so konfiguriert ist, dass er den vom Prozessor bestimmten Tönungsgrad empfängt und ein Signal mit Tönungsbefehlen über das Netzwerk sendet, um die aktuelle Tönung des einen oder der mehreren tönbaren Fenster auf den bestimmten Tönungsgrad zu übertragen.

5. Verfahren nach Anspruch 1 oder Regler nach Anspruch 3, wobei die dreidimensionale Projektion durch parallele Lichtstrahlen von der Sonne definiert wird, die durch ein oder mehrere tönbare Fenster verlaufen.

6. Verfahren nach Anspruch 1 oder Regler nach Anspruch 5, wobei das Bestimmen der dreidimensionalen Lichtprojektion durch das eine oder die mehreren tönbaren Fenster das Bestimmen der Richtung der parallelen Lichtstrahlen, die durch die Fenster verlaufen, unter Verwendung eines Azimuts und einer Sonnenhöhe umfasst.

7. Verfahren nach Anspruch 1 oder Regler nach Anspruch 3, wobei, wenn die bestimmte Überlappung gleich Null ist, der bestimmte Tönungsgrad ein transparenter Tönungszustand ist.

8. Verfahren nach Anspruch 1 oder Regler nach Anspruch 3,
wobei der Schnittpunkt der dreidimensionalen Lichtprojektion mit der interessierenden Ebene im Raum eine zweidimensionale Lichtprojektion (P-Bild) ist, und
wobei das Bestimmen des Tönungsgrades für das eine oder die mehreren tönbaren Fenster das Bestimmen eines Ausmaßes der Überlappung des P-Bildes mit dem Belegungsbereich umfasst.

9. Regler nach Anspruch 8,
wobei die Überlappung in Form eines Prozentsatzes des Belegungsbereichs bestimmt wird, der durch das P-Bild überlappt wird, und wobei das Bestimmen des Tönungsgrades für das eine oder die mehreren tönbaren Fenster auf einem bestimmten Prozentsatz basiert.

10. Regler nach Anspruch 8, wobei das Bestimmen des P-Bildes Folgendes umfasst:
Bestimmen einer effektiven Öffnung des einen oder mehrerer tönbarer Fenster und einer geometrischen Mitte der effektiven Öffnung;
Bestimmen eines P-Bild-Versatzes von der geometrischen Mitte basierend auf einem Azimut und einer Höhe der Sonne, wobei der P-Bild-Versatz eine horizontale Entfernung der geometrischen Mitte des P-Bildes von einer vertikalen Achse ist, die durch die geometrische Mitte der effektiven Öffnung in der interessierenden Ebene im Raum verläuft; und
Bestimmen des P-Bildes durch Erzeugung der effektiven Öffnung um den P-Bild-Versatz in der interessierenden Ebene im Raum.

11. Verfahren nach Anspruch 1 oder Regler nach Anspruch 3, wobei die dreidimensionale Lichtprojektion für einen zukünftigen Zeitpunkt bestimmt wird.

12. Regler nach Anspruch 11, wobei der zukünftige Zeitpunkt mindestens fünf Minuten von einem aktuellen Zeitpunkt abweicht und wobei das Tönen auf den bestimmten Tönungsgrad vor dem zukünftigen Zeitpunkt initiiert wird.

## Revendications

1. Procédé de commande de teinte d'une ou de plusieurs fenêtres pouvant être teintées pour prendre en compte le confort des occupants dans une pièce d'un bâtiment, le procédé comprenant :
la détermination d'un chevauchement entre une zone d'occupation de la pièce et une intersection d'une projection tridimensionnelle de lumière à travers la ou les fenêtres pouvant être teintées avec un plan d'intérêt dans la pièce, la projection tridimensionnelle de lumière étant définie par des rayons lumineux parallèles passant par la ou les fenêtres pouvant être teintées ;
l'utilisation du chevauchement pour déterminer un niveau de teinte pour la ou les fenêtres pouvant être teintées ; et
la fourniture d'instructions pour faire une transition de la teinte de la ou des fenêtres pouvant être teintées d'un niveau de teinte actuel au niveau de teinte déterminé.

2. Procédé selon la revendication 1, dans lequel les instructions sont fournies sur un réseau.

3. Dispositif de commande destiné à commander la teinte de la ou des fenêtres pouvant être teintées pour prendre en compte le confort des occupants dans une pièce, le dispositif de commande comprenant un processeur configuré pour :
déterminer une intersection d'une projection tridimensionnelle de lumière à travers la ou les fenêtres pouvant être teintées avec un plan d'intérêt dans la pièce, la projection tridimensionnelle de lumière étant définie par des rayons lumineux parallèles passant par la ou les fenêtres pouvant être teintées ;
déterminer un chevauchement de l'intersection avec une zone d'occupation de la pièce ;
utiliser le chevauchement déterminé pour déterminer un niveau de teinte pour la ou les fenêtres pouvant être teintées ; et
fournir des instructions pour faire une transition de la teinte de la ou des fenêtres pouvant être teintées d'un niveau de teinte actuel au niveau de teinte déterminé.

4. Dispositif de commande selon la revendication 3, comprenant en outre un modulateur de largeur d'impulsion en communication avec le processeur et avec la ou les fenêtres pouvant être teintées sur un réseau, le modulateur de largeur d'impulsion étant configuré pour recevoir le niveau de teinte déterminé du processeur et envoyer un signal avec des instructions de teinte sur le réseau pour faire une transition de la teinte actuelle de la ou des fenêtres pouvant être teintées au niveau de teinte déterminé.

5. Procédé selon la revendication 1, ou dispositif de commande selon la revendication 3, dans lequel la projection tridimensionnelle est définie par des rayons lumineux parallèles du soleil passant à travers la ou les fenêtres pouvant être teintées.

6. Procédé selon la revendication 1, ou dispositif de commande selon la revendication 5, dans lequel la détermination de la projection tridimensionnelle de la lumière à travers la ou les fenêtres pouvant être teintées comprend la détermination de la direction des rayons lumineux parallèles passant à travers les fenêtres en utilisant un azimut et une altitude du soleil.

7. Procédé selon la revendication 1, ou dispositif de commande selon la revendication 3, dans lequel lorsque le chevauchement déterminé est nul, le niveau de teinte déterminé est un état de teinte clair.

8. Procédé selon la revendication 1, ou dispositif de commande selon la revendication 3,
dans lequel l'intersection de la projection tridimensionnelle de lumière avec le plan d'intérêt dans la pièce est une projection bidimensionnelle de lumière (image P), et
dans lequel la détermination du niveau de teinte pour la ou les fenêtres pouvant être teintées comprend la détermination d'une quantité de chevauchement de l'image P avec la zone d'occupation.

9. Dispositif de commande selon la revendication 8,
dans lequel le chevauchement est déterminé en termes d'un pourcentage de la zone d'occupation qui est chevauchée par l'image P et la détermination du niveau de teinte pour la ou les fenêtres pouvant être teintées est basée sur un pourcentage déterminé.

10. Dispositif de commande selon la revendication 8, dans lequel la détermination de l'image P comprend :
la détermination d'une ouverture effective de la ou des fenêtres pouvant être teintées et un centre géométrique de l'ouverture effective ;
la détermination d'un décalage d'image P à partir du centre géométrique sur la base d'un azimut et d'une altitude du soleil, le décalage d'image P étant une distance horizontale du centre géométrique de l'image P à partir d'un axe vertical passant par le centre géométrique de l'ouverture effective sur le plan d'intérêt dans la pièce ; et
la détermination de l'image P en générant l'ouverture effective autour du décalage de l'image P sur le plan d'intérêt dans la pièce.

11. Procédé selon la revendication 1, ou dispositif de commande selon la revendication 3, dans lequel la projection tridimensionnelle de la lumière est déterminée pour un moment futur.

12. Dispositif de commande selon la revendication 11, dans lequel le moment futur est au moins cinq minutes à partir d'un moment actuel et la teinture au niveau de teinte déterminé est initiée avant le moment futur.
